# EUROPEAN PATENT APPLICATION

(11) **EP 3 851 169 A1**
(43) Date of publication of application: **21.07.2021**
(21) Application number: 19859924.3
(22) Date of filing: 11.09.2019
(51) Int. Cl.: A63B 22/04

(54) **EXERCISE MACHINE FOR NEAR-ELLIPTICAL ARM MOVEMENT**

(30) Priority: 13.09.2018 CN 201811127209; 27.06.2019 CN 201910582474; 08.07.2019 CN 201910617189; 08.08.2019 CN 201910747658; 30.08.2019 CN 201910825283
(71) Applicant: Meng, Jie, Ning'an City Heilongjiang 157421 (CN)
(72) Inventor: Meng, Jie, Ning'an City Heilongjiang 157421 (CN)
(74) Representative: Ipside
(86) International application number: PCT/CN2019/000177
(87) International publication number: WO 2020/052178

(57) **Abstract**

An exercise machine for a near-elliptical arm movement, the machine comprising of at least one system for a manual arm-moving structure enabling an elliptical movement, and other related structures and systems. The invention is characterized in that the manual arm-moving structure enabling the elliptical movement (6) is pivotably connected to a cycling pivot shaft structure (5) at one position thereof, and performs a corresponding circular movement, elliptical movement, near-elliptical movement, or unidirectional full-cycle movement in other corresponding forms; and the manual arm-moving structure enabling the elliptical movement (6) is pivotably connected to a reciprocating pivot shaft structure (14) at another position or another portion thereof, or performs a linear, curved, or other suitable form of bidirectional reciprocating movements under restriction and control of a related guide wheel structure system or guide rail structure system. Other portions of the manual arm-moving structure enabling the elliptical movement perform a near-elliptical movement under the collective action of systems related to the full-cycle movement or the bidirectional reciprocating movement. An arm of a user is also moved in a near-elliptical trajectory by means of a corresponding handle structure directly or indirectly provided on the manual arm-moving structure enabling the elliptical movement.

## Description

### FIELD OF THE INVENTION

The invention belongs to the field of sports and exercise machines.

### BACKGROUND OF THE INVENTION

On the existing exercise machines such as bicycles, exercise bikes, and elliptical machines, the arms are either stationary, or do a circular movement, or do a reciprocating movement in a straight or curved manner. Although this situation meets the needs of people's sports and exercise to a certain extent, it still does not fully include more and better sports forms, sports experience and sports products that can be created under the current conditions, such as various exercise machines for near-elliptical arm movement can be further designed and manufactured.

### PURPOSE OF THE INVENTION

The purpose of the invention lies in: through the corresponding structure setting, the movement trajectory of the arms moving alone or in coordination with the feet and legs is in a near-elliptical form, so as to better enrich the use function of the related exercise machines, form a better and richer exercise process, better meet the needs of people, and obviously enhance the value of the related products.

### SUMMARY OF INVENTION AND BENEFICIAL EFFECTS

The purpose of the present invention is achieved as follows: by the corresponding cycling pivot shaft structure, reciprocating pivot shaft structure, or other related structure systems, a manual arm-moving structure system pivotably connected, matched or linked with the above structure systems can move in a near-elliptical trajectory, so that the arms moving alone or in coordination with the feet and legs are moved in a near-elliptical trajectory.

More specifically: an exercise machine for a near-elliptical arm movement may comprise:
at least one set of manual arm-moving structure enabling an elliptical movement, at least one set of a reciprocating pivot shaft structure enabling a linear or curved reciprocating movement or at least one system for a restriction and control guide rail structure enabling a reciprocating movement or at least one system for a restriction and control guide wheel structure enabling a reciprocating movement, at least one set of cycling pivot shaft structure enabling a circular movement, an elliptical movement, a near-elliptical movement, or other suitable form of full-cycle movement, a corresponding linkage structure, a framework structure, and other related structures and systems;
the manual arm-moving structure enabling the elliptical movement is pivotably connected to the cycling pivot shaft structure at one position thereof, and performs a corresponding circular movement, elliptical movement, near-elliptical movement, or other suitable form of full-cycle movement, and the manual arm-moving structure enabling the elliptical movement is pivotably connected to the reciprocating pivot shaft structure at another position or another portion thereof, or performs a linear, curved, or other suitable form of bidirectional reciprocating movement under restriction and control of a related guide wheel structure system or guide rail structure system;
other portions of the manual arm-moving structure enabling the elliptical movement perform a near-elliptical movement or other movements in a corresponding trajectory under the collective action of structure systems related to the full-cycle movement or the bidirectional reciprocating movement, an arm of a user is also moved in a near-elliptical trajectory or other corresponding trajectory by means of a corresponding handle structure directly or indirectly provided on the manual arm-moving structure enabling the elliptical movement, so that a movement mode in a near-elliptical trajectory or other corresponding trajectory of a single arm and related products thereof can be achieved, and a hand-foot linkage movement mode with new characteristics and advantages and corresponding new exercise bikes, elliptical machines, horse riding machines, skiing machines or other new exercise and sports apparatus products in suitable forms can also be further formed;
the cycling pivot shaft structure may be a pivot shaft structure arranged outside a corresponding crank structure enabling a full-cycle movement, or a corresponding crankshaft structure, or a pivot shaft structure arranged on a corresponding eccentric bearing outer ring structure, or a corresponding pivot shaft structure arranged on a pedal arm-moving structure enabling a (near) elliptical movement, or a corresponding pivot shaft structure arranged on a related structure system that performs a (near) elliptical movement or other suitable form of full-cycle movement.

The reciprocating pivot shaft structure may be a pivot shaft structure arranged outside a corresponding trajectory control swing rod structure, or a pivot shaft structure enabling a bidirectional reciprocating movement and arranged on other suitable structure systems.

The reciprocating pivot shaft structure pivotably connected to the manual arm-moving structure enabling the elliptical movement is located below or above a corresponding cycling pivot shaft structure or above other suitable relative positions.

Left and right manual arm-moving structures enabling the elliptical movement are in a working relationship state of completely parallel or having 180-degree difference or other suitable angle difference by setting a corresponding angle changing mechanism.

The more specific related structures and products of the invention are further summarized as follows:
1. By setting a corresponding manual arm-moving restriction and control swing rod structure, a swing rod type manual arm-moving structure system enabling an elliptical movement and related exercise machines thereof can be formed.
   The swing rod type manual arm-moving structure system enabling the elliptical movement adopts a structure form of combining the corresponding swing rod structure system with the cycling pivot shaft structure enabling the circular movement, or many specific structure forms of combining the corresponding swing rod structure system with the cycling pivot shaft structure enabling the elliptical movement, the near-elliptical movement, or other suitable form of full-cycle movement.
2. A guide rail type manual arm-moving structure system enabling an elliptical movement and related exercise machines thereof can be formed.
   By setting a corresponding manual arm-moving restriction and control guide rail structure, the guide rail type manual arm-moving structure system enabling the elliptical movement and related exercise machines thereof can be formed.
   The guide rail type manual arm-moving structure system enabling the elliptical movement adopts a structure form of combining the corresponding guide rail structure system with the cycling pivot shaft structure enabling the circular movement, or many specific structure forms of combining the corresponding guide rail structure system with the cycling pivot shaft structure enabling the elliptical movement, the near-elliptical movement, or other suitable form of full-cycle movement.
3. An adjustable swing rod type or guide rail type arm-moving structure system enabling an elliptical movement and related exercise machines thereof may be formed.
4. By setting a corresponding manual arm-moving restriction and control guide wheel structure, a guide wheel type manual arm-moving structure system enabling an elliptical movement and related exercise machines thereof can be formed.
   The guide wheel type manual arm-moving structure system enabling the elliptical movement adopts a structure form of combining the corresponding guide wheel structure system with the cycling pivot shaft structure enabling the circular movement, or many specific structure forms of combining the corresponding guide wheel structure system with the cycling pivot shaft structure enabling the elliptical movement, the near-elliptical movement, or other suitable form of full-cycle movement.
5. An eccentric bearing type manual arm-moving structure system enabling an elliptical movement relying on an eccentric bearing to realize a near-elliptical movement trajectory.
6. Related exercise machines capable of directly utilizing the manual arm-moving structure enabling the elliptical movement to realize hand-foot linkage.
7. A related exercise machine system capable of directly utilizing the manual arm-moving trajectory control swing rod structure to realize hand-foot linkage.
8. A plurality of related exercise machine products including movement systems where hands and feet can be driven at the same time can be further formed.
9. An exercise machine system capable of directly using the corresponding part of the manual arm-moving structure enabling the elliptical movement to drive the related pedal arm-moving structure enabling the elliptical movement to realize a near-elliptical movement trajectory
10. A swing rod type manual arm-moving structure enabling an elliptical movement pivotably connected to the cycling pivot shaft structure enabling the elliptical movement, the near-elliptical movement and other suitable form of movement, and related exercise machines thereof.
11. Other related structure forms and the corresponding exercise machine that can be adopted in the invention.

### BRIEF DESCRIPTION OF THE DRAWINGS

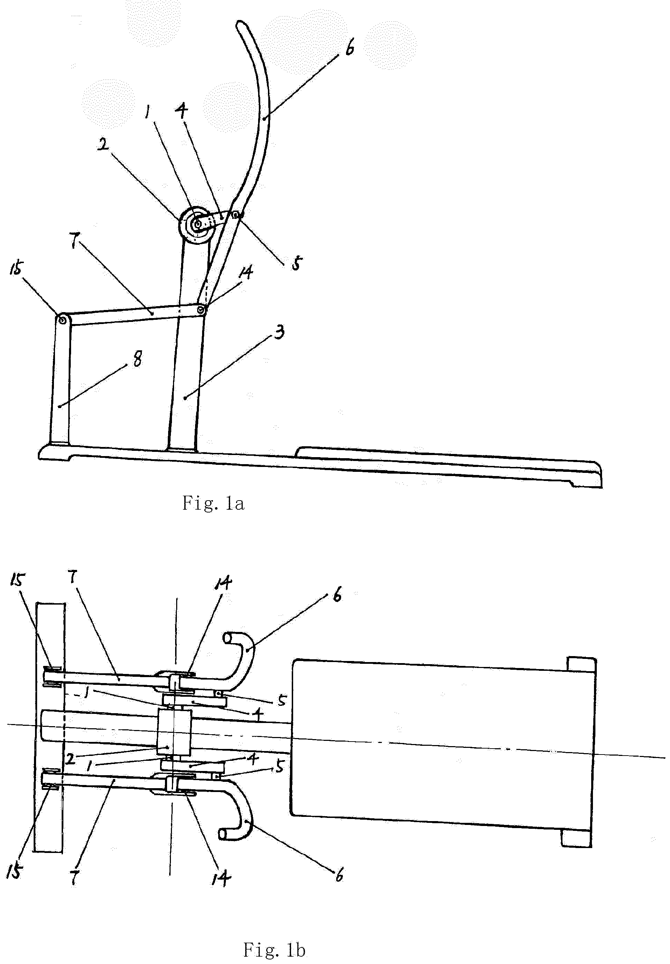

Figs. 1-71 are described as follows:
Fig. 1a and Fig. 1b are respectively the front view and top view of an exercise machine with a swing rod type manual arm-moving structure system enabling an elliptical movement and a reciprocating pivot shaft structure outside a related swing rod structure located below a related cycling pivot shaft structure;

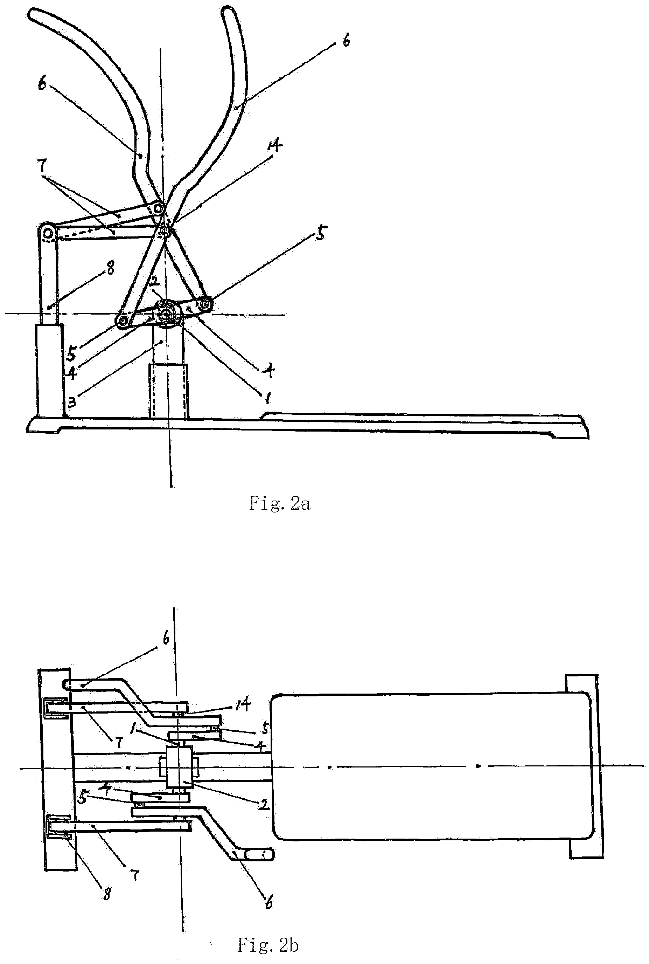

Fig. 2a and Fig. 2b are respectively the front view and top view of an exercise machine with a swing rod type manual arm-moving structure system enabling an elliptical movement and a reciprocating pivot shaft structure outside a related swing rod structure located above a related cycling pivot shaft structure;

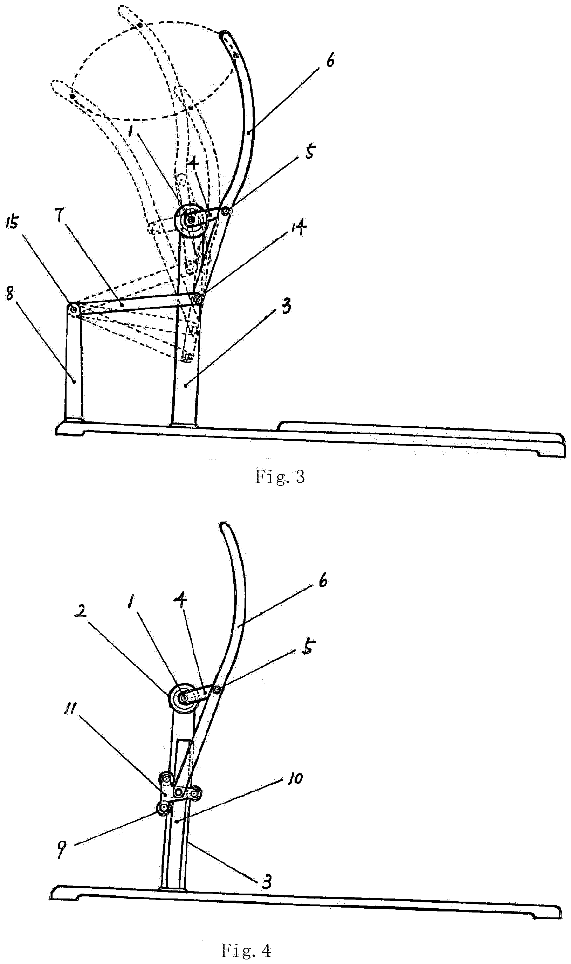

Fig. 3 is a view of a related exercise machine with a swing rod type manual arm-moving structure system enabling an elliptical movement, which also reflects a near-elliptical movement trajectory of the upper part of the manual arm-moving structure;
Fig. 4 is a view of a related exercise machine with a guide rail type manual arm-moving structure system enabling an elliptical movement;

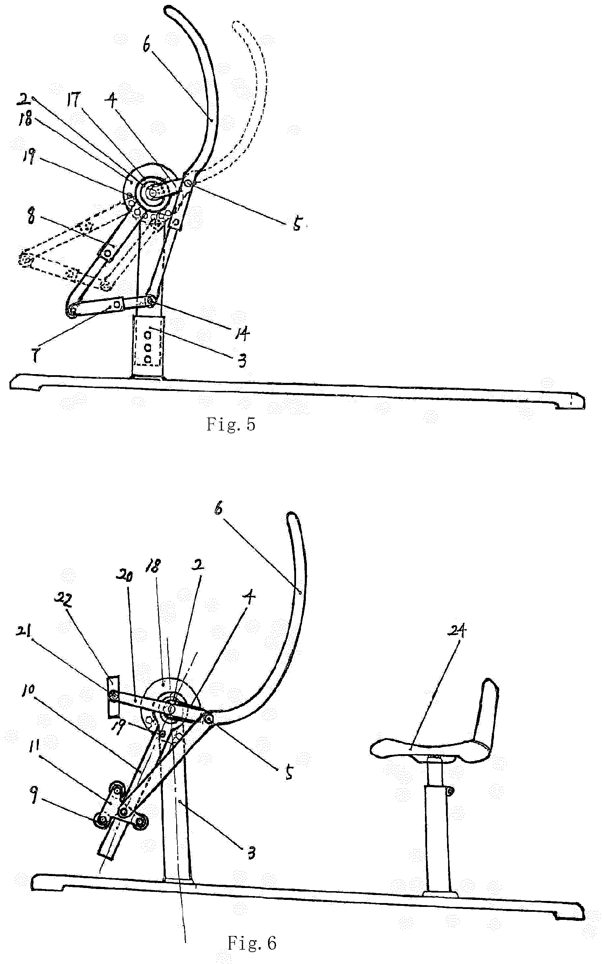

Fig. 5 is a view of a related exercise machine with an adjustable swing rod type manual arm-moving structure system enabling an elliptical movement, and the spatial location and form of the movement trajectory of the manual arm-moving structure enabling the elliptical movement adjusted and selected comprehensively;
Fig. 6 is a view of a related exercise machine with an adjustable guide rail type manual arm-moving structure system enabling an elliptical movement, and a pedal-pedal crank structure system being in a 180-degree alternate driving relationship with the manual arm-moving structure enabling the elliptical movement;

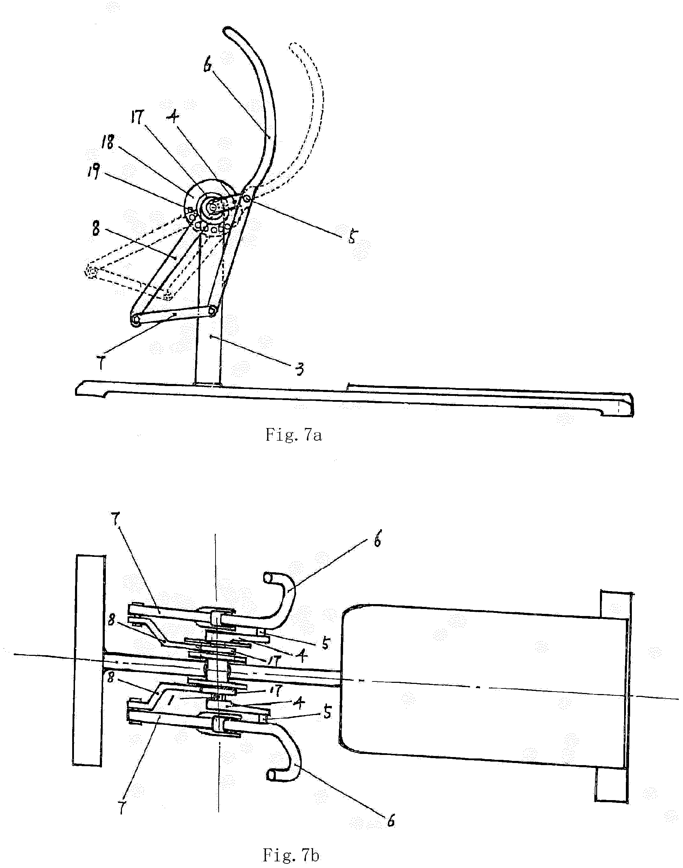

Fig. 7a and Fig. 7b are respectively the front view and top view of an exercise machine with an adjustable swing rod type manual arm-moving structure system enabling an elliptical movement;

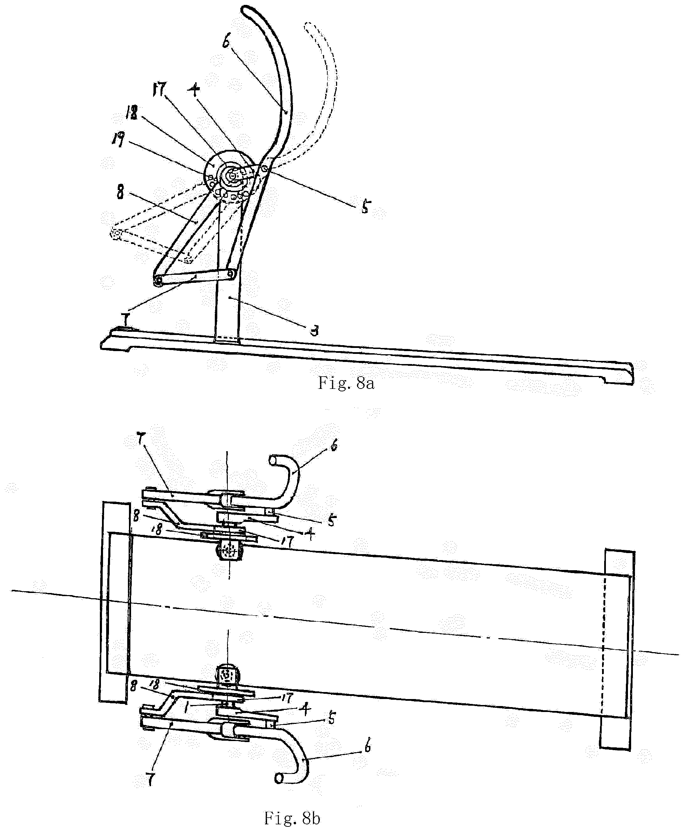

Fig. 8a and Fig. 8b are respectively the front view and top view of an exercise machine with adjustable swing rod type left and right manual arm-moving structure systems enabling an elliptical movement respectively arranged at the left and right sides of a same exercise machine;

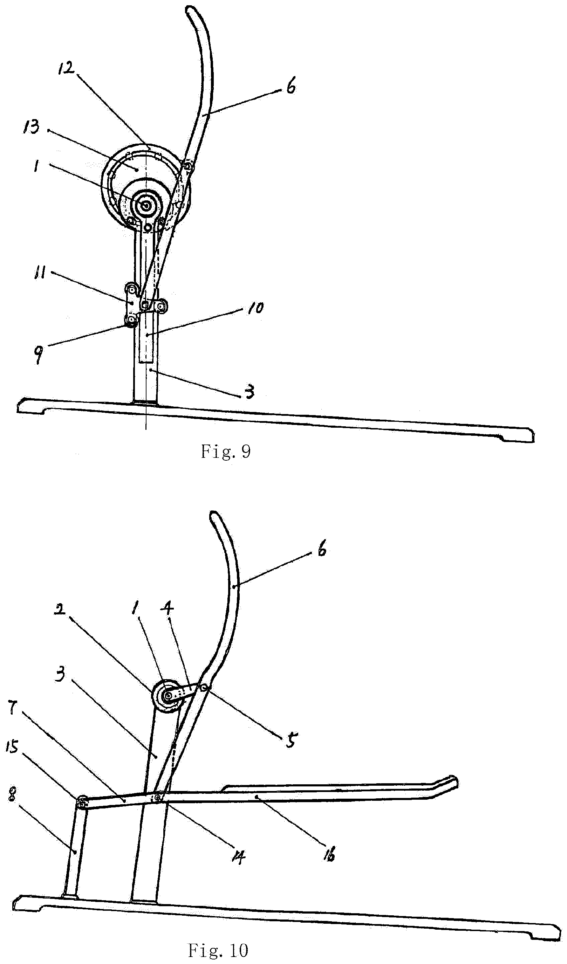

Fig. 9 is a view of a related exercise machine with an adjustable guide rail type manual arm-moving structure system enabling an elliptical movement, and a near-elliptical movement of the manual arm-moving structure realized by relying on the corresponding eccentric bearing structure system;

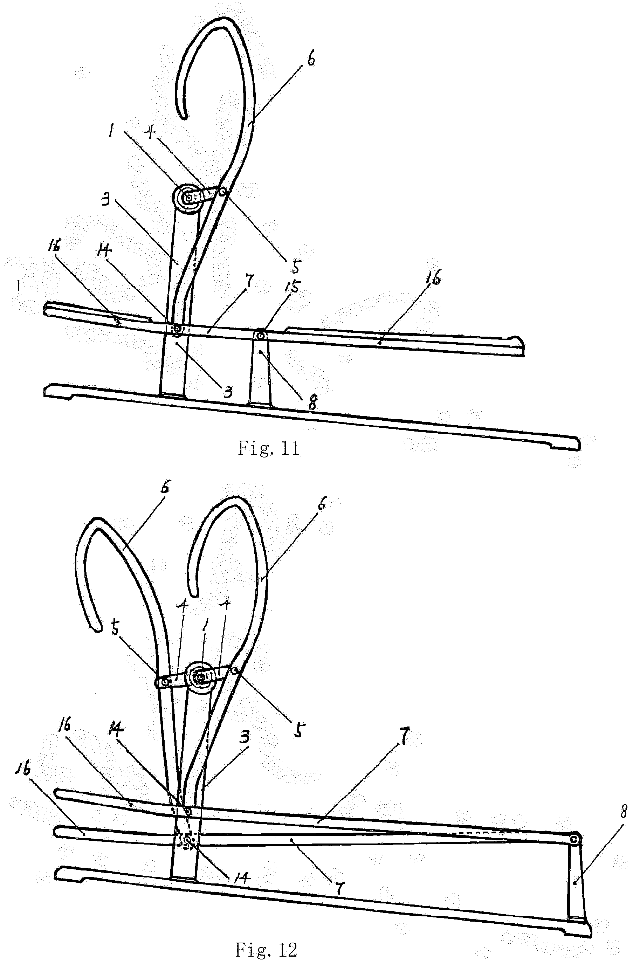

Fig. 10 and Fig. 11 are views of a related exercise machine with a swing rod type manual arm-moving structure system enabling an elliptical movement, and a corresponding pedal movement structure arranged on a manual arm-moving trajectory control swing rod structure or its extension structure, so as to realize hand-foot linkage;
Fig. 12 is a view of a related exercise machine with a swing rod type manual arm-moving structure system enabling an elliptical movement, a corresponding pedal structure arranged on left and right manual arm-moving trajectory control swing rod structures in an alternating movement relationship with each other, the front part of a left manual arm-moving trajectory control swing rod structure pivotably connected and linked to the lower end of a left manual arm-moving structure, and the front part of a right manual arm-moving trajectory control swing rod structure pivotably connected and linked to the lower end of a right manual arm-moving structure;

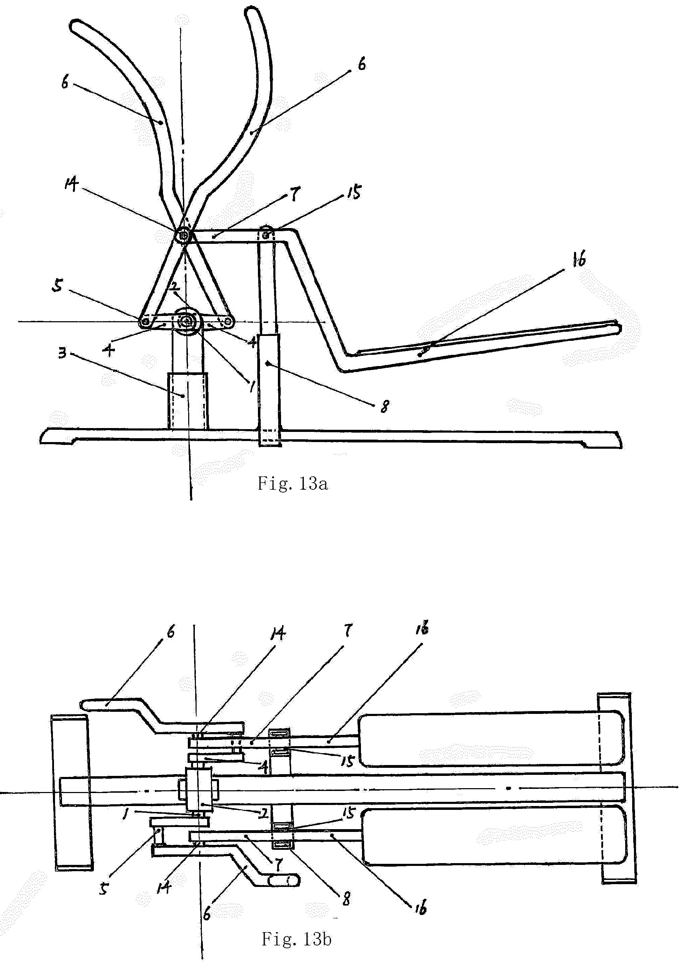

Fig. 13a and Fig. 13b are the front view and top view of an exercise machine with a swing rod type manual arm-moving structure system enabling an elliptical movement, a reciprocating pivot shaft structure outside a related swing rod structure located above a related cycling pivot shaft structure, and a corresponding pedal arm-moving structure and pedal structure arranged on a related swing rod structure;

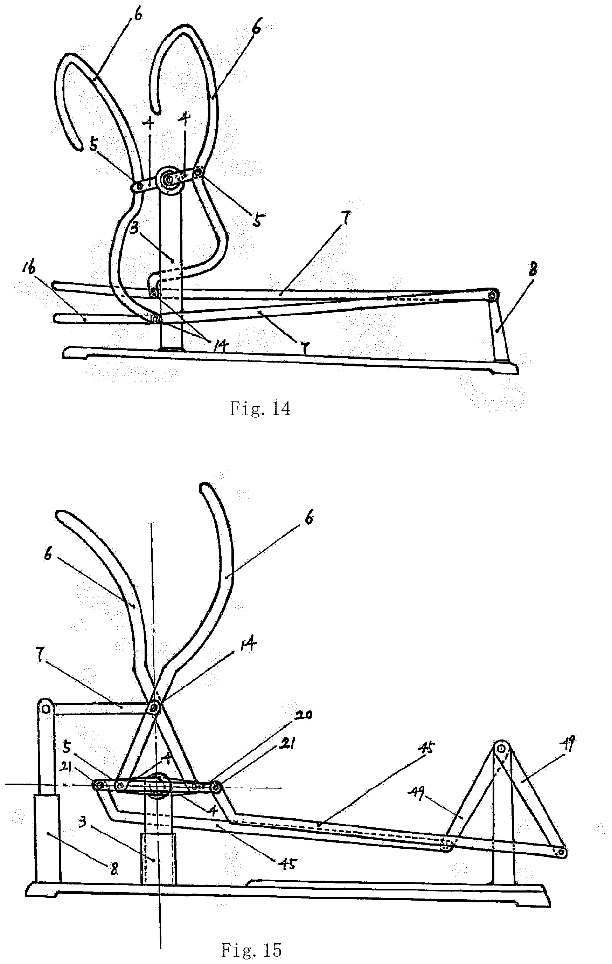

Fig. 14 is a view of a related exercise machine with a swing rod type manual arm-moving structure system enabling an elliptical movement, a corresponding pedal structure arranged on left and right manual arm-moving trajectory control swing rod structures in an alternating movement relationship with each other, the front part of a left manual arm-moving trajectory control swing rod structure pivotably connected and linked to the lower end of a right manual arm-moving structure, and the front part of a right manual arm-moving trajectory control swing rod structure pivotably connected and linked to the lower end of a left manual arm-moving structure;
Fig. 15 is a view of a related exercise machine with a swing rod type manual arm-moving structure system enabling an elliptical movement, a reciprocating pivot shaft structure outside a related swing rod structure located above a related cycling pivot shaft structure, and a corresponding pedal crank structure system, pedal arm-moving structure system, and pedal structure system arranged;

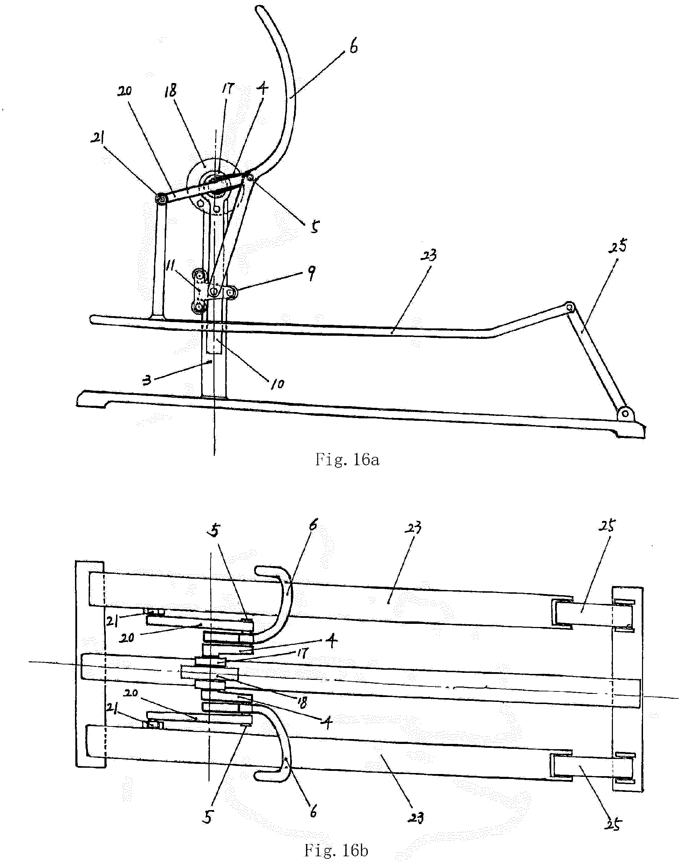

Fig. 16a and Fig. 16b are respectively the front view and top view of an exercise machine with an adjustable guide rail type manual arm-moving structure system enabling an elliptical movement, a corresponding pedal crank structure, and left and right pedal structures enabling a near-elliptical movement, and with left and right pedal structures respectively being in a 180-degree reverse cross force movement relationship with a manual arm-moving structure system enabling an elliptical movement at the same side;

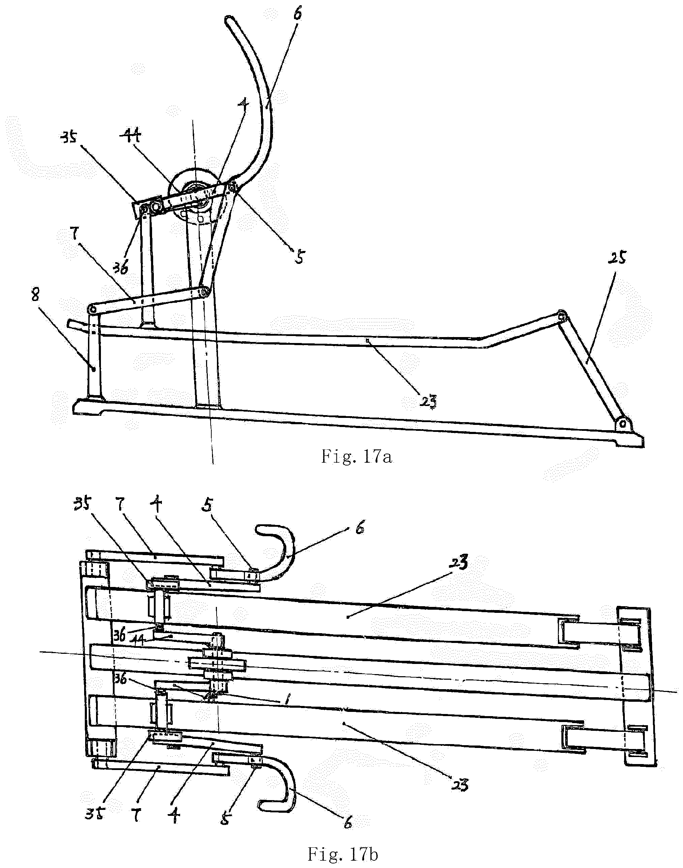

Fig. 17a and Fig. 17b are respectively the front view and top view of an exercise machine with a swing rod type manual arm-moving structure system enabling an elliptical movement, a corresponding pedal crank structure, and left and right pedal structures enabling a near-elliptical movement, and with left and right pedal structures respectively being in a 180-degree reverse cross force movement relationship with a manual arm-moving structure system enabling an elliptical movement at the same side;

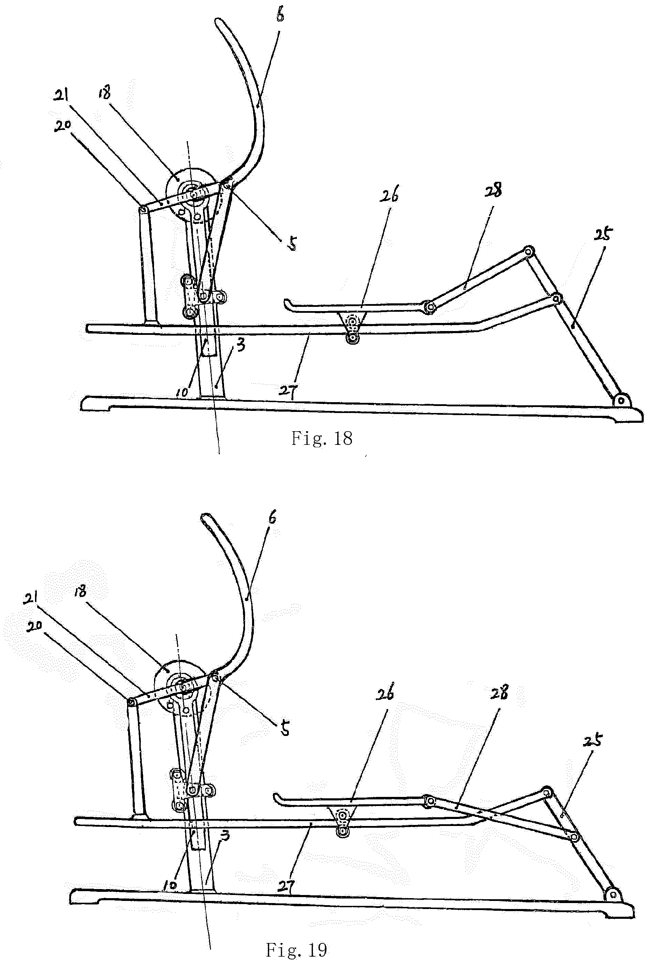

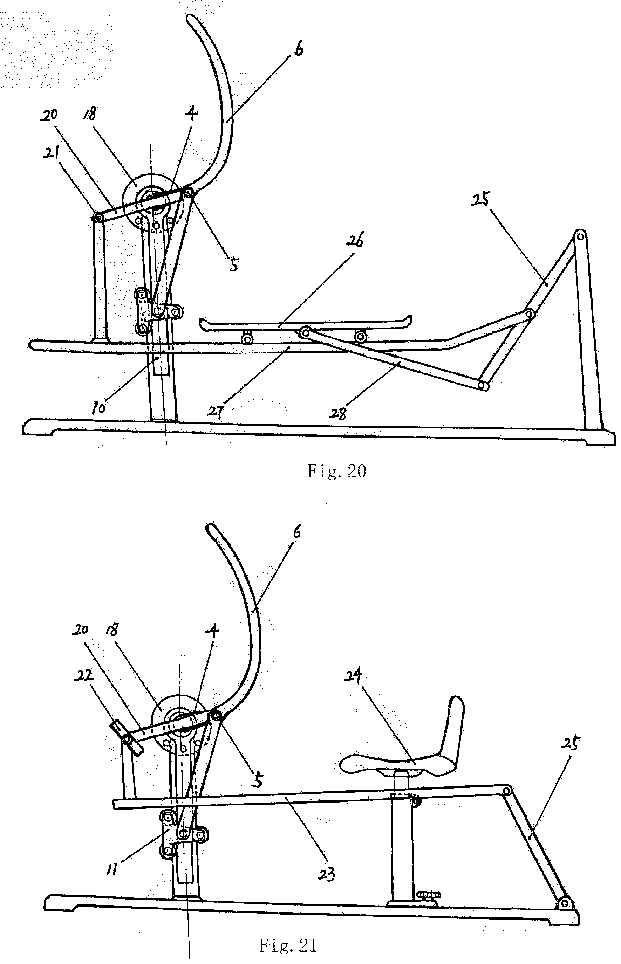

Fig. 18, Fig. 19, and Fig. 20 are views of a related exercise machine with an adjustable guide rail type manual arm-moving structure system enabling an elliptical movement, a pedal arm-moving structure enabling an elliptical movement, and a reinforced mobile pedal structure; wherein the rear ends of the reinforced mobile pedal structures in Fig. 18 and Fig. 19 are directly connected and linked to the "upward extension portion" and the "non-extension portion" of a pedal arm-moving swing rod structure enabling an elliptical movement, and the middle portion of the reinforced mobile pedal structure in Fig. 20 is directly connected and linked to the "downward extension portion" of the a pedal arm-moving swing rod structure enabling the elliptical movement;
Fig. 21 is a view of a related exercise machine with a guide rail type manual arm-moving structure system enabling an elliptical movement and a pedal structure system enabling an elliptical movement, and a pedal structure (enabling a circular movement) directly arranged outside a corresponding pedal crank;

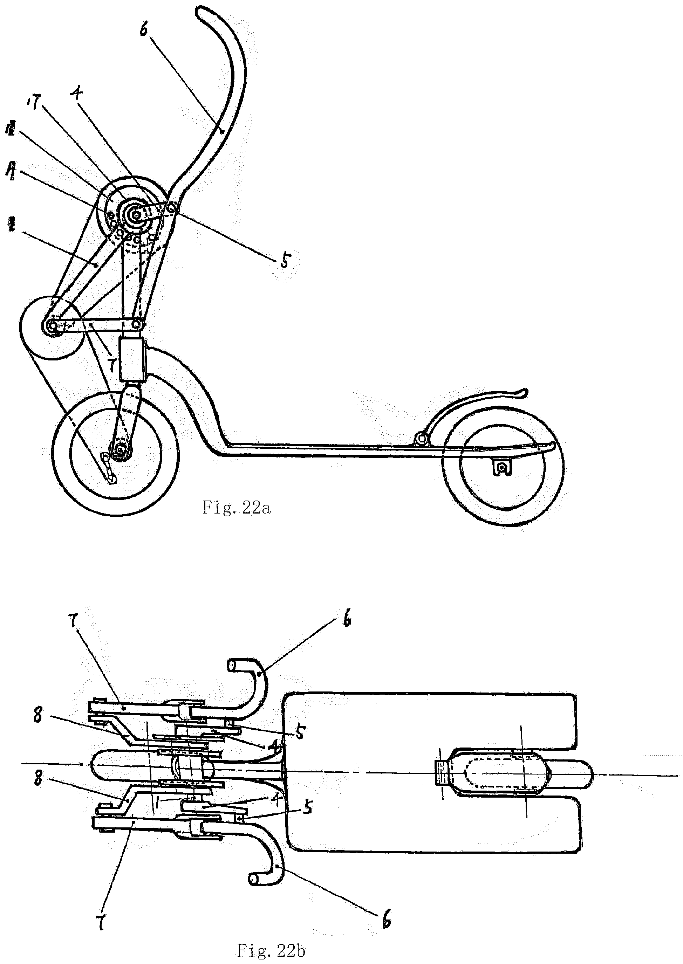

Fig. 22a and Fig. 22b are respectively the front view and top view of a manual skateboard type bicycle with an adjustable swing rod type manual arm-moving structure system enabling an elliptical movement;

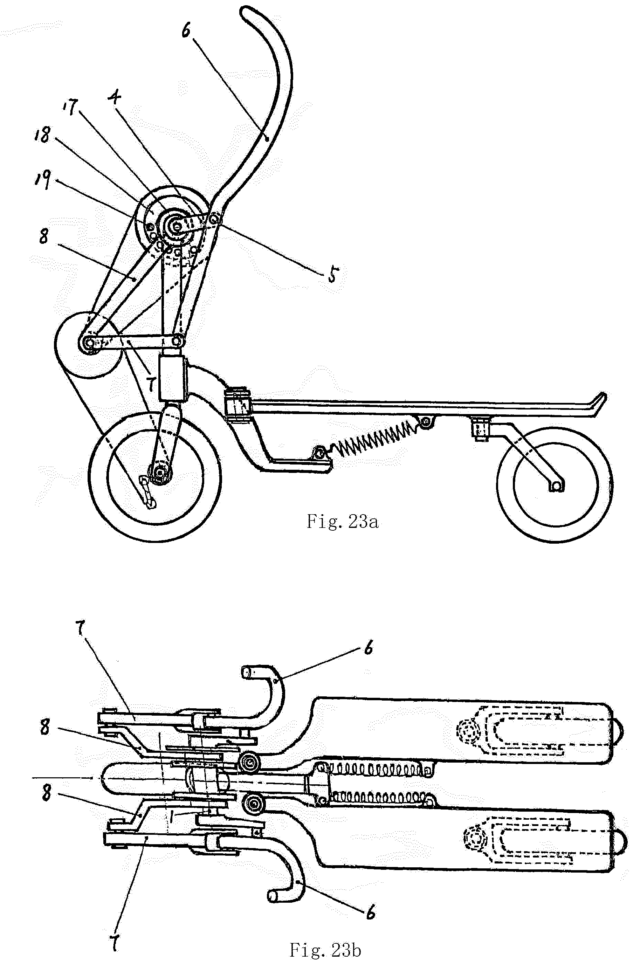

Fig. 23a and Fig. 23b are respectively the front view and top view of a manual frog scooter (bicycle) with an adjustable swing rod type manual arm-moving structure system enabling an elliptical movement;

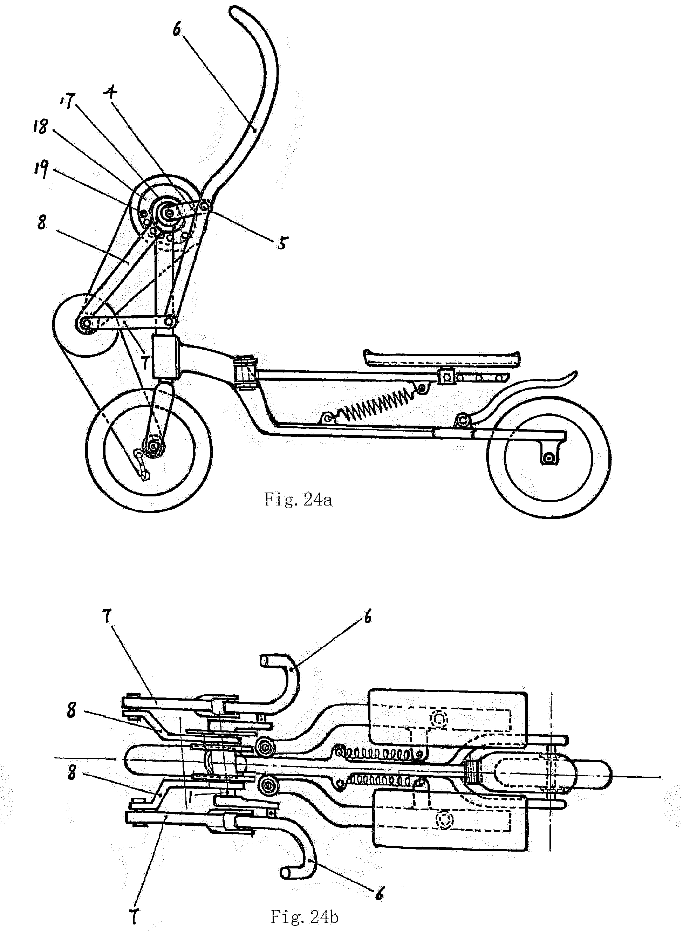

Fig. 24a and Fig. 24b are respectively the front view and top view of a skiing type bicycle with adjustable swing rod type manual arm-moving structure system enabling an elliptical movement, and driven by left and right side swinging and side climbing of both legs similar to alpine skiing;

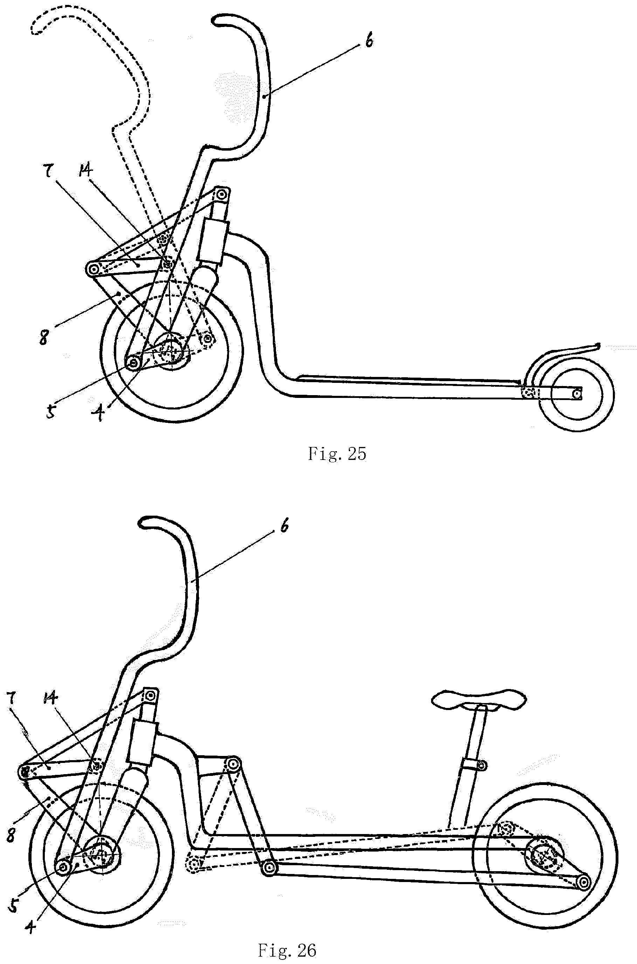

Fig. 25 is a view of a related exercise bicycle (scooter) with a swing rod type manual arm-moving structure system enabling an elliptical movement, and the swing rod type manual arm-moving structure system enabling the elliptical movement, as a hand drive system, directly arranged on the front wheel, front fork and other structures of the bicycle;
Fig. 26 is a view of a related exercise bicycle with a swing rod type manual arm-moving structure system enabling an elliptical movement, the swing rod type manual arm-moving structure system enabling the elliptical movement, as a hand drive system, directly arranged on the front wheel, front fork and other structures of the bicycle, and a pedal drive system enabling an elliptical movement arranged;

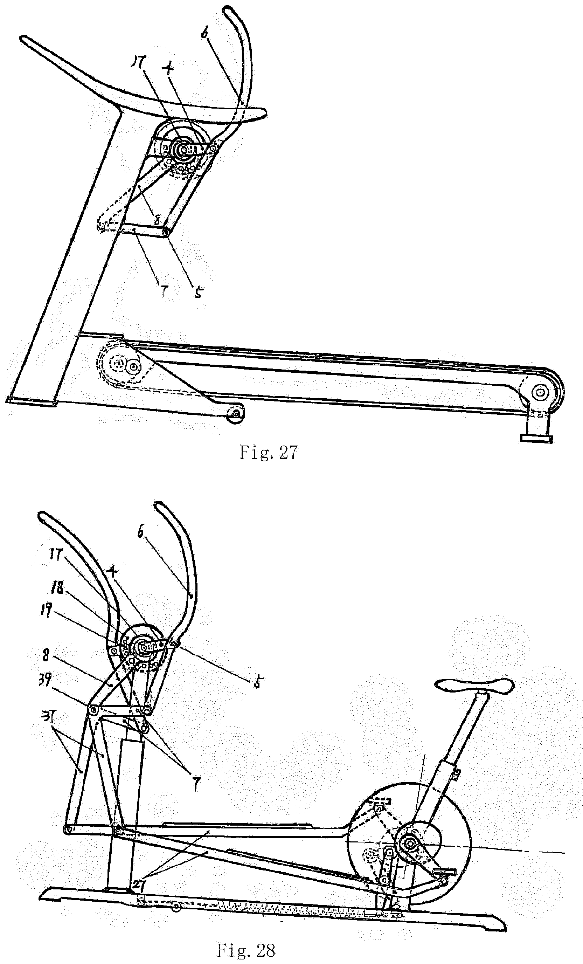

Fig. 27 is a view of a treadmill with an adjustable swing rod type manual arm-moving structure system enabling an elliptical movement;
Fig. 28 is a view of a related exercise machine product with a manual arm-moving structure system enabling an elliptical movement and a corresponding hand and foot linked swing rod structure system;

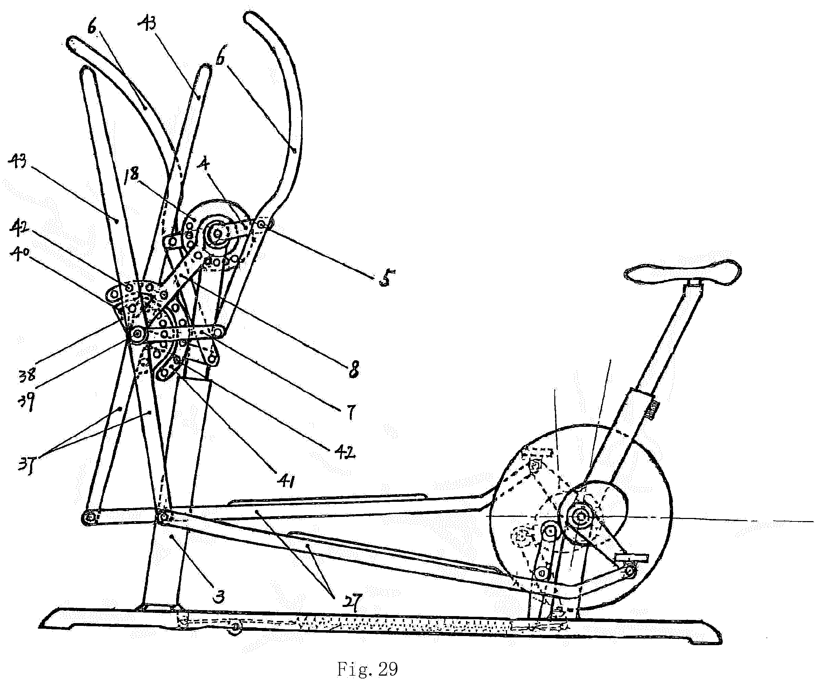

Fig. 29 is a view of a related exercise machine product with a manual arm-moving structure system enabling an elliptical movement and a manual arm-moving structure system enabling a reciprocating movement;

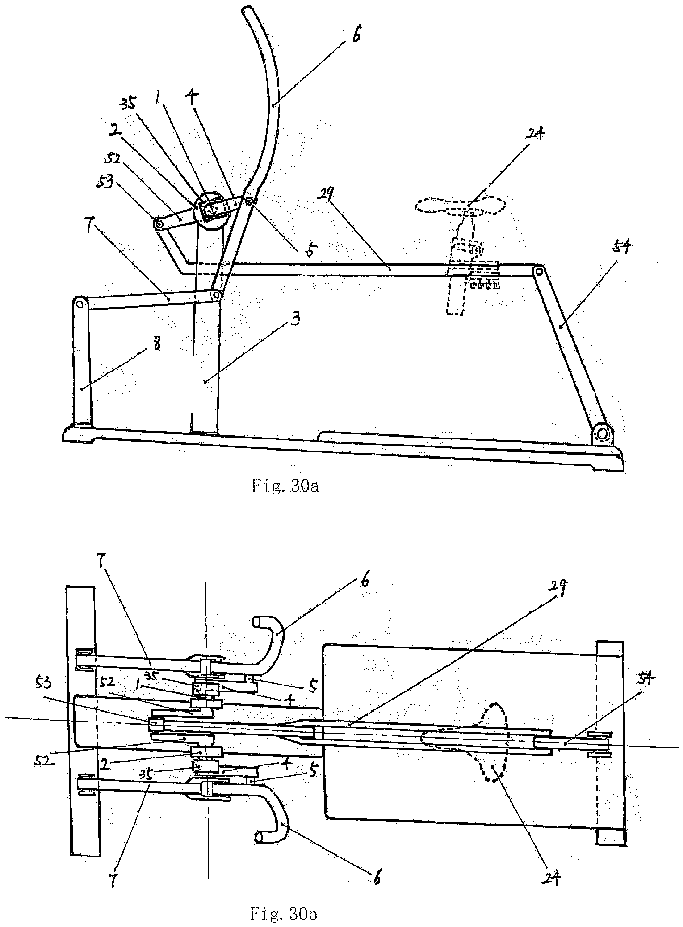

Fig. 30a and Fig. 30b are respectively the front view and top view of a related exercise machine with a central crankshaft structure system and a swing rod type manual arm-moving structure system enabling an elliptical movement;

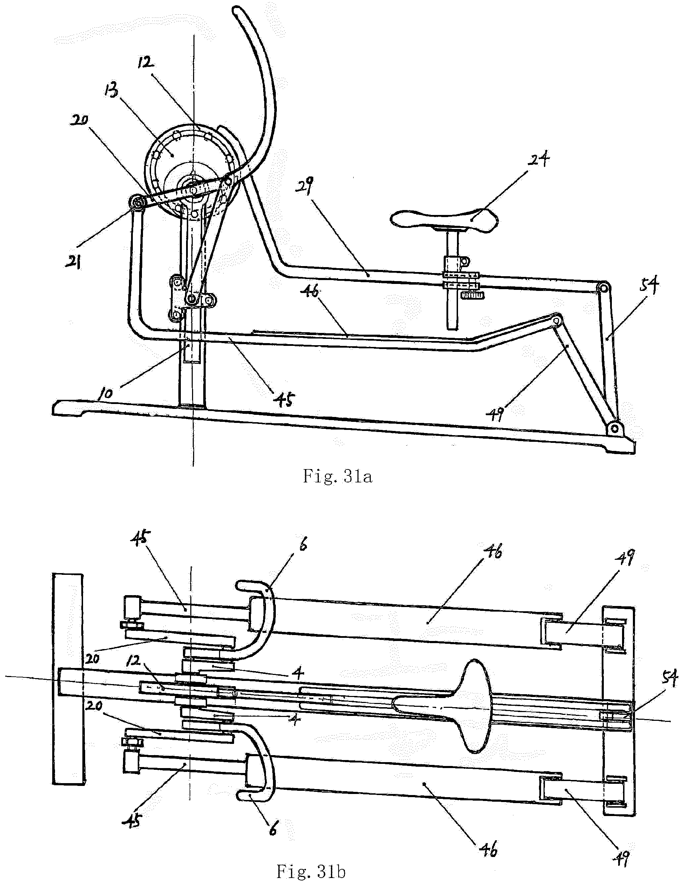

Fig. 31a and Fig. 31b are respectively the front view and top view of a related exercise machine with a central eccentric bearing structure system that can drive a saddle to move together, a guide rail type manual arm-moving structure system enabling an elliptical movement, a pedal crank structure system, and a pedal structure system enabling an elliptical movement;

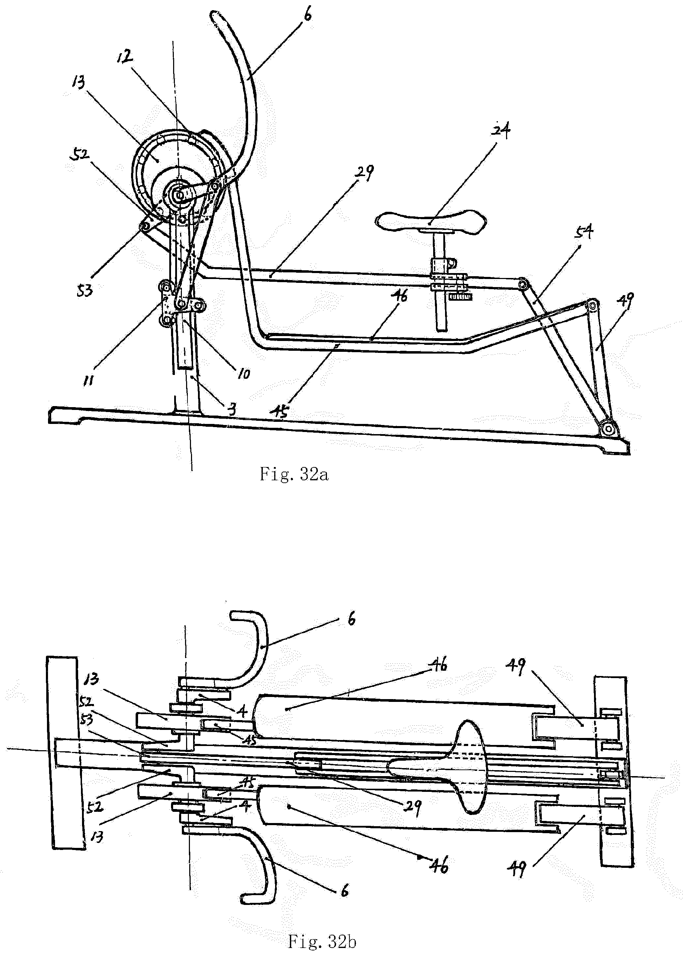

Fig. 32a and Fig. 32b are respectively the front view and top view of a related exercise machine with a guide rail type manual arm-moving structure system enabling an elliptical movement, a corresponding eccentric bearing system to realize a pedal arm-moving near-elliptical movement, and a central crankshaft structure system arranged;

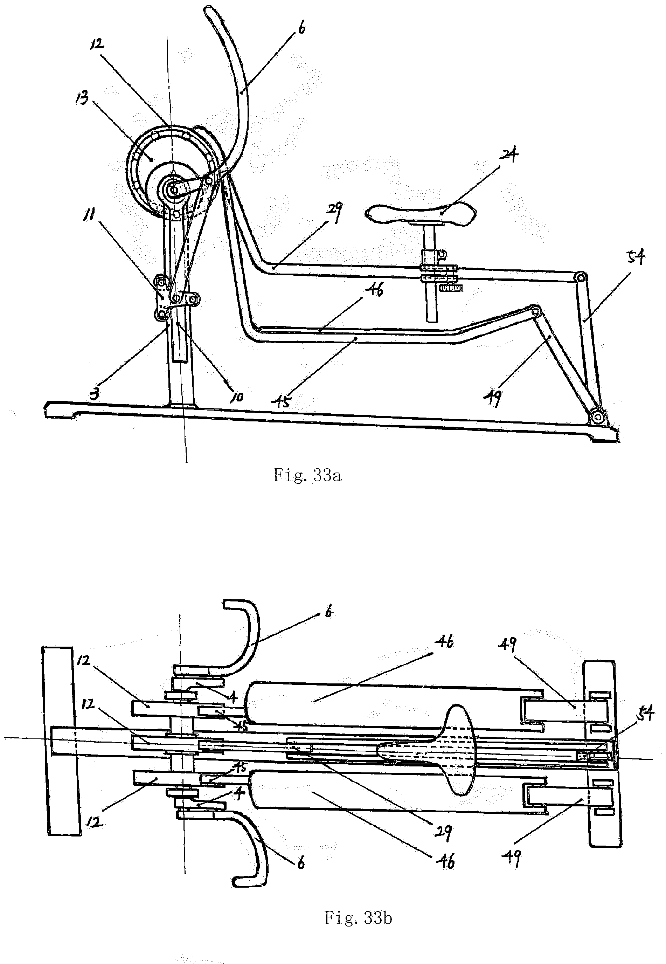

Fig. 33a and Fig. 33b are respectively the front view and top view of a related exercise machine with a guide rail type manual arm-moving structure system enabling an elliptical movement, a corresponding eccentric bearing system to realize a pedal arm-moving near-elliptical movement, and a central eccentric bearing structure system arranged;

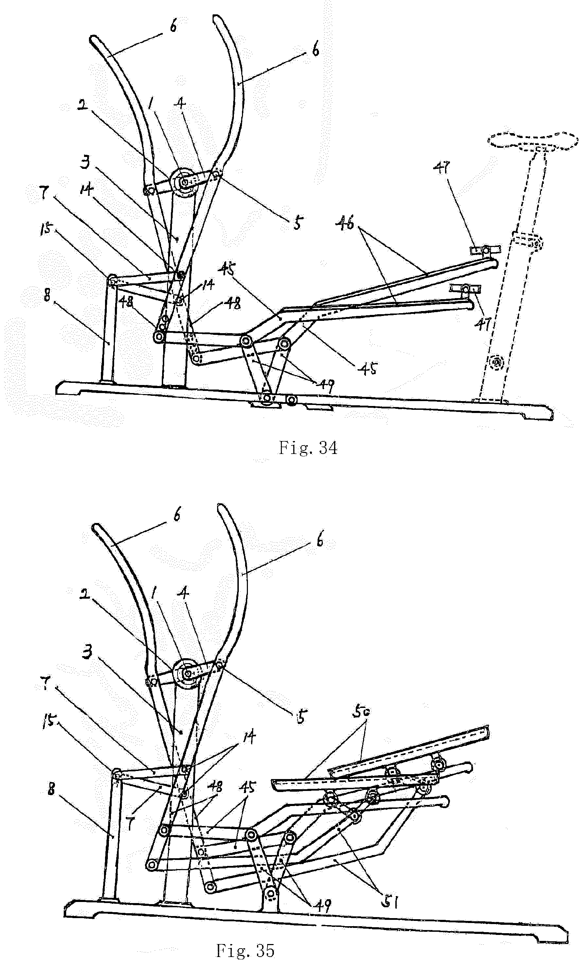

Fig. 34 and Fig. 35 are views of an exercise machine system capable of directly using the lower end (extension) part of a swing rod type manual arm-moving structure enabling an elliptical movement to drive a related pedal arm-moving structure system enabling an elliptical movement to realize a near-elliptical movement trajectory, wherein a corresponding movable pedal structure system is further contained in Fig. 35;

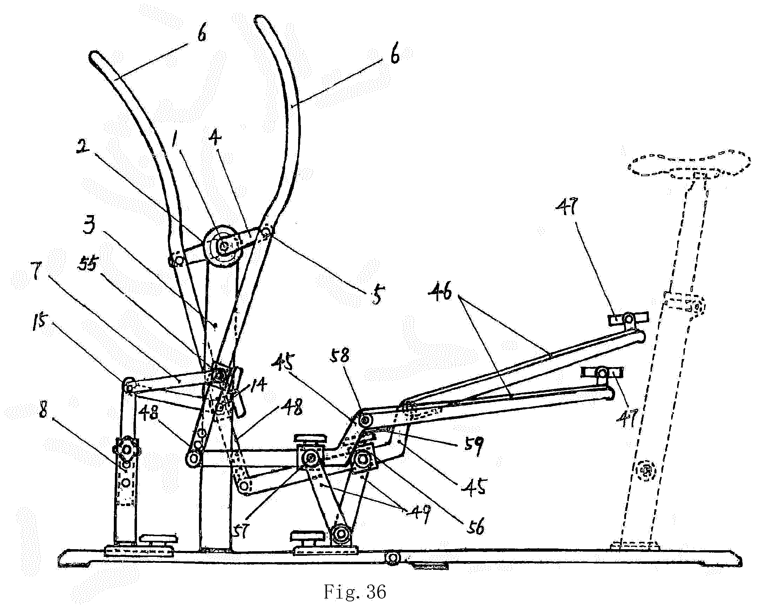

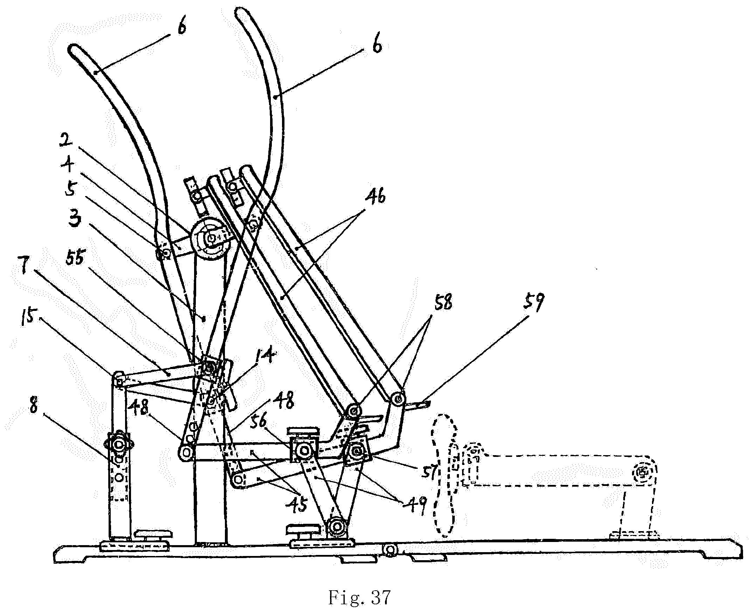

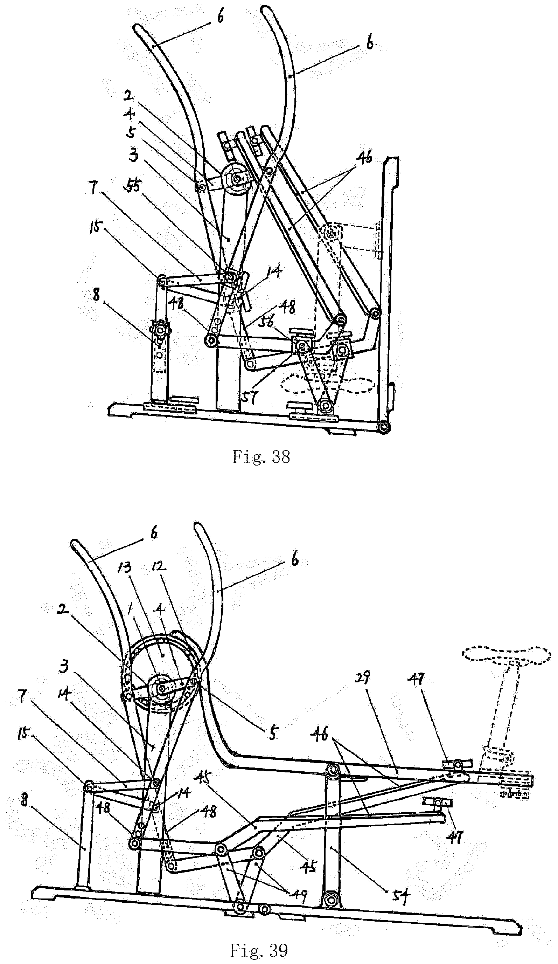

Fig. 36, Fig. 37 and Fig. 38 are views of a related exercise machine capable of directly using the lower end (or extension) part of a swing rod type manual arm-moving structure enabling an elliptical movement to drive a related pedal arm-moving structure system enabling an elliptical movement to realize a near-elliptical movement trajectory, wherein Fig. 36 is a view of the exercise machine in an unfolded working state, Fig. 37 is a related view of the exercise machine in a partial folding state, and Fig. 38 is a related view of the exercise machine in a fully folded state;

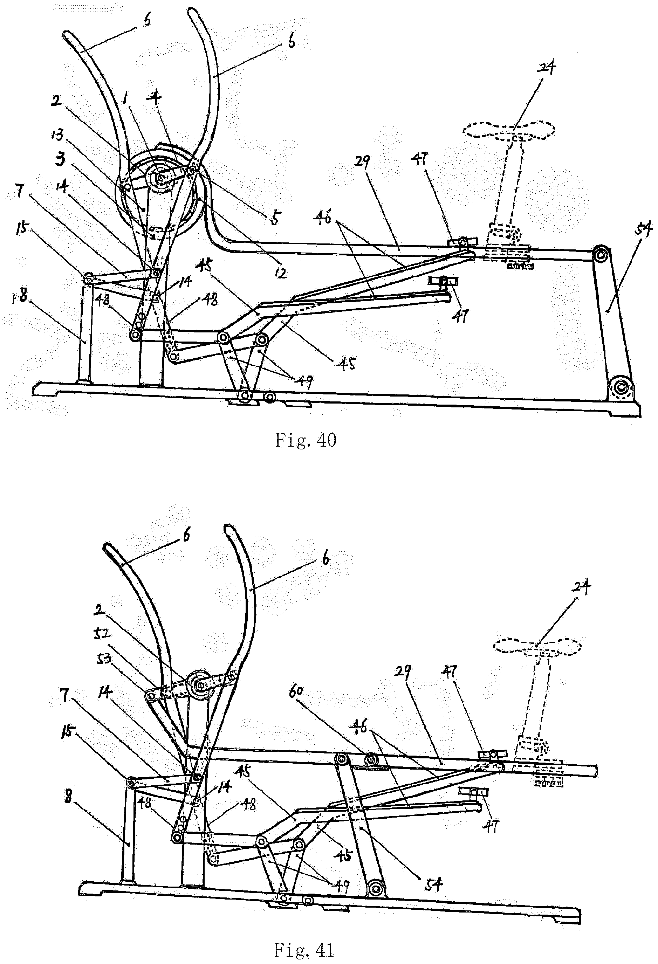

Fig. 39 and Fig. 40 are views of a related exercise machine capable of directly using the lower end (or extension) part of a swing rod type manual arm-moving structure enabling an elliptical movement to drive a related pedal arm-moving structure system enabling an elliptical movement to realize a near-elliptical movement trajectory and provided with a central eccentric bearing structure system, wherein Fig. 39 is a view of the related exercise machine with a saddle arm-moving swing rod structure centrally arranged, and Fig. 40 is a view of the related exercise machine with the saddle arm-moving swing rod structure post-positioned;

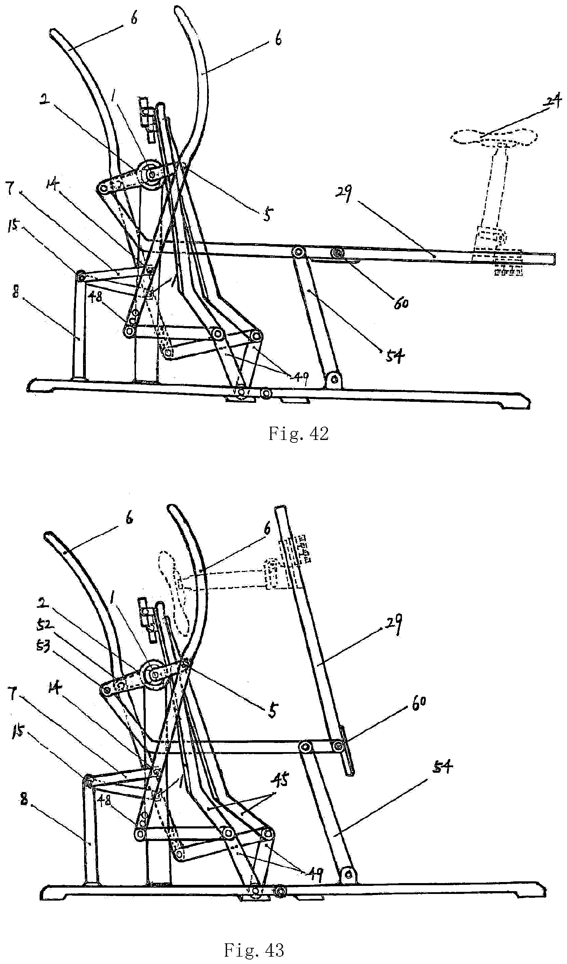

Fig. 41, Fig. 42 and Fig. 43 are views of a related exercise machine capable of directly using the lower end (or extension) part of a swing rod type manual arm-moving structure enabling an elliptical movement to drive a related pedal arm-moving structure system enabling an elliptical movement to realize a near-elliptical movement trajectory, and provided with a central crankshaft structure system, wherein Fig. 41 is a view of the exercise machine in an unfolded working state, Fig. 42 is a related view of the exercise machine in a partial folding state, and Fig. 43 is a related view of the exercise machine in a fully folded state;

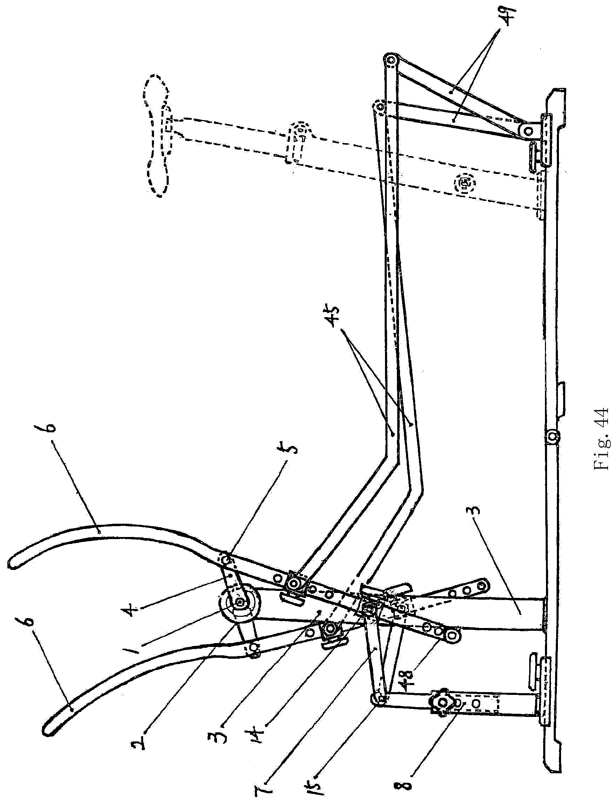

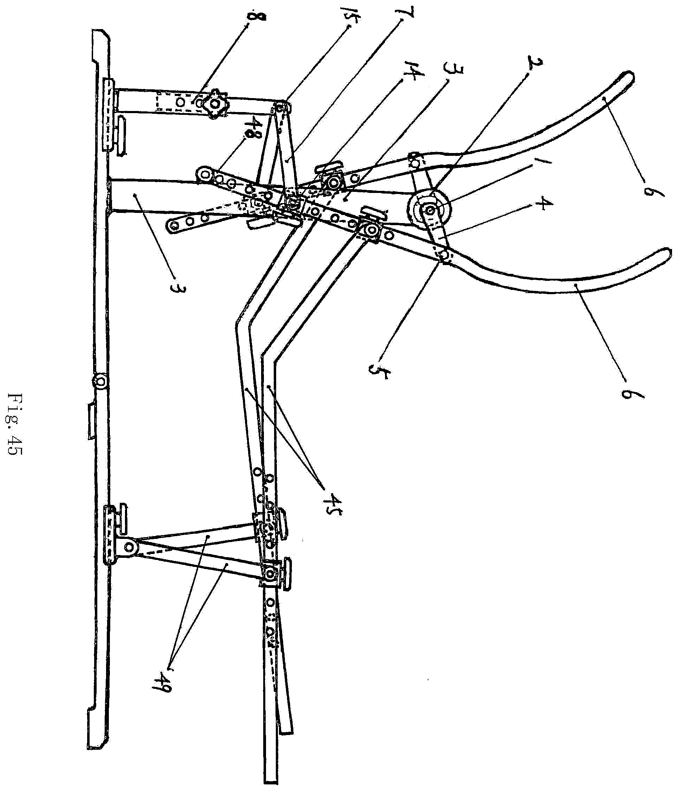

Fig. 44 and Fig. 45 are views of a related exercise machine capable of directly using the middle part of a swing rod type manual arm-moving structure enabling an elliptical movement to drive a related pedal arm-moving structure system enabling an elliptical movement to realize a near-elliptical movement trajectory, wherein Fig. 44 is a view of the related exercise machine with a pedal arm-moving swing rod structure post-positioned, and Fig. 45 is a view of the related exercise machine with the pedal arm-moving swing rod structure centrally arranged;

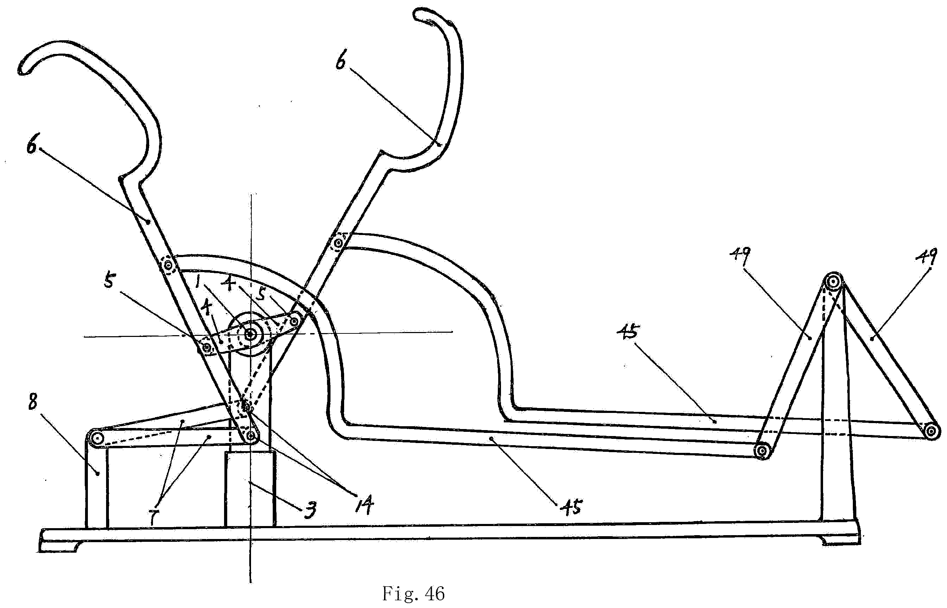

Fig. 46 is a view of a related exercise machine with a swing rod type manual arm-moving structure system enabling an elliptical movement, a reciprocating pivot shaft structure outside a related swing rod structure located below a related cycling pivot shaft structure, and capable of a synchronous and same direction movement between the arranged manual arm-moving structure system enabling the elliptical movement and pedal arm-moving swing rod structure enabling the elliptical movement;

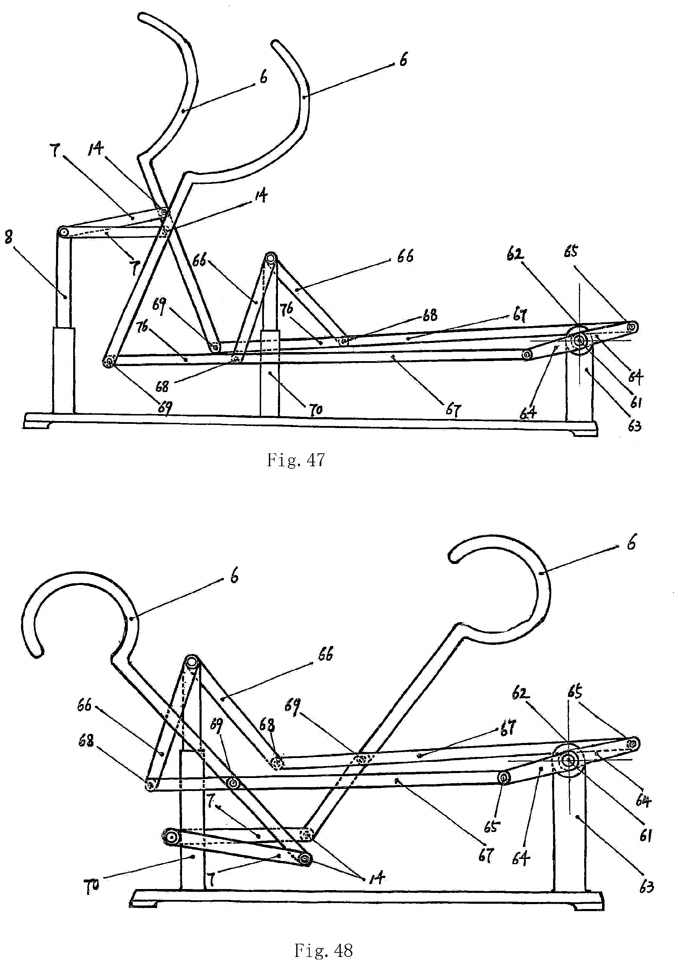

Fig. 47, Fig. 48, Fig. 49, and Fig. 50 are views of a related exercise machine with a manual arm-moving structure system enabling an elliptical movement directly pivotably connected and linked to a corresponding cycling pivot shaft structure enabling a near-elliptical movement, and the corresponding cycling pivot shaft structure enabling the near-elliptical movement arranged on a corresponding pedal arm-moving structure enabling a (near) elliptical movement; in Fig. 47, the swing rod type manual arm-moving structure enabling the elliptical movement is directly pivotably connected and linked to a forward extension structure of a pedal arm-moving structure enabling an elliptical movement in a swing rod type pedal elliptical machine structure system, so that a reverse cross force relationship is formed between the manual arm-moving structure enabling the elliptical movement and the pedal arm-moving structure enabling the elliptical movement, and related corresponding armrests and pedals, and between arms, feet and legs; and in Fig. 48, Fig. 49, and Fig. 50, a same direction and synchronous movement relationship can be formed between the manual arm-moving structure enabling the elliptical movement and the pedal arm-moving structure enabling the elliptical movement, and related corresponding armrests and pedals, and between arms, feet and legs;

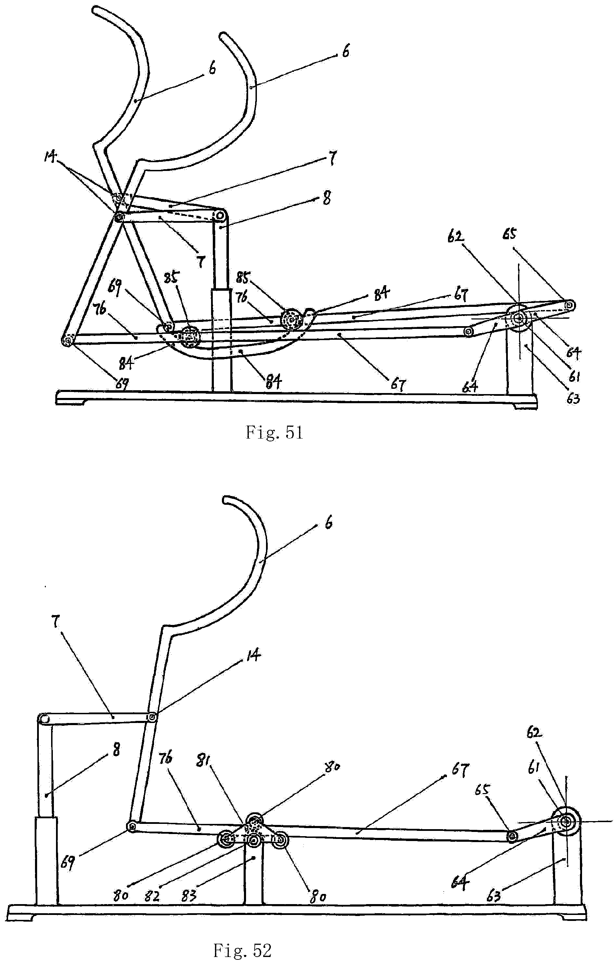

Fig. 51 is a view of a related exercise machine with a swing rod type manual arm-moving structure system enabling an elliptical movement directly pivotably connected and linked to a forward extension structure of a pedal arm-moving structure enabling an elliptical movement in a guide rail type pedal elliptical machine structure system;
Fig. 52 is a view of a related exercise machine with a swing rod type manual arm-moving structure system enabling an elliptical movement directly pivotably connected and linked to a forward extension structure of a pedal arm-moving structure enabling an elliptical movement in a guide wheel type pedal elliptical machine structure system;

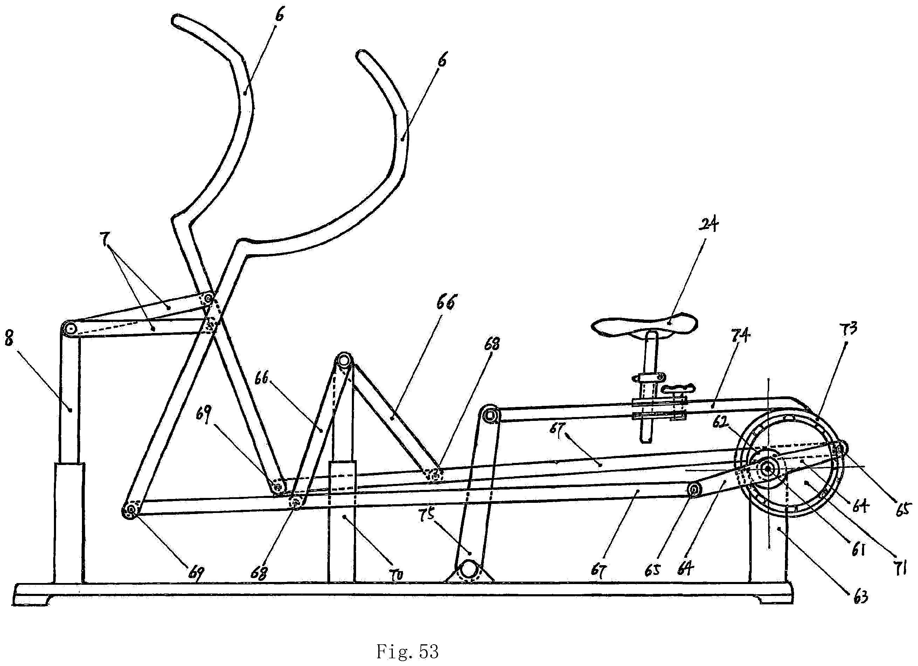

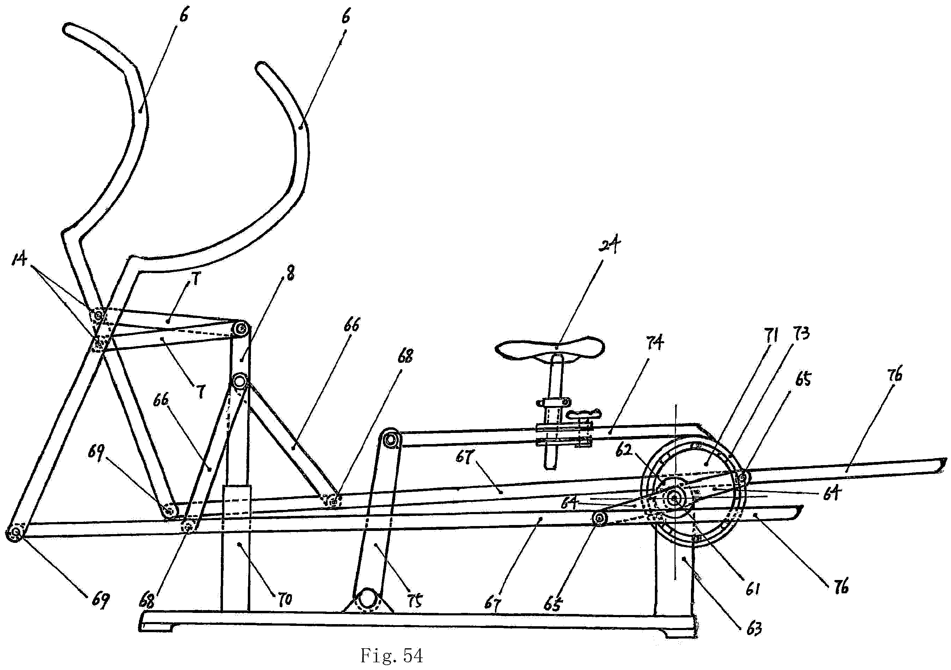

Fig. 53 and Fig. 54 are views of a related exercise machine with a central eccentric bearing structure system further arranged on the pedal middle shaft structure system, and the like on the related exercise machine shown in Fig. 47, and an outer ring structure of the eccentric bearing structure system connected and linked to a corresponding saddle arm-moving structure; in Fig. 54, a structure mode of further extending a pedal arm-moving structure enabling an elliptical movement and a pedal structure backward (outward) is adopted;

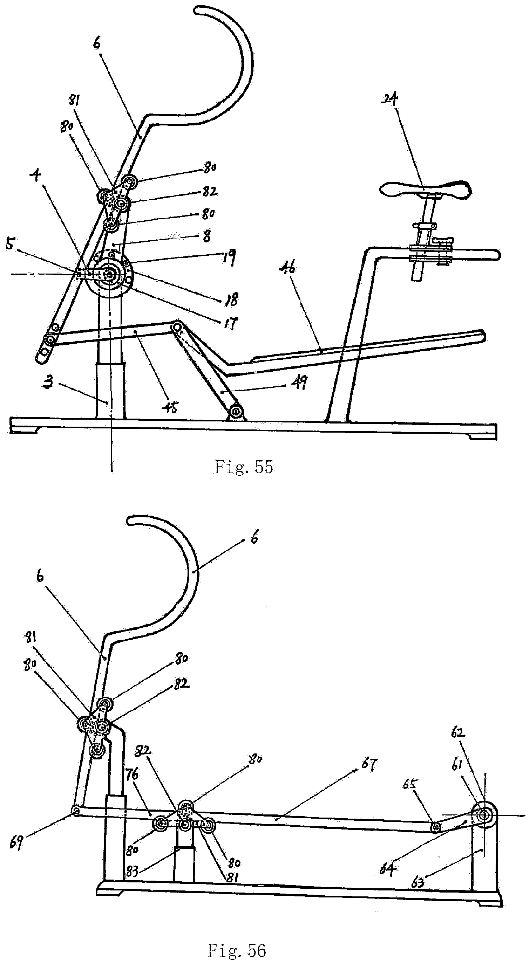

Fig. 55 is a view of a related exercise machine with a guide wheel type manual arm-moving structure system enabling an elliptical movement, and a trajectory control guide wheel structure and the like arranged on a corresponding manual arm-moving trajectory control swing rod bracket structure with an adjustable angle;
Fig. 56 is a view of a related exercise machine with a guide wheel type manual arm-moving structure system enabling an elliptical movement, and a guide wheel type pedal arm-moving structure system enabling an elliptical movement, and the lower part of the manual arm-moving structure enabling the elliptical movement directly pivotably connected and linked to the front end of the pedal arm-moving structure system enabling the elliptical movement;

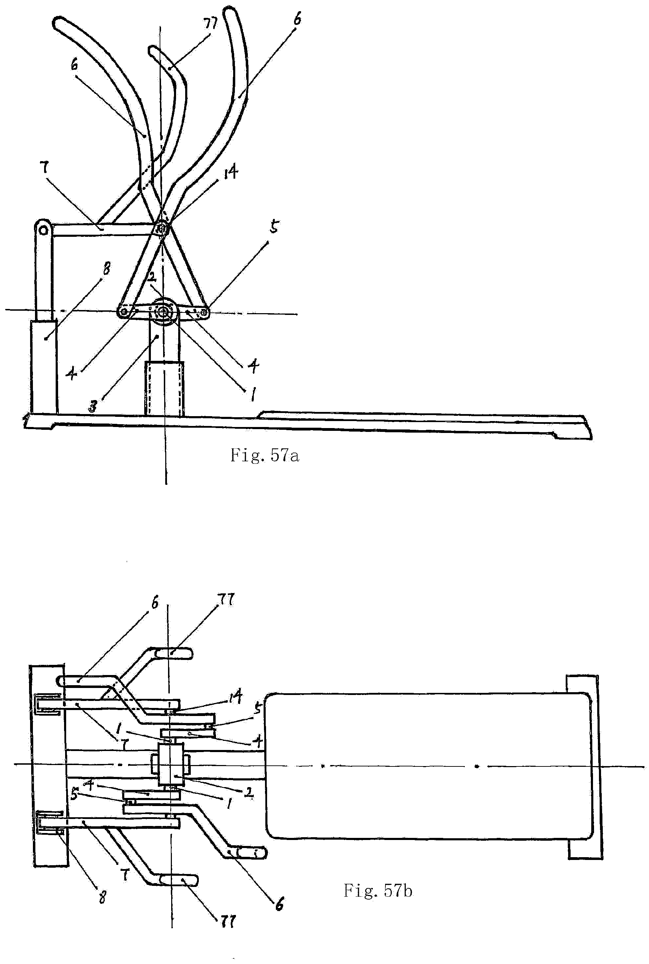

Fig. 57a and Fig. 57b are respectively the front view and top view of a related exercise machine with a swing rod type manual arm-moving structure system enabling an elliptical movement, a reciprocating pivot shaft structure outside a related swing rod structure located above a related cycling pivot shaft structure, and a manual arm-moving structure enabling a reciprocating movement arranged on the related swing rod structure;

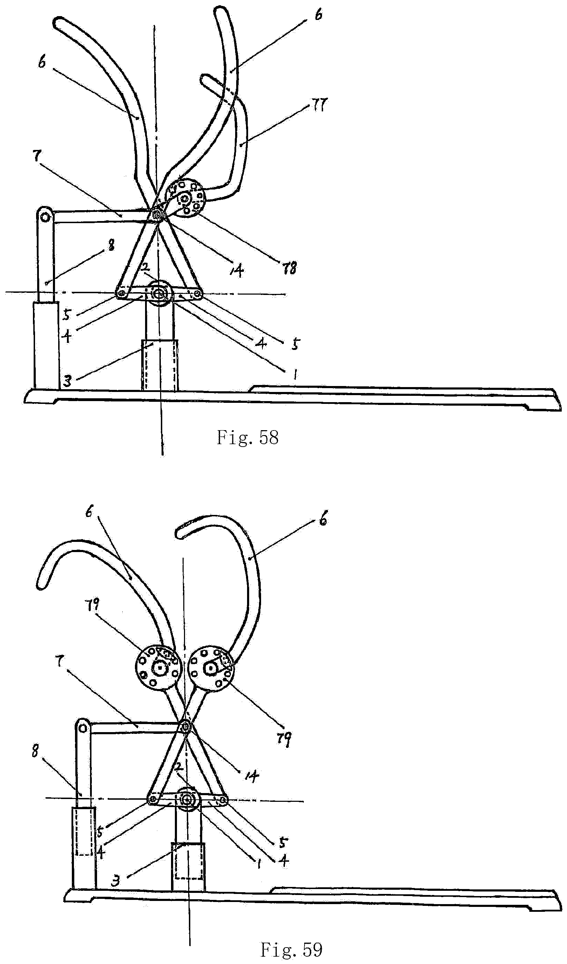

Fig. 58 is a view of a related exercise machine with a swing rod type manual arm-moving structure system enabling an elliptical movement, a reciprocating pivot shaft structure outside a related swing rod structure located above a related cycling pivot shaft structure, and an angle adjustable manual arm-moving structure enabling a reciprocating movement arranged on the related swing rod structure;
Fig. 59 is a view of a related exercise machine with a swing rod type manual arm-moving structure system enabling an elliptical movement, and the relative setting angle of the manual arm-moving structure system enabling the elliptical movement adjusted by nearly 360 degrees;

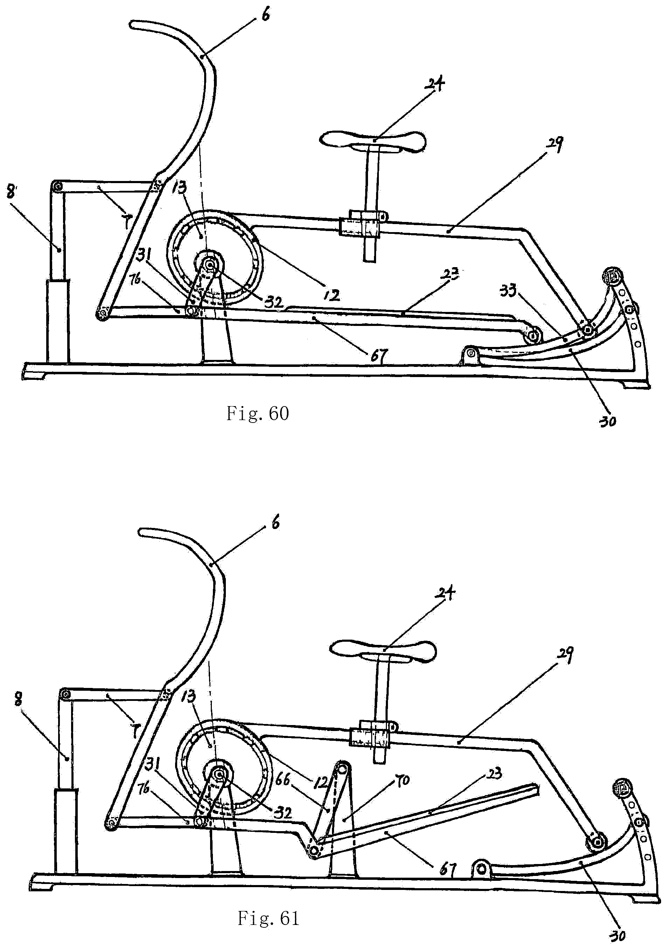

Fig. 60 and Fig. 61 are views of a corresponding multi-functional exercise machine with a manual arm-moving structure system enabling an elliptical movement and a pedal arm-moving structure system enabling an elliptical movement, and a saddle arm-moving structure system enabling an elliptical movement driven by a foot driven eccentric bearing structure system; wherein the rear end of the pedal arm-moving structure enabling the elliptical movement in Fig. 60 is matched with the corresponding guide rail structure, and the middle part of the pedal arm-moving structure enabling the elliptical movement in Fig. 61 is pivotably connected and matched with the corresponding swing rod structure;

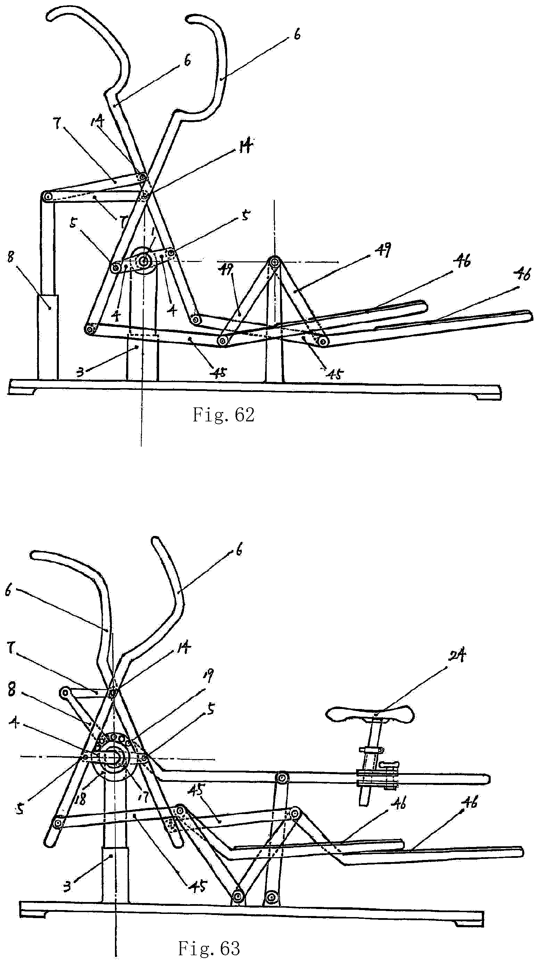

Fig. 62 and Fig. 63 are views of a corresponding multi-functional exercise machine with a manual arm-moving structure system enabling an elliptical movement and a pedal arm-moving structure system enabling an elliptical movement, and the front end of the pedal arm-moving structure enabling the elliptical movement directly pivotably connected and linked to the lower end of the manual arm-moving structure enabling the elliptical movement; wherein in Fig. 62, an ordinary swing rod type manual arm-moving structure system enabling an elliptical movement is adopted, and in Fig. 63, an adjustable swing rod type manual arm-moving structure system enabling an elliptical movement is adopted, and a corresponding saddle and other structure systems are arranged at the same time;

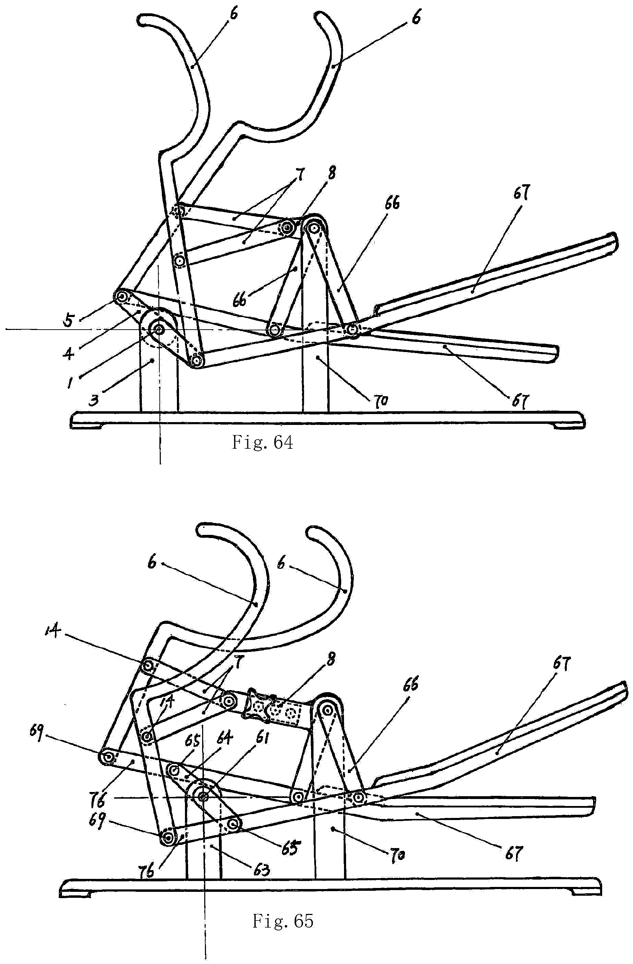

Fig. 64 is a view of a related exercise machine with a same crank and its outer pivot shaft structure shared by a manual arm-moving structure system enabling an elliptical movement and a pedal arm-moving structure system enabling an elliptical movement at the same side;
Fig. 65 is a view of a related exercise machine with a manual arm-moving structure system enabling an elliptical movement directly pivotably connected and linked to a corresponding cycling pivot shaft structure enabling a near-elliptical movement, and the corresponding cycling pivot shaft structure enabling the near-elliptical movement arranged on a corresponding pedal arm-moving structure enabling a (near) elliptical movement; wherein a reverse cross force movement relationship is formed between the manual arm-moving structure system enabling the elliptical movement and the pedal arm-moving structure enabling the elliptical movement, and the corresponding armrests and pedals, and between arms, feet, and legs;

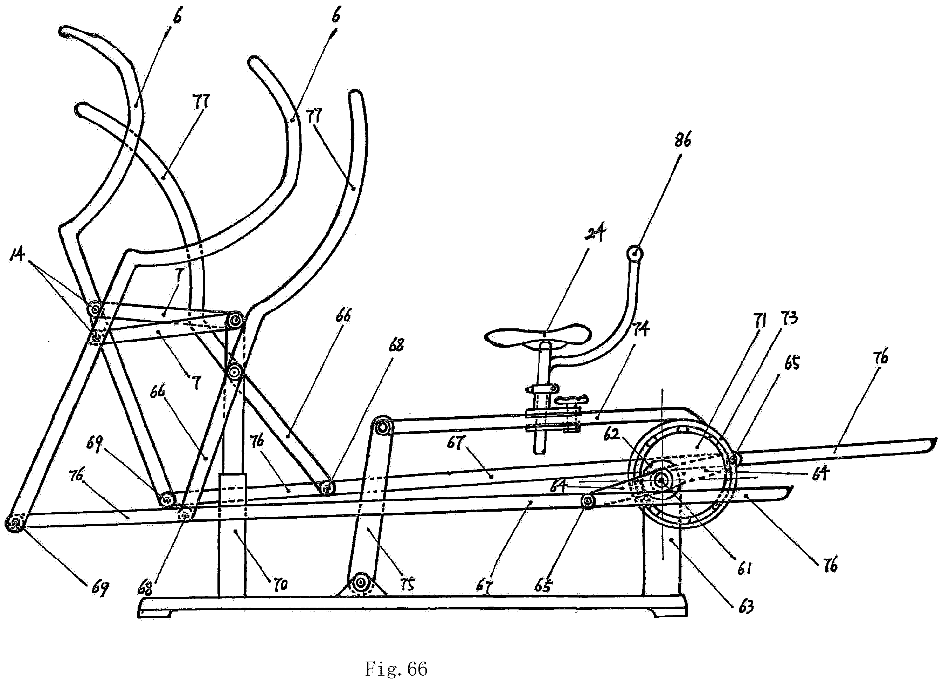

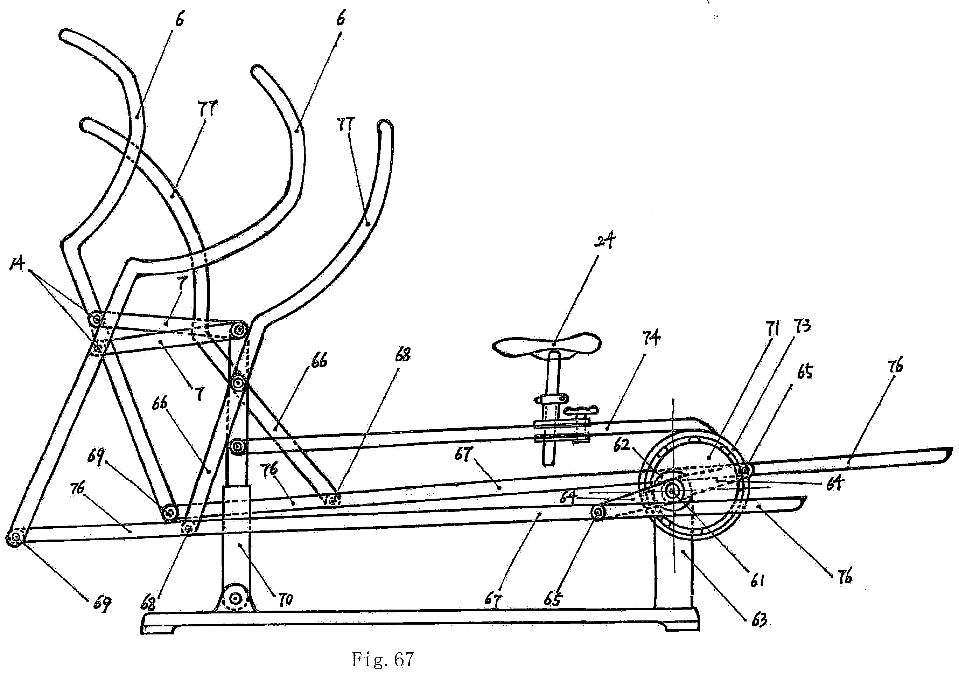

Fig. 66 and Fig. 67 are views of a related exercise machine with a central eccentric bearing structure system further arranged on a pedal middle shaft structure and other structure systems on the corresponding exercise machine shown in Fig. 47, and the outer ring structure of the eccentric bearing structure system connected and linked with a corresponding saddle arm-moving structure; in Fig. 66, a structure mode of making the corresponding saddle arm-moving swing rod structure and manual arm-moving trajectory control swing rod bracket structure independently arranged is adopted, and in Fig. 67, a structure setting mode of making the corresponding saddle arm-moving swing rod structure, the manual arm-moving trajectory control swing rod bracket structure and the pedal arm-moving trajectory control swing rod bracket structure be a same swingable framework structure is adopted;

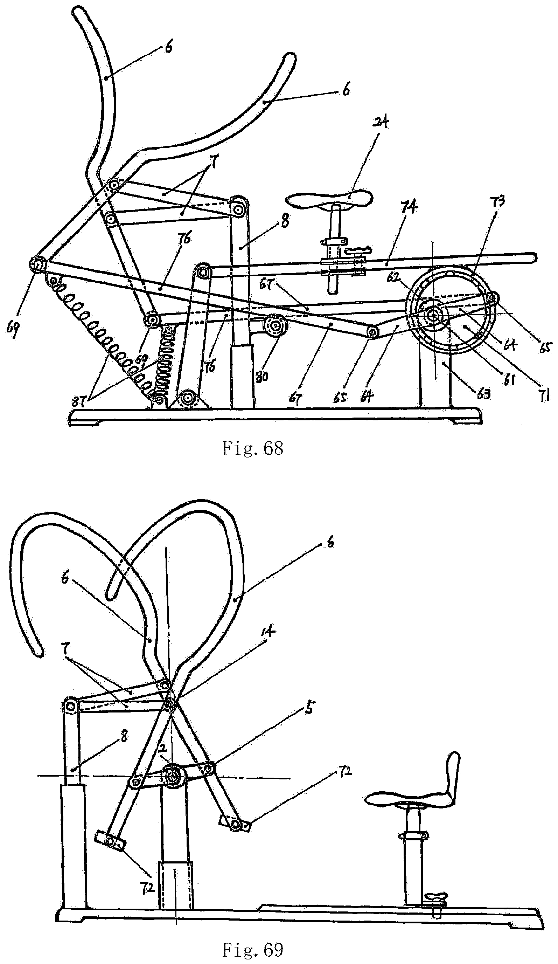

Fig. 68 shows a related exercise machine similar to that shown in Fig. 66 and Fig. 67, an obvious difference is that this exercise machine is provided with a corresponding pedal arm-moving trajectory control guide wheel structure system and a spring structure system capable of playing a role of auxiliary control and energy storage; and

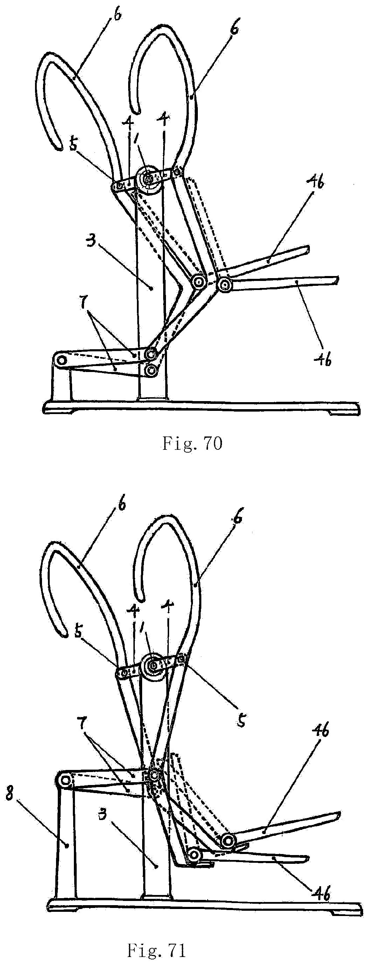

Fig. 69, Fig. 70 and Fig. 71 are views of a related exercise machine system capable of directly using a manual arm-moving structure enabling an elliptical movement to realize hand-foot linkage, wherein the lower end of the manual arm-moving structure enabling the elliptical movement in Fig. 69 is directly provided with a pedal structure enabling an elliptical movement, and the middle part and the lower part of the manual arm-moving structure enabling the elliptical movement in Fig. 70 and Fig. 71 are respectively directly provided with a pedal structure enabling an elliptical movement capable of being folded upwards.

In the figures, 1. manual arm-moving middle shaft structure, 2. manual arm-moving middle shaft seat structure, 3. manual arm-moving middle shaft seat bracket structure, 4. manual arm-moving crank structure, 5. manual arm-moving crank outer pivot shaft structure, 6. manual arm-moving structure enabling elliptical movement, 7. manual arm-moving trajectory control swing rod structure, 8. manual arm-moving trajectory control swing rod bracket structure, 9. manual arm-moving (follow-up) guide wheel structure, 10. manual arm-moving guide rail structure, 11. manual arm-moving (follow-up) guide wheel connecting plate structure, 12. eccentric bearing outer ring structure, 13. eccentric bearing inner ring structure, 14. manual arm-moving trajectory control swing rod outer pivot shaft structure, 15. manual arm-moving trajectory control swing rod central pivot shaft structure, 16. manual arm-moving trajectory control swing rod extension framework (or corresponding pedal) structure, 17. angle adjustable manual arm-moving trajectory control swing rod bracket shaft sleeve structure, 18. manual arm-moving trajectory control swing rod bracket angle adjusting control board structure, 19. manual arm-moving trajectory control swing rod bracket angle adjusting keyhole structure, 20. pedal crank structure (directly connected with the manual arm-moving crank outer pivot shaft structure), 21. pedal crank outer pivot shaft structure, 22. pedal structure (enabling circular movement), 23. pedal structure (enabling elliptical movement), 24. saddle structure, 25. pedal swing rod structure (enabling elliptical movement) or pedal arm-moving swing rod structure (enabling elliptical movement), 26. reinforced mobile pedal structure, 27. pedal framework structure(enabling elliptical movement) or pedal arm-moving structure (enabling elliptical movement), 28. (reinforced mobile) pedal connecting rod structure, 29. saddle arm-moving structure (enabling elliptical movement), 30. saddle arm-moving guide rail structure (enabling elliptical movement), 31. pedal crank structure (directly arranged on a pedal crank middle shaft structure), 32. pedal crank middle shaft structure, 33. pedal arm-moving guide rail structure (enabling elliptical movement), 34. (relatively fixed) pedal structure, 35. (manual arm-moving) crank base structure, 36. crank pivot shaft structure (of a corresponding pedal enabling circular movement or a corresponding pedal enabling elliptical movement), 37. hand and foot linked swing rod structure, 38. hand and foot linked connecting plate structure, 39. (corresponding) trajectory control pivot shaft structure, 40. (corresponding) linkage connecting lock hole structure, 41. (corresponding) locking connecting plate structure, 42. (corresponding) locking connecting lock hole structure, 43. manual arm-moving structure enabling reciprocating movement, 44. pedal (pedaling) crank structure directly connected with the manual arm-moving middle shaft structure, 45. pedal arm-moving structure enabling elliptical movement (pivotably connected to the manual arm-moving structure enabling elliptical movement 6), 46. pedal structure (enabling elliptical movement), 47. pedaling structure (enabling circular movement), 48. the lower end part of the manual arm-moving structure enabling the elliptical movement 6 or a further downward extending part thereof, 49. (corresponding) pedal arm-moving swing rod structure enabling elliptical movement, 50. (corresponding) movable pedal structure, 51. (corresponding) movable pedal pull rod structure, 52. (central) crankshaft crank structure, 53. crankshaft crank outer pivot shaft structure, 54. saddle arm-moving swing rod structure (enabling elliptical movement), 55. manual arm-moving trajectory control pivot shaft adjustment structure, 56. pedal arm-moving trajectory control pivot shaft adjustment structure, 57. pedal arm-moving trajectory control pivot shaft structure, 58. pedal arm-moving folding pivot shaft structure, 59. pedal arm-moving non-folded support structure, 60. saddle arm-moving folding pivot shaft structure, 61. pedal middle shaft structure (of a pedal elliptical machine structure system), 62. pedal middle shaft seat structure (a corresponding structure-corresponding to the structure 61), 63. (corresponding) pedal middle shaft seat bracket structure, 64. (corresponding) pedal crank structure, 65. (corresponding) pedal crank outer pivot shaft structure, 66. (corresponding) pedal arm-moving swing rod structure enabling elliptical movement, 67. (corresponding) pedal arm-moving structure enabling elliptical movement, 68. reciprocating pivot shaft structure (between the pedal arm-moving structure enabling the elliptical movement and the pedal arm-moving swing rod structure enabling the elliptical movement), 69. cycling pivot shaft structure (a corresponding structure-corresponding to the structure 67), 70. (corresponding) pedal arm-moving swing rod bracket structure, 71. eccentric bearing inner ring structure (directly or indirectly connected and linked with pedal middle shaft structure 61), 72. pedaling structure enabling elliptical movement, 73. (corresponding) eccentric bearing outer ring structure, 74. (corresponding) saddle arm-moving structure enabling elliptical movement, 75. (corresponding) saddle arm-moving swing rod structure enabling elliptical movement, 76. (corresponding) pedal arm-moving forward extension structure enabling elliptical movement, 77. (corresponding) manual arm-moving structure enabling reciprocating movement, 78. manual arm-moving angle adjusting disc structure enabling reciprocating movement, 79. manual arm-moving angle adjusting disc structure enabling elliptical movement, 80. manual arm-moving or pedal arm-moving trajectory control guide wheel structure, 81. trajectory control guide wheel connecting framework structure (a corresponding structure-corresponding to the trajectory control guide wheel structure 80), 82. (corresponding) trajectory control guide wheel system overall swing pivot shaft structure, 83. (pedal arm-moving) guide wheel bracket structure, 84. (pedal arm-moving) guide rail structure, and 85. pedal arm-moving follow-up guide wheel structure.

### DETAILED DESCRIPTION OF ILLUSTRATED EMBODIMENTS

More specific cases, embodiments, etc. of the present exercise machine related structure system are described below in connection with the accompanying drawings:
1. A basic situation of a swing rod type manual arm-moving structure system enabling an elliptical movement and related exercise machines thereof
   The swing rod type manual arm-moving structure system enabling the elliptical movement adopts a structure form of combining the corresponding swing rod structure system with the cycling pivot shaft structure enabling the circular movement, and many specific structure forms of combining the corresponding swing rod structure system with the cycling pivot shaft structure enabling the elliptical movement, the near-elliptical movement, or other suitable form of full-cycle movement.
   Here, only taking the swing rod type manual arm-moving structure system enabling the elliptical movement pivotably connected with the cycling pivot shaft structure enabling the circular movement as an example, the basic situation of the swing rod type manual arm-moving structure system enabling the elliptical movement is described:
   As shown in Figs. 1-3, etc., relying on a corresponding manual arm-moving middle shaft structure 1, one set of manual arm-moving crank structure 4 and one set of manual arm-moving crank outer (cycling) pivot shaft structure 5 are arranged at one side of a manual arm-moving middle shaft structure 1, a manual arm-moving middle shaft seat structure 2 and a manual arm-moving middle shaft seat bracket structure 3 or left and right manual arm-moving crank structures 4 and left and right manual arm-moving crank outer (cycling) pivot shaft structures 5 are simultaneously arranged at both sides of a manual arm-moving middle shaft structure 1, a manual arm-moving middle shaft seat structure 2 and a manual arm-moving middle shaft seat bracket structure 3; at the same time, one set of manual arm-moving structure enabling an elliptical movement 6 or left and right manual arm-moving structures enabling an elliptical movement 6, one set of swing rod type manual arm-moving trajectory control structure system or left and right swing rod type manual arm-moving trajectory control structure systems, and other related framework structure systems are correspondingly arranged, so as to form a complete swing rod type manual arm-moving structure system enabling the elliptical movement.
   The corresponding swing rod type manual arm-moving trajectory control structure system is composed of a manual arm-moving trajectory control swing rod structure 7, a manual arm-moving trajectory control swing rod bracket structure 8, etc.
   The manual arm-moving structure enabling the elliptical movement 6 is pivotably connected to the manual arm-moving crank outer pivot shaft structure 5 at one position thereof, and is pivotably connected to one end of the manual arm-moving trajectory control swing rod structure 7 at another position thereof by a manual arm-moving trajectory control swing rod outer (reciprocating) pivot shaft structure 14, and the other end of the manual arm-moving trajectory control swing rod structure 7 is pivotably connected to the manual arm-moving trajectory control swing rod bracket structure 8, so that the direct guidance and control of the movement trajectory of the manual arm-moving structure enabling the elliptical movement 6 can be jointly realized through the above settings.
   The reciprocating pivot shaft structure 14, etc. pivotably connected to the manual arm-moving structure enabling the elliptical movement are located below or above the corresponding cycling pivot shaft structure 5, etc. or on other suitable relative positions.
   On the corresponding exercise machine, the reciprocating pivot shaft structure 14, and the manual arm-moving trajectory control swing rod structure 7 which are pivotably connected to the manual arm-moving structure enabling the elliptical movement, can be located either below the corresponding cycling pivot shaft structure 5 or above the corresponding cycling pivot shaft structure 5 (the former case may be as shown in Figs. 1, 3, 5, 46, etc., and the latter case may be as shown in Figs. 2, 13, and 47).
   By setting the corresponding angle adjusting structure, the left and right manual arm-moving crank structures 4 can be in the position relationship state of completely parallel or having 180-degree difference from each other, so that the left and right manual arm-moving structures enabling the elliptical movement 6 can move in a near-elliptical trajectory in the movement angular relationship of completely parallel or having 180-degree difference from each other (as shown in Figs. 11, 12, etc.).
   Under the cooperation and support of other related structure systems, various forms of corresponding exercise machines with the swing rod type manual arm-moving structure system enabling the elliptical movement can be formed, such as special arm elliptical movement machines, and new exercise bikes, elliptical machines, horse riding machines, rowing machines, skiing machines, and the like with a swing rod type manual arm-moving structure system enabling an elliptical movement formed through the combination and integration of the corresponding structures.
2. A basic situation of a guide wheel type manual arm-moving structure system enabling an elliptical movement and related exercise machines thereof
   By setting a corresponding manual arm-moving restriction and control guide rail and other corresponding structure systems, the movement trajectory of the manual arm-moving structure enabling the elliptical movement can be controlled, which is similar to that a manual arm-moving trajectory control swing rod structure and the like, so as to form a corresponding guide rail type manual arm-moving structure system enabling an elliptical movement and related exercise machine products.
   The guide rail type manual arm-moving structure system enabling the elliptical movement adopts a structure form of combining the corresponding guide rail structure system with the cycling pivot shaft structure enabling the circular movement, and many specific structure forms of combining the corresponding guide rail structure system with the cycling pivot shaft structure enabling the elliptical movement, the near-elliptical movement, or other suitable form of full-cycle movement.
   Here, only taking the swing rod type manual arm-moving structure system enabling the elliptical movement pivotably connected with the cycling pivot shaft structure enabling the circular movement as an example, the basic situation of the swing rod type manual arm-moving structure system enabling the elliptical movement is described:
   As shown in Fig. 4, relying on a corresponding manual arm-moving middle shaft structure 1, one set of manual arm-moving crank structure 4 and one set of manual arm-moving crank outer pivot shaft structure 5 are arranged at one side of a manual arm-moving middle shaft structure 1, a manual arm-moving middle shaft seat structure 2 and a manual arm-moving middle shaft seat bracket structure 3 or left and right manual arm-moving crank structures 4 and left and right manual arm-moving crank outer pivot shaft structures 5 are simultaneously arranged at both sides of a manual arm-moving middle shaft structure 1, a manual arm-moving middle shaft seat structure 2 and a manual arm-moving middle shaft seat bracket structure 3; at the same time, one set of manual arm-moving structure enabling an elliptical movement 6 or left and right manual arm-moving structures enabling an elliptical movement 6, one set of guide rail type manual arm-moving trajectory control structure system or left and right guide rail type manual arm-moving trajectory control structure systems, and other related framework structure systems are correspondingly arranged, so as to form a complete guide rail type manual arm-moving structure system enabling the elliptical movement.
   The guide rail type manual arm-moving trajectory control structure system is composed of a manual arm-moving guide wheel structure 9, a manual arm-moving guide rail structure 10, a manual arm-moving guide wheel connecting plate structure 11, and the like.
   The manual arm-moving structure enabling the elliptical movement 6 is pivotably connected to the arm-moving crank pivot shaft structure 5 at an intermediate portion thereof, three or four manual arm-moving guide wheel structures 9 and the corresponding manual arm-moving guide wheel connecting plate structure 11 can be arranged at suitable spatial positions at the lower end of the manual arm-moving structure enabling the elliptical movement 6, the manual arm-moving structure enabling the elliptical movement 6 can be pivotably connected and linked to the manual arm-moving guide wheel connecting plate structure 11 at the lower end thereof, and at the same time, the corresponding manual arm-moving guide rail structure 10 matched with the manual arm-moving guide wheel structure 9 is arranged, so that the direct guidance and control of the movement trajectory of the manual arm-moving structure enabling the elliptical movement 6 can be jointly realized through the above settings.
   The manual arm-moving guide wheel structure 9 matched with the manual arm-moving guide rail structure 10 can also be replaced by a corresponding sliding sleeve structure that can slidingly move along the manual arm-moving guide rail structure 10, thereby making the corresponding structure simpler.
   By setting the corresponding angle adjusting structure, the corresponding left and right arm-moving crank structures 4 can be in the position relationship state of completely parallel or having 180-degree difference from each other, so that the left and right manual arm-moving structures enabling the elliptical movement 6 can move in a near-elliptical trajectory in the movement angular relationship of completely parallel or having 180-degree difference from each other.
   under the cooperation and support of other related structure systems, various forms of corresponding exercise machines with the guide rail type manual arm-moving structure system enabling the elliptical movement can be formed, such as special arm elliptical movement machines, and new exercise bikes, elliptical machines, horse riding machines, rowing machines, skiing machines, and the like with a swing rod type manual arm-moving structure system enabling an elliptical movement formed through the combination and integration of the corresponding structures.
3. Adjustable swing rod type and adjustable guide rail type manual arm-moving structure systems enabling an elliptical movement and related exercise machines thereof
   In order to better meet the needs of people's arm training in different postures, such as standing, sitting, bending down or leg bending, the shape and spatial distribution position of the near-elliptical movement trajectory of the manual arm-moving structure enabling the elliptical movement 6 can be selected, optimized and adjusted according to the requirements of the specific exercise situation.
   Accordingly, the adjustable swing rod type or adjustable guide rail type manual arm-moving structure system enabling the elliptical movement and related exercise machines thereof can be designed and produced.
   A first specific structural mode of the adjustable swing rod type manual arm-moving structure system enabling the elliptical movement, which can realize the related movement trajectory adjustment process, is as follows:
   The length or height of the lower part of the manual arm-moving structure enabling the elliptical movement 6 or the manual arm-moving trajectory control swing rod structure 7 or the manual arm-moving trajectory control swing rod bracket structure 8 is adjustable, so as to change the space position and movement trajectory of the pivot shaft structure 14 at the lower end of the manual arm-moving trajectory control swing rod structure 7 and the manual arm-moving structure enabling the elliptical movement 6, and also change the spatial working position and movement trajectory distribution of the entire manual arm-moving structure enabling the elliptical movement 6, thereby enabling adjustment and change of the arm movement trajectory (as shown in Fig. 5).
   A second specific structural mode of the adjustable swing rod type manual arm-moving structure system enabling the elliptical movement, which can realize the related movement trajectory adjustment process, is as follows:
   The other end of the manual arm-moving trajectory control swing rod bracket structure 8 is pivotably connected to the manual arm-moving middle shaft structure 1 or the manual arm-moving middle shaft seat structure 2 through a corresponding shaft sleeve structure 17, meanwhile, an angle adjusting control board structure 18 of the manual arm-moving trajectory control swing rod bracket structure 8 can be arranged by relying on the manual arm-moving middle shaft seat structure 2 or the manual arm-moving middle shaft seat bracket structure 3, and a number of angle adjusting keyhole structures 19 can be arranged on the angle adjusting control board structure 18, and an angle adjusting keyhole structure 19 can also be arranged on the corresponding position of the manual arm-moving trajectory control swing rod bracket structure 8, in this way, through a corresponding lock rod structure, the manual arm-moving trajectory control swing rod bracket structure 8 can be selectively locked on the keyhole structures of different angles and positions of the angle adjusting control board structure 18.
   Related exercise machines with the adjustable swing rod type manual arm-moving structure system enabling the elliptical movement can be designed and manufactured (as shown in Figs. 5, 7, etc.).
   Through the above related structure setting and corresponding adjustment process, the working position and space movement trajectory of the pivot shaft structure 14 at the lower end of the manual arm-moving structure enabling the elliptical movement 6 and the whole manual arm-moving structure enabling the elliptical movement 6 can be adjusted and set in a larger angle and a larger space range, thereby realizing the adjustment, change and optimization of the arm movement position and movement trajectory.
   For the adjustable guide rail type manual arm-moving structure system enabling the elliptical movement, the specific structure mode to realize the aforementioned adjustment process may refer to the situation of the adjustable swing rod type manual arm-moving trajectory control structure system.
   Specifically, one end of the manual arm-moving guide rail structure 10 is pivotably connected to the manual arm-moving middle shaft structure 1 or the manual arm-moving middle shaft seat structure 2 through a corresponding shaft sleeve structure 17, meanwhile, an angle adjusting control board structure 18 of the manual arm-moving guide rail structure 10 can be arranged by relying on the manual arm-moving middle shaft seat structure 2 or the manual arm-moving middle shaft seat bracket structure 3, and a number of angle adjusting keyhole structures 19 can be arranged on the angle adjusting control board structure 18, and an angle adjusting keyhole structure 19 can also be arranged on the corresponding position of the manual arm-moving guide rail structure 10, in this way, through a corresponding lock rod structure, the manual arm-moving guide rail structure 10 can be selectively locked on the keyhole structures of different angles and positions of the angle adjusting control board structure 18, thus, the working position and space movement trajectory of each point of the entire manual arm-moving structure enabling the elliptical movement 6 can be adjusted, and the arm movement position and movement trajectory can be adjusted, changed and optimized.
   Related exercise machines with the adjustable guide rail type manual arm-moving structure system enabling the elliptical movement can be further designed and manufactured (as shown in Figs. 6, 20, 21, etc.).
   In addition, whether for the adjustable swing rod type or the adjustable guide rail type manual arm-moving structure system enabling the elliptical movement, by adopting a structural arrangement mode in which the length of the manual arm-moving middle shaft seat bracket structure 3 and the height position or the front and rear position of the top can be adjusted, the adjustment of height or front and rear positions of the manual arm-moving middle shaft seat structure 2 and associated many structures and systems thereof can be realized, so that the adjustment, change and optimization of the movement position and movement trajectory of the arm can also be realized (as shown in Fig. 5).
4. A guide wheel type manual arm-moving structure system enabling an elliptical movement and related exercise machines thereof
   By setting the corresponding trajectory control guide wheel structure system, the guide wheel type manual arm-moving structure system enabling the elliptical movement and related exercise machines thereof may be formed, and the guide wheel type manual arm-moving structure system enabling the elliptical movement adopts a structure form of combining the corresponding trajectory control guide wheel structure system with the cycling pivot shaft structure enabling the circular movement, or a suitable specific structure form of combining the corresponding trajectory control guide wheel structure system with the cycling pivot shaft structure enabling the elliptical movement, the near-elliptical movement, or other suitable form of full-cycle movement.
   The corresponding trajectory control guide wheel structure system comprises a trajectory control guide wheel structure 80, a trajectory control guide wheel connecting framework structure 81, a trajectory control guide wheel system overall swing pivot shaft structure 82, etc. two or three or four trajectory control guide wheel structures 80 capable of clamping and restricting the corresponding structural part enabling a reciprocating movement of the manual arm-moving structure enabling the elliptical movement 6 therein are arranged on the trajectory control guide wheel connecting framework structure 81, and meanwhile, the whole trajectory control guide wheel connecting framework structure 81 is pivotably connected to the manual arm-moving trajectory control swing rod bracket structure 8 through the trajectory control guide wheel system overall swing pivot shaft structure 82.
   Through the above arrangement, the corresponding structural part enabling the reciprocating movement of the manual arm-moving structure enabling the elliptical movement 6, clamped and restricted by the trajectory control guide wheel structure 80, can still cooperate well with the trajectory control guide wheel structure 80 and the whole trajectory control guide wheel structure system under the condition of constant change of a working angle, thereby forming a guide wheel type manual arm-moving structure system enabling an elliptical movement and corresponding instrument products thereof (as shown in Fig. 55).
   The trajectory control guide wheel structure system can also be arranged on other suitable form of manual arm-moving trajectory control bracket structure and other structures, thus forming corresponding other suitable form of guide wheel type manual arm-moving structure system enabling an elliptical movement and related exercise machine products.
   A related exercise machine with the guide wheel type manual arm-moving structure system enabling the elliptical movement, and the guide wheel type pedal arm-moving structure system enabling an elliptical movement, and the manual arm-moving structure enabling the elliptical movement 6 directly pivotably connected and linked to the pedal arm-moving structure enabling the elliptical movement 67 may be formed, the corresponding pedal arm-moving structure enabling the elliptical movement 67 may form a relatively independent rear-drive-type pedal elliptical machine structure system together with the corresponding pedal crank, pedal middle shaft and other structures.
   Under the cooperation and support of other related structure systems, various forms of corresponding exercise machines with the guide wheel type manual arm-moving structure system enabling the elliptical movement may be formed, such as special arm elliptical movement machines, and new exercise bikes, elliptical machines, horse riding machines, rowing machines, skiing machines, and other related exercise machines with a guide wheel type manual arm-moving structure system enabling an elliptical movement formed through the combination and integration of the corresponding structures.
5. An eccentric bearing type manual arm-moving structure system enabling an elliptical movement relying on an eccentric bearing to realize a near-elliptical movement trajectory
   As shown in Fig. 9, by relying on a corresponding manual arm-moving middle shaft structure 1, one set of eccentric bearing structure system is arranged at one side of a manual arm-moving middle shaft structure 1, a manual arm-moving middle shaft seat structure 2 and a manual arm-moving middle shaft seat bracket structure 3 or left and right eccentric bearing structure systems are simultaneously arranged at both sides of a manual arm-moving middle shaft structure 1, a manual arm-moving middle shaft seat structure 2 and a manual arm-moving middle shaft seat bracket structure 3; at the same time, one set of manual arm-moving structure enabling an elliptical movement 6 or left and right manual arm-moving structures enabling an elliptical movement 6, one set of guide rail type or swing rod type or guide wheel type manual arm-moving trajectory control structure system or left and right guide rail type or swing rod type manual arm-moving trajectory control structure systems, and other related framework structure systems are correspondingly arranged, so as to form a complete eccentric bearing type manual arm-moving structure system enabling an elliptical movement.
   The middle part of the manual arm-moving structure enabling the elliptical movement 6 is connected or pivotably connected to an eccentric bearing outer ring structure 12, an eccentric bearing inner ring structure 13 is connected or pivotably connected to the manual arm-moving middle shaft structure 1, and the rotation-swing center of the eccentric bearing structure system coincides with the axle center of the manual arm-moving middle shaft structure 1 (as shown in Fig. 9).
   By setting the corresponding angle adjusting structure, the left and right manual arm-moving structures enabling the elliptical movement 6 move in a near-elliptical trajectory in a completely parallel relationship or in a movement angle relationship that is 180 degrees different from each other.
6. A related exercise machine system capable of directly utilizing the manual arm-moving structure enabling the elliptical movement to realize hand-foot linkage
   The lower end or the middle part of the manual arm-moving structure enabling the elliptical movement 6 of the corresponding swing rod type, guide rail type or guide wheel type manual arm-moving structure system enabling an elliptical movement is directly provided with a pedaling structure enabling an elliptical movement 72 or a pedal structure enabling an elliptical movement 46 of which the corresponding movement trajectory can be nearly elliptical, in this way, together with the corresponding armrest structure on the upper part of the manual arm-moving structure enabling the elliptical movement 6, hand-foot linkage related exercise machines with a concise structure is formed, and the hand and foot in the linkage state can adopt a movement form of near-elliptical trajectory (As shown in Figs. 69, 71, and 70, respectively).
   According to the need, the pedal structure enabling the elliptical movement 46 may adopt a simple fixed structure form, a foldable structure form or an adjustable structure form, and according to the need, the corresponding fixed or adjustable saddle structure 24 may be arranged on the related exercise machine.
7. A related exercise machine system capable of directly utilizing the manual arm-moving trajectory control swing rod structure to realize hand-foot linkage
   As shown in Figs. 10 and 11, the manual arm-moving trajectory control swing rod bracket structure 8 may be arranged at the front part or the rear part of the manual arm-moving middle shaft seat bracket structure 3, and meanwhile, it may be considered that the corresponding manual arm-moving trajectory control swing rod structure 7 directly supports the corresponding foot and leg exercise movement.
   According to the needs, it may also be considered that an extension framework and pedal structure 16 for a foot movement is arranged backwards or forwards at the pivot shaft structure 14 at the lower end of the corresponding manual arm-moving trajectory control swing rod structure 7 and manual arm-moving structure enabling the elliptical movement 6, and at the pivot shaft structure 15 between the manual arm-moving trajectory control swing rod structure 7 and the manual arm-moving trajectory control swing rod bracket structure 8 in an extension mode, so that the corresponding exercise machine system in hand-foot matched linkage may be formed (As shown in Figs. 10 and 11).
   According to the needs, it may also be considered that a corresponding pedal structure is directly arranged on left and right manual arm-moving trajectory control swing rod structures in an alternating movement relationship with each other of the swing rod type manual arm-moving structure system enabling the elliptical movement, and meanwhile, the front part of the left manual arm-moving trajectory control swing rod structure and the lower end of the left manual arm-moving structure are directly pivotably connected and linked with each other, the front part of the right manual arm-moving trajectory control swing rod structure and the lower end of the right manual arm-moving structure are directly pivotably connected and linked with each other (As shown in Fig. 12).
   According to the needs, it may also be considered that a corresponding pedal structure is directly arranged on left and right manual arm-moving trajectory control swing rod structures in an alternating movement relationship with each other of the swing rod type manual arm-moving structure system enabling the elliptical movement, and meanwhile, the front part of the left manual arm-moving trajectory control swing rod structure and the lower end of the right manual arm-moving structure are directly pivotably connected and linked with each other, the front part of the right manual arm-moving trajectory control swing rod structure and the lower end of the left manual arm-moving structure are directly pivotably connected and linked with each other (As shown in Fig. 14).
   According to the needs, it may also be considered that the corresponding pedaling arm-moving and pedal structure 16 are arranged on the corresponding manual arm-moving trajectory control swing rod structure 7 or the extension structure thereof, so as to form a stepper and other products with the swing rod type manual arm-moving structure system enabling the elliptical movement, wherein the pedaling arm-moving and pedal structure 16 and the manual arm-moving trajectory control swing rod structure 7 are either located at the same side of the manual arm-moving trajectory control swing rod bracket structure 8, or at both sides of the manual arm-moving trajectory control swing rod bracket structure 8, and the relative movement relationship between the corresponding pedal structure 16 and the manual arm-moving structure enabling the elliptical movement 6 is different (one of the related situations may be shown in Fig. 13).
8. A plurality of related exercise machines including movement forms in which hands and feet may be driven at the same time can be further formed.

Through the setting of the above-mentioned corresponding structures, not only the movement form in a near-elliptical movement trajectory of a single arm and its related product form may be realized, but also the hand foot linkage movement mode with the characteristics of this invention and the corresponding new exercise machine products such as exercise bikes, elliptical machines, horse riding machines, and skiing machines may be further formed. Its more specific structure and other aspects are described as follows:

As shown in Figs. 6, 15-21 and the like, left and right pedal crank structures 20 opposite to the left and right manual arm-moving crank structures 4 are arranged on the left and right manual arm-moving crank outer pivot shaft structures 5, left and right pedal crank pivot shaft structures 21 are arranged at the other end of the left and right pedal crank structures 20, and left and right pedal structures enabling a circular movement 22 are arranged on the left and right pedal crank pivot shaft structures 21; the left and right pedal crank pivot shaft structures 21 may be directly or indirectly connected and linked to left and right pedal structures 23 or left and right pedaling arm-moving structures 27 which generally performs a near-elliptical movement (as shown in Figs. 6, 20, 21, etc. respectively).

In cooperation with the left and right pedal structures 22, a corresponding saddle structure 24 may be arranged, and in cooperation with the left and right pedal structures 23, corresponding left and right pedal swing rod structures 25 or a corresponding guide rail or guide wheel structure, etc. may be arranged (as shown in Figs. 6, 21, etc.).

Through the setting of the corresponding angle changing mechanism, the left and right pedal crank structures 20 may adopt a completely parallel angular positional relation to support the corresponding movement forms such as horse riding machines, and the left and right pedal crank structures 20 may also adopt a 180-degree angular positional relation to support the corresponding exercise bike movement, elliptical machine movement, etc.

By the arrangement of the above and other related structures, while a circular or near-elliptical movement of both feet is achieved in a parallel or alternating manner with respect to each other by the left and right pedal structures 22 or the left and right pedal structures 23, both hands perform a near-elliptical movement in a parallel or alternating manner with respect to each other by left and right manual arm-moving structures enabling the elliptical movement 6, so as to form a new way of exercise that hands and feet may do a near-elliptical movement or circular movement together, or form a fully elliptical machine type movement and exercise mode that hands and feet may do a near-elliptical movement (as shown in Figs. 6, 20, 21, etc. respectively).

The specific situation of some new exercise machine products formed by the above new sports and exercise methods is further explained as follows:
(1) Related exercise machine products with both the manual arm-moving structure system enabling the elliptical movement and left and right pedal-pedal crank structure systems, etc. may be formed (as shown in Fig. 6, etc.).
(2) Related exercise machine products with both the manual arm-moving structure system enabling the elliptical movement and left and right pedal-pedal swing rod structure systems, etc. may be formed (as shown in Fig. 16, etc.).
(3) Related exercise machine products with both the manual arm-moving structure system enabling the elliptical movement and a reinforced front and rear mobile pedal structure system may be formed (as shown in Figs. 18, 19, and 20).
   Its features are: by setting the reinforced mobile left and right pedal structures 26, the forward and backward movement range of the feet in the near-elliptical movement is significantly increased, and with the coordination of the hands in the near-elliptical movement, the action and movement of cross-country skiing may be more realistically and extensively imitated, so that the exerciser may obtain better experience and exercise effects.
   The reinforced mobile left and right pedal structures 26 may be arranged on the left and right pedal framework structures 27 of which one end is directly or indirectly pivotably connected to left and right pedal crank pivot shaft structures 21, and the other end is pivotably connected to left and right pedal swing rod structures 25, and may move forward and backward along the left and right pedal framework structures 27 under the driving force of the reinforced movable left and right pedal connecting rod structures 28 by relying on the corresponding roller structure; one end of the reinforced mobile left and right pedal connecting rod structures 28 is pivotably connected and linked to the reinforced mobile left and right pedal structures 26, and the other end is pivotably connected and linked to the extension end of the left and right pedal swing rod structures 25 (as shown in Fig. 20).
   The single-point roller control connection mode may also be adopted between the reinforced mobile left and right pedal structures 26 and the left and right pedal framework structures 27, that is, under the support and cooperation of the corresponding left and right pedal connecting rod structures 28, the direct contact, movement connection and cooperation between the left and right pedal structures 26 and the left and right pedal framework structures 27 may be realized at a relative point through a group of roller structures, one end of the reinforced mobile left and right pedal connecting rod structures 28 is pivotably connected and linked to the reinforced mobile left and right pedal structures 26, and the other end is directly pivotably connected and linked to the extension end or non-extension part of the left and right pedal swing rod structures 25 (as shown in Fig. 18 and Fig. 19 respectively).
(4) Related exercise machine products with both the manual arm-moving structure system enabling the elliptical movement and a pedal-pedal crank system and a pedal-pedal arm-moving system may be formed (as shown in Fig. 21).
   Its features are: it may be an exercise machine product with the characteristics of the invention, which may realize the compound sports functions of exercise bikes and elliptical machines at the same time. The corresponding saddle structure 24 may realize the change and adjustment of a space position through the corresponding front and rear movement and up and down lifting structure system, so as to meet the needs of exercise such as exercise bikes and not have any adverse effect on the elliptical machine movement.
(5) A corresponding pedal arm-moving crank structure 20 may be arranged on the manual arm-moving crank outer pivot shaft structure 5 of the corresponding exercise machine with the swing rod type manual arm-moving structure system enabling the elliptical movement, the outside of the pedal arm-moving crank structure 20 is provided with a pedal arm-moving crank outer pivot shaft structure 21, the front end of a corresponding pedal arm-moving structure enabling an elliptical movement 45 is pivotably connected to the pedal arm-moving crank structure 20 through the pedal arm-moving crank outer pivot shaft structure 21, the rear end of the pedal arm-moving structure enabling the elliptical movement 45 is pivotably connected to a pedal arm-moving swing rod structure enabling an elliptical movement 59 through the corresponding pivot shaft structure or is in abutting joint and matched with the corresponding guide wheel structure system or the guide rail structure system (the former may be as shown in Fig. 15).
   If necessary, the angle between the manual arm-moving crank structure 4 and the pedal arm-moving crank structure 20 can be adjusted conveniently, so that the movement angle relationship between the manual arm-moving structure enabling the elliptical movement 6 and a pedal arm-moving structure enabling an elliptical movement 67 which are in linkage with the manual arm-moving crank structure 4 and the pedal arm-moving crank structure 20 respectively, and between the corresponding armrest and pedal, and between arms, legs and feet can be adjusted and selected accordingly, at the same time, the distance between the pedal arm-moving crank outer pivot shaft structure 21 and its rotational movement axis, namely the axis of the manual arm-moving middle shaft structure 1 is adjusted and changed accordingly, so that the movement steps of the exerciser, etc. can better meet the needs of the exercise.
(6) A multi-function exercise machine product including both the manual arm-moving structure system enabling the elliptical movement and a foot driven eccentric bearing structure system may be formed (as shown in Figs. 60, and 61).
   A corresponding saddle structure 24 is arranged on a saddle arm-moving structure enabling a near-elliptical movement 29, and the selection and adjustment of its working position is enabled by a corresponding lock adjusting structure; the front end of the saddle arm-moving structure 29 is connected with and in linkage with the outer ring structure 12 of the foot driven eccentric bearing structure system, and the rear end of the saddle arm-moving structure 29 is directly or indirectly matched with a corresponding saddle arm-moving swing rod structure or guide rail structure 30.
   At the same time, the lower ends of the left and right manual arm-moving structures enabling the elliptical movement 6 in alternate or parallel drive states are pivotably connected to forward extension structures 76 of the left and right pedal arm-moving structures enabling the elliptical movement 67, the front ends (front parts) of the left and right pedal arm-moving structures enabling the elliptical movement 67 are pivotably connected to a corresponding pedal crank structure 31, and the pedal crank structure 31, and a pedal crank middle shaft structure 32 are mutually fixed and linked to the inner ring structure 13 of the foot driven eccentric bearing structure system; and the rear ends (rear parts) of the left and right pedal arm-moving structures enabling the elliptical movement 67 may be directly or indirectly matched with a corresponding pedal swing rod structure or guide rail structure 33 (as shown in Fig. 60).
   Another optional situation is as follows: the lower ends of the left and right manual arm-moving structures enabling the elliptical movement 6 in alternate or parallel drive states are pivotably connected to forward extension structures 76 of the left and right pedal arm-moving structures enabling the elliptical movement 67, the front ends (front parts) of the left and right pedal arm-moving structures enabling the elliptical movement 67 are pivotably connected to a corresponding pedal crank structure 31, the middle parts of the left and right pedal arm-moving structures enabling the elliptical movement 67 are directly or indirectly matched with a corresponding swing rod structure 66 or a guide rail structure, and a corresponding pedal structure 23 is arranged at the rear parts of the left and right pedal arm-moving structures enabling the elliptical movement 67 (as shown in Fig. 61).
   New exercise machine products having the movement characteristics of the manual arm-moving structure system enabling the elliptical movement and simultaneously achieving compound movement functions such as exercise bikes, horse riding machines, and elliptical machines may be formed in the above two situations.
(7) A related exercise machine in which the corresponding manual arm-moving structure system enabling the elliptical movement and the pedal arm-moving structure system enabling the elliptical movement at the same side shares a same crank structure system may be formed.
   In particular: both the lower end of the manual arm-moving structure enabling the elliptical movement and the front end of the pedal arm-moving structure system enabling the elliptical movement at the same side are pivotably connected to a corresponding same pivot shaft structure arranged outside the same crank structure or separately pivotably connected to two different pivot shaft structures arranged outside the same crank structure (the former may be as shown in Fig. 64).
   When both the lower end of the manual arm-moving structure enabling the elliptical movement and the front end of the pedal arm-moving structure enabling the elliptical movement at the same side are pivotably connected to the corresponding same pivot shaft structure arranged outside the same crank structure, a corresponding pivoting structure may be distributed laterally along the same pivot axis, or other suitable specific arrangement modes may also be adopted (as shown in Fig. 64).
   Cooperating with the above structural arrangement modes, the corresponding manual arm-moving trajectory control swing rod structure 7 and a pedal arm-moving swing rod structure 66 are separately arranged in the middle of the manual arm-moving structure enabling the elliptical movement 6 and the pedal arm-moving structure enabling the elliptical movement 67 or the corresponding guide rail type or guide wheel type trajectory control structure system is arranged, so that a reverse cross force movement relationship may be formed between the upper part of the manual arm-moving structure enabling the elliptical movement 6 and the rear part of the pedal arm-moving structure enabling the elliptical movement 67 and between the corresponding arms, feet and legs (as shown in Fig. 64).
   When both the lower end of the manual arm-moving structure enabling the elliptical movement and the front end of the pedal arm-moving structure enabling the elliptical movement at the same side are separately pivotably connected to two different pivot shaft structures arranged outside the same crank structure, the setting of the distance between the two different pivot shaft structures and the corresponding crank middle shaft structure may better adapt to the requirements of the structure systems such as the manual arm-moving structure system and the pedal arm-moving structure system and movement characteristics thereof, and the two different pivot shaft structures may be connected through the corresponding transition structure.
9. An exercise machine system capable of directly using the corresponding part of the manual arm-moving structure enabling the elliptical movement to drive the related pedal arm-moving structure enabling the elliptical movement to realize a near-elliptical movement trajectory
   (1) An exercise machine system that directly utilizes the "lower part" of the swing rod type manual arm-moving structure enabling the elliptical movement to drive the related pedal arm-moving structure enabling the elliptical movement to achieve a near-elliptical movement trajectory, and a specific description is as follows:
      1. When the reciprocating pivot shaft structure outside the corresponding swing rod is located under the cycling pivot shaft structure outside the corresponding crank and other structures, as shown in Figs. 34-39 and the like:
         The lower part of the manual arm-moving structure enabling the elliptical movement 6, namely the part below the arm-moving crank pivot shaft structure 5, may be directly used to drive the pedal structure 46 or pedaling structure 47 on the pedal arm-moving structure enabling the elliptical movement 45 to do a movement in a near-elliptical trajectory so as to achieve related exercise machines with a simple, efficient and reliable structure where hand and feet are in a coordination, and can do the corresponding near-elliptical movement.
         One end of the pedal arm-moving structure enabling the elliptical movement 45 is pivotably connected to the lower part of the manual arm-moving structure enabling the elliptical movement 6 or a further downward extension portion thereof, namely a further downward extension structure 48 beyond the (trajectory control) pivot shaft structure 14 at the lower end of the arm-moving structure, the other end of the pedal arm-moving structure enabling the elliptical movement 45 may be provided with a corresponding pedal structure 46 or a pedaling structure 47 or other suitable movement structures, the middle part (or back end) of the pedal arm-moving structure enabling the elliptical movement 45 is pivotably connected to a pedal arm-moving swing rod structure enabling an elliptical movement 49, and the pedal arm-moving swing rod structure enabling the elliptical movement 49 is simultaneously pivotably connected to a corresponding framework structure of the exercise machine by means of a corresponding pivot shaft structure.
         In order to form a better hand-foot coordination process, make coordination of the near-elliptical movement trajectory of the hand and feet and the coordination of the whole body movement higher, make exercise effects better, and make the structure layout relatively more reasonable, the corresponding manual arm-moving trajectory control swing rod bracket structure 8 and the pedal arm-moving swing rod structure enabling the elliptical movement 49 may be respectively located in the front and rear of the manual arm-moving structure enabling the elliptical movement 6, (as shown in Fig. 34).
         For the guide rail type manual arm-moving structure system enabling an elliptical movement, the coordination relationship between the system and the pedal arm-moving structure enabling the elliptical movement 45 and arrangement of other related structures are similar to that of the swing rod type manual arm-moving structure system enabling the elliptical movement, the corresponding "further downward extension part thereof" is "a further downward extension structure" beyond the related pivot shaft structure between the lower end of the arm-moving structure and the manual arm-moving guide wheel connecting plate structure 11.
         In order to realize the corresponding adjustment of the near-elliptical movement trajectory of the feet, it can be further considered to arrange a movable pedal structure 50 and a movable pedal pull rod structure 51 which may move back and forth relatively independently on the pedal arm-moving structure enabling the elliptical movement 45, one end of the movable pedal pull rod structure 51 is pivotably connected to the movable pedal structure 50, and the other end is pivotably connected to the lower part or "a further downward extension part thereof" of the manual arm-moving structure enabling the elliptical movement 6 (as shown in Fig. 35).
         Corresponding structure systems such as saddles in a fixed form or foldable form may be arranged on the above related exercise machine as required (as shown in Fig. 34).
         In addition, the pedal arm-moving structure enabling the elliptical movement 45 and other structural systems also adopt a foldable structure form, so as to make the entire exercise machine more spatially adaptable and more acceptable.
         According to the need, a manual arm-moving trajectory control pivot shaft adjustment structure 55 capable of sliding, positioning and locking along a structure portion, below the manual arm-moving crank outer pivot shaft structure 5, of the manual arm-moving structure enabling the elliptical movement 6 may be arranged, the arm-moving trajectory control pivot shaft structure 14 may be disposed on the manual arm-moving trajectory control pivot shaft adjustment structure 55, by changing the locking working position of the manual arm-moving trajectory control pivot shaft adjustment structure 55 on the manual arm-moving structure enabling the elliptical movement 6, the distance between the arm-moving trajectory control pivot shaft structure 14 and the manual arm-moving crank outer pivot shaft structure 5 may be directly changed, so that the movement trajectory of many structures and the movement coordination relationship between the structures is changed accordingly, so as to better meet the needs of the corresponding movement and exercise process (as shown in Figs. 36, 37, etc.).
         A pedal arm-moving trajectory control pivot shaft adjustment structure 56 capable of sliding, positioning and locking along the pedal arm-moving structure enabling the elliptical movement 45 may be arranged, a corresponding pedal arm-moving trajectory control pivot shaft structure 57 may be arranged on the pedal arm-moving trajectory control pivot shaft adjustment structure 56, and by changing the locking working position of the pedal arm-moving trajectory control pivot shaft adjustment structure 56 on the pedal arm-moving structure enabling the elliptical movement 45, the movement trajectories of many related structures and the movement coordination relationship between the structures may be changed directly or indirectly, so as to better meet the needs of the corresponding movement and exercise process (as shown in Figs. 36, 37, etc.).
         In order to form a better hand-foot coordination process, make coordination of the near-elliptical movement trajectory of the hand and feet and the coordination of the whole body movement higher, make exercise effects better, and make the structure layout relatively more reasonable, the corresponding manual arm-moving trajectory control swing rod bracket structure 8 and the pedal arm-moving swing rod structure enabling the elliptical movement 49 may be respectively located in the front and rear of the manual arm-moving structure enabling the elliptical movement 6, (as shown in Fig. 36, 39, etc.).
         For the guide rail type manual arm-moving structure system enabling an elliptical movement, the coordination relationship between the system and the pedal arm-moving structure enabling the elliptical movement 45 and arrangement of other related structures are similar to that of the swing rod type manual arm-moving structure system enabling the elliptical movement, the lower part of the corresponding manual arm-moving structure enabling the elliptical movement 6 is a (extension) part, below the related pivot shaft structure between the manual arm-moving structure enabling the elliptical movement 6 and the manual arm-moving guide wheel connecting plate structure 11, of the manual arm-moving structure enabling the elliptical movement 6.
         According to the need, the corresponding saddle structure system in a fixed form may be arranged on the above related exercise machine or the saddle structure system in a foldable form may be formed by setting the corresponding saddle arm-moving folding pivot shaft structure 60, etc (as shown in Figs. 36, 39, etc.).
         In addition, by setting the corresponding pedal arm-moving folding pivot shaft structure 58, pedal arm-moving non-folded support structure 59 and so on, the pedal arm-moving structure enabling the elliptical movement 45, the pedal structure 46 and other structure systems can be in a foldable structure form, so that the space adaptability of the whole exercise machine is stronger and easier to accept (as shown in Figs. 37, 38, etc.).
      2. When the reciprocating pivot shaft structure outside the corresponding swing rod is located above the cycling pivot shaft structure outside the corresponding crank and other structures, as shown in Figs. 62, and 63:
         One end of the corresponding pedal arm-moving structure enabling the elliptical movement that may perform a near-elliptical movement 45 is directly pivotably connected to the lower part of the manual arm-moving structure enabling the elliptical movement 6, namely the related structural parts below the manual arm-moving trajectory control swing rod outer pivot shaft structure 14 or the manual arm-moving crank outer pivot shaft structure 5, so that a direct mutual linkage between the manual arm-moving structure enabling the elliptical movement 6 and the pedal arm-moving structure enabling the elliptical movement 45, and between other related linkage structures may be achieved; the middle or the other end of the pedal arm-moving structure enabling the elliptical movement 45 may be pivotably connected to the pedal arm-moving swing rod structure enabling the elliptical movement 49 through the corresponding pivot shaft structure or is in abutting joint and matched with the corresponding guide wheel structure system or the guide rail structure system; and the pedal structure enabling the elliptical movement 46 may be arranged on the pedal arm-moving structure enabling the elliptical movement 45.
   (2) An exercise machine system that directly utilizes the "middle part" of the swing rod type manual arm-moving structure enabling the elliptical movement to drive the related pedal arm-moving structure enabling the elliptical movement to achieve a near-elliptical movement trajectory, and a specific description is as follows:
      Similar to that of the exercise machine system that directly utilizes the lower part of the manual arm-moving structure enabling the elliptical movement to drive the related pedal arm-moving structure enabling the elliptical movement to achieve the near-elliptical movement trajectory, the front end of the corresponding pedal arm-moving structure enabling the elliptical movement 45 is pivotably connected to the "middle part" of the manual arm-moving structure enabling the elliptical movement, namely a part between the manual arm-moving crank outer pivot shaft structure 5 and the manual arm-moving trajectory control pivot shaft structure 14, and the rear end or middle of the corresponding pedal arm-moving structure enabling the elliptical movement 45 is pivotably connected to the corresponding pedal arm-moving swing rod structure enabling the elliptical movement 49 (as shown in Figs. 44, and 45).
      According to the needs, the corresponding central type saddle crankshaft structure system or the central type saddle eccentric bearing structure system may also be arranged on the related exercise machine at the same time, so that the corresponding saddle arm-moving structure and the corresponding saddle structure can also perform an exercise process of near-elliptical movement.
      Different from that of the exercise machine system that directly utilizes the lower part of the manual arm-moving structure enabling the elliptical movement to drive the related pedal arm-moving structure enabling the elliptical movement to achieve the near-elliptical movement trajectory, the former has an opposite direction of movement in the front and rear direction between the pedal arm-moving structure enabling the elliptical movement and the manual arm-moving structure enabling the elliptical movement, while the latter has a same direction of movement in the front and rear direction between the pedal arm-moving structure enabling the elliptical movement and the manual arm-moving structure enabling the elliptical movement.
   (3) An exercise machine system that directly utilizes the "upper part" of the swing rod type manual arm-moving structure enabling the elliptical movement to drive the related pedal arm-moving structure enabling the elliptical movement to achieve a near-elliptical movement trajectory, and a specific description is as follows:
      As shown in Fig. 46, the reciprocating pivot structure 14 outside the related manual arm-moving trajectory control swing rod structure 7 is located below the cycling pivot shaft structure 5 outside the related manual arm-moving crank structure 4, the front end of the pedal arm-moving structure enabling the elliptical movement 45 is directly pivotably connected to the upper part of the manual arm-moving structure enabling the elliptical movement 6, namely a part on the manual arm-moving crank outer pivot shaft structure 5, with the cooperation of other related structure systems, the manual arm-moving structure enabling the elliptical movement 6 and the pedal arm-moving structure enabling the elliptical movement 45, as well as the corresponding arms, feet and legs, can be in a synchronous and same-directional movement relation.
10. (A more specific situation of) a swing rod type manual arm-moving structure enabling an elliptical movement pivotably connected to the cycling pivot shaft structure enabling the elliptical movement, the near-elliptical movement and other suitable form of movement, and related exercise machines thereof.

As shown in Figs. 47, 48, 49, 50, etc., the manual arm-moving structure enabling the elliptical movement 6 is pivotably connected to the manual arm-moving trajectory control swing rod structure 7 at one position thereof through the manual arm-moving trajectory control swing rod outer pivot shaft structure 14, the manual arm-moving structure enabling the elliptical movement 6 is pivotably connected to a cycling pivot shaft structure enabling an elliptical movement or a near-elliptical movement 69 at another position thereof, and the cycling pivot shaft structure 69 may be arranged on the corresponding pedal arm-moving structure enabling the elliptical movement or the near-elliptical movement, or may also be arranged on other related structure systems that can form elliptical or near-elliptical movement trajectories.

The relevant specific situations are explained as follows:
1. In Figs.47, a reverse cross force movement relationship may be formed between the manual arm-moving structure enabling the elliptical movement 6 and the pedal arm-moving structure enabling the elliptical movement 67, and between the corresponding armrest and the pedal, and between the arm, the feet and the leg. Its more specific structure is as follows: by setting a corresponding pedal middle shaft structure 61, pedal middle shaft seat structure 62, pedal middle shaft seat bracket structure 63, pedal crank structure 64, pedal crank outer pivot shaft structure 65, pedal arm-moving structure enabling the elliptical movement 67 and pedal arm-moving swing rod structure enabling the elliptical movement 66, a corresponding rear-drive-type pedal elliptical machine structure system (with the pedal middle shaft structure and the pedal crank structure post-positioned).
   The pedal arm-moving structure enabling the elliptical movement 67 of the rear-drive-type pedal elliptical machine structure system is extended forward by an appropriate length, so as to form a pedal arm-moving forward extension structure enabling an elliptical movement 76 in front of the reciprocating pivot shaft structure 68 between the pedal arm-moving structure enabling the elliptical movement 67 and the pedal arm-moving swing rod structure enabling the elliptical movement 66; the lower part of the manual arm-moving structure enabling the elliptical movement 6 is pivotably connected to the pedal arm-moving forward extension structure enabling the elliptical movement 76 through the corresponding cycling pivot shaft structure 69, the middle of the manual arm-moving structure enabling the elliptical movement 6 is pivotably connected to the manual arm-moving trajectory control swing rod structure 7 and a corresponding movement handle structure is directly or indirectly arranged on the manual arm-moving structure enabling the elliptical movement 6.
   In the above structure system, the manual arm-moving structure enabling the elliptical movement 6 is directly pivotably connected and linked to the pedal arm-moving structure enabling the elliptical movement 67 through the pedal arm-moving forward extension structure enabling the elliptical movement 76 and the cycling pivot shaft structure 69, and after two reverse movement processes of front and back and up and down are respectively realized by relying on the manual arm-moving trajectory control swing rod structure 7 and the pedal arm-moving swing rod structure enabling the elliptical movement 66, and a reverse cross force movement relationship may be formed between the manual arm-moving structure enabling the elliptical movement 6 and the pedal arm-moving structure enabling the elliptical movement 67, and between the corresponding armrest and the pedal, and between the arm, the feet and the leg.
   According to the needs, a corresponding reciprocating manual arm-moving structure enabling a reciprocating movement 77 may be arranged on the pedal arm-moving swing rod structure enabling the elliptical movement 66.
2. On the structure system such as the corresponding guide rail type pedal elliptical machine, the pedal arm-moving forward extension structure 76 may also be a forward extension part in front of a guide wheel structure enabling a reciprocating movement 85 which is located in front of the pedal arm-moving structure and matched with the corresponding guide rail structure 84 (as shown in Fig. 51).
3. On the structure system such as the corresponding guide wheel type pedal elliptical machine, the pedal arm-moving forward extension structure 76 may also be a forward extension part in front of a corresponding guide wheel structure 80 in movement, and the whole guide wheel structure system may be arranged on the corresponding guide wheel support structure 83 (as shown in Fig. 52).
4. According to the needs, on the same and similar exercise machine as shown in Fig. 9, the corresponding manual arm-moving trajectory control swing rod bracket structure 8 may also be directly set on the corresponding pedal arm-moving swing rod bracket structure 70 or other suitable framework structure, so that the corresponding structure system may be simplified (as shown in Figs. 54 and 51).
5. A central eccentric bearing structure system which may be located in the middle of the left and right transverse position may be further arranged on the pedal middle shaft structure and other structure systems of the corresponding exercise machine shown in Fig. 9, an inner ring structure 71 of the eccentric bearing structure system may be directly connected and linked with the pedal middle shaft structure 61 or may be connected and linked with the pedal middle shaft structure 61 through a corresponding angle adjusting mechanism, an outer ring structure 73 of the eccentric bearing structure system may be connected and linked with a corresponding saddle arm-moving structure enabling an elliptical movement 74, the other end of the saddle arm-moving structure enabling the elliptical movement 74 is pivotably connected to a saddle arm-moving swing rod structure enabling an elliptical movement 75 through the corresponding pivot shaft structure, and the saddle structure enabling the elliptical movement 24 with adjustable front and rear and high and low positions may be arranged on the saddle arm-moving structure enabling the elliptical movement 74.
   A structure mode of making the corresponding saddle arm-moving swing rod structure and the manual arm-moving trajectory control swing rod bracket structure arranged independently is adopted in Fig. 66, and a structure mode of making the corresponding saddle arm-moving swing rod structure, the manual arm-moving trajectory control swing rod bracket structure and the pedal arm-moving trajectory control swing rod bracket structure be a same swingable framework structure is adopted in Fig. 67.
   In Figs. 54, 66 and 67, a structure mode of further extending the pedal arm-moving and pedal structure enabling the elliptical movement backward (outward) is adopted, so as to further realize the movement and exercise process of the corresponding near vertical ellipse (the major axis of the ellipse is in the up and down direction) movement trajectory. The corresponding saddle structure system of Fig. 66 is further provided with a handle structure 86 allowing a corresponding exerciser to hold.
   At the same time, according to the need, a corresponding reciprocating manual arm-moving structure 77 may be arranged on the above pedal arm-moving trajectory control swing rod structure 66.
6. In Figs. 48, 49 and 50, the manual arm-moving structure enabling the elliptical movement and the pedal arm-moving structure enabling the elliptical movement, and related corresponding armrests and pedals, arms, feet and legs may form a synchronous movement relationship in the same direction, which has its own characteristics in the specific way and form of implementation.
   In Fig. 48, the middle of the manual arm-moving structure enabling the elliptical movement 6 is pivotably connected to the pedal arm-moving structure 67 of the rear-drive-type pedal elliptical machine through the cycling pivot shaft structure 69, the lower part of the manual arm-moving structure enabling the elliptical movement 6 is pivotably connected to the manual arm-moving trajectory control swing rod structure 7 through the reciprocating pivot shaft structure 14, namely the manual arm-moving trajectory control swing rod outer pivot shaft structure 14, and the upper part of the manual arm-moving structure enabling the elliptical movement 6 is directly or indirectly provided with a corresponding (manual) handle structure.

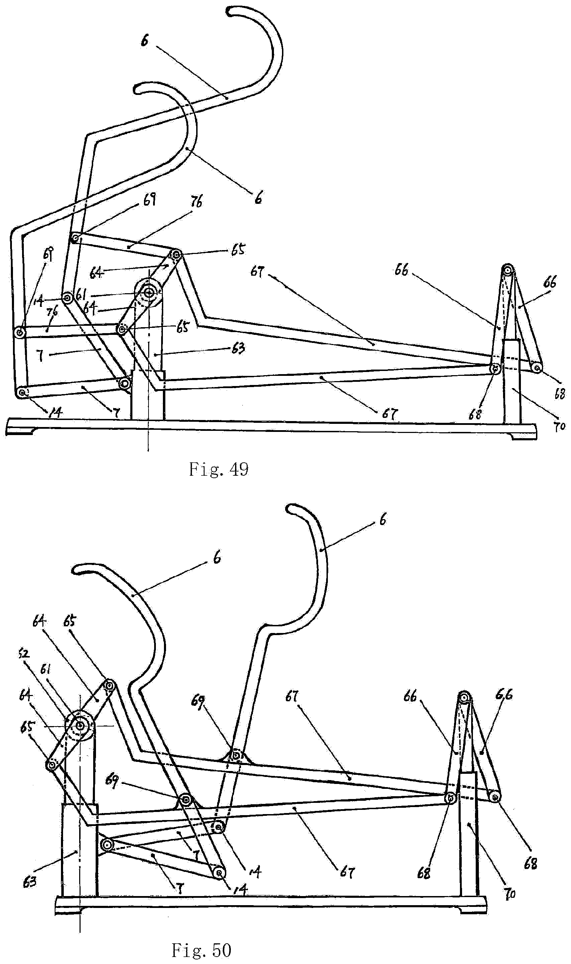

   In Fig. 49, the middle part of the manual arm-moving structure enabling the elliptical movement 6 is pivotably connected to the forward extension structure 76 of the pedal arm-moving structure 67 of a front-drive-type pedal elliptical machine through the cycling pivot shaft structure 69, the lower part of the manual arm-moving structure enabling the elliptical movement 6 is pivotably connected to the manual arm-moving trajectory control swing rod structure 7 through the reciprocating pivot shaft structure, namely the manual arm-moving trajectory control swing rod outer pivot shaft structure 14, and the upper part of the manual arm-moving structure enabling the elliptical movement 6 is directly or indirectly provided with a corresponding (manual) handle structure; and
   In Fig. 50, the middle of the manual arm-moving structure enabling the elliptical movement 6 is pivotably connected to the pedal arm-moving structure 67 of the front-drive-type pedal elliptical machine through the cycling pivot shaft structure 69, the lower part of the manual arm-moving structure enabling the elliptical movement 6 is pivotably connected to the manual arm-moving trajectory control swing rod structure 7 through the reciprocating pivot shaft structure, namely the manual arm-moving trajectory control swing rod outer pivot shaft structure 14, and the upper part of the manual arm-moving structure enabling the elliptical movement 6 is directly or indirectly provided with a corresponding (manual) handle structure.
7. Fig. 65 is also a view of a related exercise machine with a manual arm-moving structure system enabling an elliptical movement directly pivotably connected and linked to a corresponding cycling pivot shaft structure enabling a near-elliptical movement, and the corresponding cycling pivot shaft structure enabling the near-elliptical movement arranged on a corresponding pedal arm-moving structure enabling a (near) elliptical movement.
   In Fig. 65, the swing rod type manual arm-moving structure enabling the elliptical movement is directly pivotably connected and linked to a forward extension structure of a pedal arm-moving structure enabling an elliptical movement in a swing rod type pedal elliptical machine structure system, and a specific structural form may be as follows: the lower end of the manual arm-moving structure enabling the elliptical movement 6 is pivotably connected to the appropriate part of the pedal arm-moving structure 67 of the front-drive-type pedal elliptical machine or the forward extension structure 76 through the cycling pivot shaft structure 69.
   At the same time, cooperating with the above structural arrangement modes, the corresponding manual arm-moving trajectory control swing rod structure 7 and a pedal arm-moving swing rod structure 66 are separately arranged in the middle of the manual arm-moving structure enabling the elliptical movement 6 and the pedal arm-moving structure enabling the elliptical movement 67 or the corresponding guide rail type or guide wheel type trajectory control structure system is arranged, so that a reverse cross force movement relationship may be formed between the upper part of the manual arm-moving structure enabling the elliptical movement 6 and the rear part of the pedal arm-moving structure enabling the elliptical movement 67 and between the corresponding arms, feet and legs (as shown in Fig. 65).
8. Fig. 68 shows a related exercise machine similar to that shown in Fig. 66 and Fig. 67, an obvious difference is that this exercise machine is provided with a corresponding pedal arm-moving trajectory control guide wheel structure 80 and a spring structure 87 capable of playing a role of auxiliary control and energy storage.
11. Other related structure forms and the corresponding exercise machine that can be adopted in the invention are further described as follows:
   (1) The manual arm-moving structure system enabling the elliptical movement may also be combined with an exercise machine system such as bicycles or scooters or treadmills in a common structure form and other suitable structure form, so as to form corresponding new sports and exercise machine system which may be driven by the elliptical movement of the arm at the same time (as shown in Figs. 22-27, etc.).
      A more specific description is as follows:
      1. The manual arm-moving structure enabling the elliptical movement may be combined with a skateboard type bicycle structure system, that is, the manual arm-moving structure enabling the elliptical movement may be arranged on a handlebar structure system of a skateboard type bicycle, so as to form a corresponding manual skateboard type bicycle which may be driven by the elliptical movement of the arm at the same time (as shown in Figs. 22a and 22b).
      2. The manual arm-moving structure enabling the elliptical movement may be combined with a frog scooter (bicycle) structure system, that is, the manual arm-moving structure enabling the elliptical movement may be arranged on a handlebar structure system of a frog scooter (bicycle), so as to form a corresponding manual frog scooter (bicycle) which may be driven by the elliptical movement of the arm at the same time (as shown in Figs. 23a and 23b).
      3. The manual arm-moving structure enabling the elliptical movement may be combined with a ski (scooter) bicycle structure system, namely a (scooter) bicycle structure system driven by left and right side swinging and side climbing of both legs similar to alpine skiing, that is, the manual arm-moving structure enabling the elliptical movement may be arranged on a handlebar structure system of a ski (scooter) bicycle, so as to form a corresponding manual ski (scooter) bicycle which may be driven by the elliptical movement of the arm at the same time (as shown in Figs. 24a and 24b).
      4. The swing rod type manual arm-moving structure enabling the elliptical movement used as a hand drive system may be further directly arranged on a front fork of a bicycle or even a front wheel hub (a bearing seat) and other structures, so as to form a corresponding exercise bicycle (scooter) with a swing rod type manual arm-moving drive system enabling an elliptical movement (as shown in Figs. 25, 26, etc.).

The manual arm-moving middle shaft structure 1 of the manual arm-moving structure enabling the elliptical movement and a front wheel drive shaft structure of a bicycle (scooter) may be combined into one, that is, the manual arm-moving crank structure 4, the manual arm-moving crank outer pivot shaft structure 5 and other structures are directly arranged on the front wheel drive shaft structure of the bicycle, so that the front wheel drive shaft structure of the bicycle may directly become the manual arm-moving middle shaft structure 1 at the same time, and the corresponding swing rod type or other forms of manual arm-moving structure enabling the elliptical movement directly drives the front wheel drive shaft structure and the front wheel of the bicycle to move together (as shown in Fig. 25).

According to the need, a corresponding one-way bearing structure (a flywheel structure) may be arranged between the manual arm-moving middle shaft structure 1 of the manual arm-moving structure system enabling the elliptical movement, and the front wheel drive shaft structure of the bicycle, so that when the front wheel of the bicycle is in a forward movement state, the swing rod type manual arm-moving structure system enabling the elliptical movement used as the hand drive system may be in a corresponding synchronous movement state, and may also be in a relatively complete static state.

According to the need, an inner and outer variable speed structure system may be arranged between the manual arm-moving middle shaft structure 1 of the manual arm-moving structure system enabling the elliptical movement, and the front wheel drive shaft structure of the bicycle,

so that the relative relationship between the movement angular velocity of the front wheel of the bicycle and the movement angular velocity of the manual arm-moving structure system enabling the elliptical movement used as the hand drive system may be adjusted, and the magnitude of the driving torque may also be adjusted, and the whole exercise bicycle (scooter) has stronger movement ability and environmental adaptability.

The corresponding pedal drive system enabling the elliptical movement or other suitable form of pedal driving system may be arranged on the bicycle (scooter) with the corresponding manual arm-moving (driving) structure system enabling the elliptical movement, so as to make the function of relevant sports and exercise bicycles more abundant and powerful (as shown in Fig. 26).

5. The left and right manual arm-moving drive systems enabling the elliptical movement are separately arranged, that is, independent left middle shaft seat structure and right middle shaft seat structure and related linked structures and systems may be used at the same time, so that the setting position, direction and adjustment of left and right middle shaft structures have greater selectivity and convenience, the setting position of the left and right manual arm-moving drive systems enabling the elliptical movement, the selectivity of the space movement trajectory of the left and right manual arm-moving drive systems enabling the elliptical movement, the combination ability of the relevant structures and the exercise effect of the user are greatly improved.

For example, the left and right manual arm-moving drive systems enabling the elliptical movement may be directly arranged on both sides of the body, so as to better realize the needs of simulating skiing and rowing (as shown in Figs. 8a and 8b).

For another example, the left and right manual arm-moving drive systems enabling the elliptical movement may be arranged in a position area of left and right sides of the front part of a main body of a treadmill, so as to be better integrated with the treadmill and running movement (as shown in Figs. 27a and 27b).

(2) In the manual arm-moving structure system enabling the elliptical movement, the manual arm-moving crank structure 4 directly pivotably connected to the manual arm-moving structure enabling the elliptical movement 6 may be designed as a structure form with an adjustable length (an acting force arm length), specifically, a crank base structure 35 may be arranged on the corresponding manual arm-moving middle shaft structure 1, meanwhile, a position variable manual arm-moving crank structure 4 capable of realizing position changing, position adjusting and position locking on the crank base structure 35 is arranged, and one end of the position variable manual arm-moving crank structure 4 is pivotably connected to the manual arm-moving structure enabling the elliptical movement 6 through the corresponding manual arm-moving crank outer pivot shaft structure 5 (as shown in Fig. 30).

The locking and fixing relationship between the crank base structure 35 and the position variable manual arm-moving crank structure 4 may meet the requirement that the axis of the manual arm-moving crank outer pivot shaft structure 5 coincides exactly with the axis of the manual arm-moving middle shaft structure 1.

When the axis of the manual arm-moving crank outer pivot shaft structure 5 coincides exactly with the axis of the manual arm-moving middle shaft structure 1, the manual arm-moving structure enabling the elliptical movement 6 will lose the ability to do the elliptical movement, and may be used as a corresponding fixed armrest structure system.

The crank base structure 35 may also be arranged on the pedal crank pivot shaft structure 36, the locking and fixing relationship between the corresponding crank base structure 35 and the position variable manual arm-moving crank structure 4 may meet the requirement that the axis of the manual arm-moving crank outer pivot shaft structure 5 coincides exactly with the axis of the manual arm-moving middle shaft structure 1 and the requirements that the position variable manual arm-moving crank structure 4 and a pedal crank structure 44 directly connected with the manual arm-moving middle shaft structure may be in an alternate driving relationship state with a difference of 180 degrees, and may be in a completely synchronous driving relationship state through further displacement adjustment, so that the corresponding overall exercise machine system has a richer form of movement and a richer selectable function (as shown in Figs. 17a and 17b).

(3) A related exercise machine product including both the manual arm-moving structure system enabling the elliptical movement its corresponding hand and foot linked swing rod structure system may be formed.

A hand and foot linked swing rod structure 37 which moves coaxially and synchronously with the manual arm-moving trajectory control swing rod structure 7 may be arranged, the hand and foot linked swing rod structure 37 and the manual arm-moving trajectory control swing rod structure 7 may synchronously perform swing movement around a trajectory control pivot shaft structure 39 between the manual arm-moving trajectory control swing rod structure 7 and the manual arm-moving trajectory control swing rod bracket structure 8, and the angle between the hand and foot linked swing rod structure 37 and the manual arm-moving trajectory control swing rod structure 7 is relatively fixed or adjustable; the other end of the hand and foot linked swing rod structure 37 is pivotably connected to the pedal structure enabling the elliptical movement 23 or a pedal-pedal lever (pedal framework) structure enabling an elliptical movement 27 or other relevant suitable structures through the corresponding pivot shaft structure, so as to realize the mutual linkage and organic cooperation between the manual arm-moving elliptical movement and pedaling pedal elliptical movement, so as to make the movement mode of the whole human body richer and more suitable (as shown in Fig. 28).

The hand and foot linked swing rod structure 37 which can move separately or coaxially and synchronously with the manual arm-moving trajectory control swing rod structure 7 may be arranged, the hand and foot linked swing rod structure 37 may be provided with a hand and foot linked connecting plate structure 38 which may be connected with the manual arm-moving trajectory control swing rod structure 7 or other related movement structures, a plurality of linkage connecting lock hole structures 40 may be arranged on the corresponding equal radius arc with the axis of the trajectory control pivot shaft structure 39 as a circle center on the hand and foot linked connecting plate structure 38, the corresponding linkage connecting lock hole structure may also be arranged on the manual arm-moving trajectory control swing rod structure 7, and through the corresponding locking adjustment structure, the manual arm-moving trajectory control swing rod structure 7 and the selected appropriate linkage connecting lock hole structure 40 may be mutually locked, so that the coaxially arranged manual arm-moving trajectory control swing rod structure 7 and hand and foot linked swing rod structure 37 may be in the angle locking state of the required position, and the mutual linkage process between them may be realized (as shown in Fig. 29).

A locking connecting plate structure 41 is arranged on the manual arm-moving trajectory control swing rod bracket structure 8, a plurality of locking connecting lock hole structures 42 may be arranged on the corresponding equal radius arc with the axis of the trajectory control pivot shaft structure 39 as a circle center on the locking connecting plate structure 41, the corresponding locking connecting lock hole structure may also be arranged on the manual arm-moving trajectory control swing rod structure 7, and through the corresponding locking adjustment structure, the manual arm-moving trajectory control swing rod structure 7 and the selected appropriate locking connecting lock hole structure 42 may be mutually locked, so that the coaxially arranged manual arm-moving trajectory control swing rod structure 7 and manual arm-moving trajectory control swing rod bracket structure 8 may be in the angle locking state of the required position, the manual arm-moving structure enabling the elliptical movement 6 pivotably connected to the manual arm-moving trajectory control swing rod structure 7 is also locked on the corresponding position, and is correspondingly in a functional state of a fixed armrest and a fixed handle with an adjustable position (as shown in Figs. 28 and 29).

(4) A related exercise machine product including both the manual arm-moving structure system enabling the elliptical movement and the manual arm-moving structure system enabling the reciprocating movement may be (further) formed (as shown in Fig. 29).

According to the need, a manual arm-moving structure enabling a reciprocating movement 43 may be further arranged on the manual arm-moving structure enabling the elliptical movement and other structure systems, the lower end of the manual arm-moving structure enabling the reciprocating movement 43 is pivotably connected to the trajectory control pivot shaft structure 39, and the corresponding linkage connecting lock hole structure 40 and the locking connecting lock hole structure 42 may also be arranged on the manual arm-moving structure enabling the reciprocating movement 43; in this way, on one hand, the manual arm-moving structure enabling the reciprocating movement 43 and the selected appropriate linkage connecting lock hole structure 40 may be mutually locked through the corresponding locking adjustment structure, so that the coaxially arranged manual arm-moving structure enabling the reciprocating movement 43 and hand and foot linked swing rod structure 37 may be in the angle locking state of the required position, and the mutual linkage process between them may be realized; on the other hand, through the corresponding locking adjustment structure, the manual arm-moving structure enabling the reciprocating movement 43 and the selected appropriate locking connecting lock hole structure 42 may be mutually locked, so that the coaxially arranged manual arm-moving structure enabling the reciprocating movement 43 and manual arm-moving trajectory control swing rod bracket structure 8 may be in the angle locking state of the required position, the manual arm-moving structure enabling the reciprocating movement 43 is also locked on the corresponding position, and is correspondingly in a functional state of a fixed armrest and a fixed handle with an adjustable position (as shown in Fig. 29).

During the use, when only feet and legs are selected to do the corresponding elliptical movement and other movements, while the arms (arm-moving) do not do any movement, the manual arm-moving trajectory control swing rod structure 7 and the manual arm-moving structure enabling the reciprocating movement 43, and the corresponding locking connecting lock hole structure 42 on the locking connecting plate structure 41 may be mutually locked by the corresponding lock hole structure and the corresponding locking adjustment structure, so that the manual arm-moving structure enabling the reciprocating movement 43, the manual arm-moving trajectory control swing rod structure 7 and the manual arm-moving structure enabling the elliptical movement 6 are in the corresponding fixed position.

During the use, when the feet and legs are selected to do the corresponding elliptical movement, while the hands and arms do the near-elliptical movement at the same time, the manual arm-moving trajectory control swing rod structure 7 and the corresponding linkage connecting lock hole structure 40 on the hand and foot linked connecting plate structure 38 may be mutually locked by the corresponding lock hole structure and the corresponding locking adjustment structure, so that the hands, feet, arms and legs may be in the corresponding linkage movement state in a near-elliptical trajectory;

At the same time, the manual arm-moving structure enabling the reciprocating movement 43 and the corresponding locking connecting lock hole structure 42 on the locking connecting plate structure 41 may be mutually locked by the corresponding lock hole structure and the corresponding locking adjustment structure, so that the manual arm-moving structure enabling the reciprocating movement 43 is in the corresponding fixed position.

During the use, when the feet and legs are selected to do the corresponding elliptical movement, and the arm is selected to do the reciprocating swing trajectory movement,

the manual arm-moving structure enabling the reciprocating movement 43 the corresponding linkage connecting lock hole structure 40 on the hand and foot linked connecting plate structure 38 may be mutually locked by the corresponding lock hole structure and the corresponding locking adjustment structure, so that the arm may perform the movement and exercise of the corresponding reciprocating swing trajectory together with the manual arm-moving structure enabling the reciprocating movement 43;

At the same time, the manual arm-moving trajectory control swing rod structure 7 and the corresponding locking connecting lock hole structure 42 on the locking connecting plate structure 41 may be mutually locked by the corresponding lock hole structure and the corresponding locking adjustment structure, so that the manual arm-moving trajectory control swing rod structure 7 and the manual arm-moving structure enabling the elliptical movement 6 are in the corresponding fixed position.

During the use, the manual arm-moving trajectory control swing rod structure 7 and the manual arm-moving structure enabling the reciprocating movement 43, and the corresponding linkage lock hole structure 42 on the hand and foot linked connecting plate structure 38 may be mutually locked by the corresponding lock hole structure and the corresponding locking adjustment structure, so that the manual arm-moving structure enabling the reciprocating movement 43, the manual arm-moving trajectory control swing rod structure 7 and the manual arm-moving structure enabling the elliptical movement 6 are in a state of direct connection and linkage with the hand and foot linked swing rod structure 37. Under the above circumstances, the exercise process and needs of two people doing corresponding arm movements at the same time may be realized.

The separation and locking between the hand and foot linked swing rod structure 37 and the manual arm-moving structure enabling the reciprocating movement 43, or the manual arm-moving trajectory control swing rod structure 7 and the manual arm-moving structure enabling the elliptical movement 6, and the determination of the relationship and state of the separation and synchronization may also be realized by using and relying on other suitable structural methods.

(5) A related exercise machine including both the manual arm-moving structure enabling the elliptical movement and a central crankshaft structure system may be formed.

1. A related exercise machine with the central crankshaft structure system

As shown in Fig. 30 and Fig. 41, when left and right manual arm-moving structures enabling the elliptical movement 6 are simultaneously arranged, and left and right swing rod type manual arm-moving trajectory control structure systems and other related framework structure systems are correspondingly arranged, the corresponding crankshaft structure system may be arranged between the left and right manual arm-moving middle shaft structures 1, and the manual arm-moving middle shaft seat structure 2.

The corresponding crankshaft structure system may be composed of a crankshaft crank structure 52, a crankshaft crank outer pivot shaft structure 53, etc., and the crankshaft crank structure 52 and the left and right manual arm-moving middle shaft structures 1 adopt a completely fixed connection or a separable connection, namely a connection method that may be fixed and separable to each other.

The rear end of the saddle arm-moving structure 29 may be directly or indirectly matched with the corresponding saddle arm-moving swing rod structure 54 or the corresponding guide rail structure.

At the same time, a corresponding saddle arm-moving structure 29 is arranged, and the front end or front part of the saddle arm-moving structure 29 is pivotably connected to the saddle crankshaft crank outer pivot shaft structure 53, and the rear end or the rear part or the middle part of the saddle arm-moving structure 29 is pivotably connected to the saddle arm-moving swing rod structure 54; or a corresponding saddle arm-moving trajectory control structure system is arranged, and the saddle arm-moving structure 29 is matched with the saddle arm-moving trajectory control structure, namely a guide rail structure through a correspondingly arranged roller structure and the like (as shown in Figs. 30 and 41).

A corresponding position adjustable variable saddle structure 24 is arranged on the saddle arm-moving structure 29, or a saddle structure which may slide back and forth on the saddle arm-moving structure 29 to do a movement like rowing and the like, and the corresponding saddle arm-moving structure 29 may adopt a guide rail or other suitable structure form.

2. A related exercise machine with a central eccentric bearing structure system

As shown in Figs. 4, 8 and 9, when left and right manual arm-moving structures enabling the elliptical movement 6 are simultaneously arranged, and left and right swing rod type manual arm-moving trajectory control structure systems and other related framework structure systems are correspondingly arranged, the corresponding eccentric bearing structure system may be arranged between the left and right manual arm-moving middle shaft structures 1, and the manual arm-moving middle shaft seat structure 2.

The eccentric bearing structure system may be composed of the corresponding eccentric bearing outer ring structure 12, eccentric bearing inner ring structure 13, etc., and the eccentric bearing inner ring structure 13 and the left and right manual arm-moving middle shaft structures 1 adopt a completely fixed connection or a separable connection, namely a connection method that may be fixed and separable to each other.

The eccentric bearing outer ring structure 12 is connected and linked with the front end or front part of the corresponding saddle arm-moving structure 29, the rear end or the rear part or the middle part of the saddle arm-moving structure 29 is pivotably connected to the saddle arm-moving swing rod structure 54; or a corresponding saddle arm-moving trajectory control structure system is arranged, and the saddle arm-moving structure 29 is matched with the corresponding saddle arm-moving trajectory control structure, namely a guide rail structure through a correspondingly arranged roller structure and the like (as shown in Figs. 31, 33, 39, etc.).

A corresponding position adjustable variable saddle structure 24 is arranged on the saddle arm-moving structure 29, or a saddle structure which may slide back and forth on the saddle arm-moving structure 29 to do a movement like rowing and the like, and the corresponding saddle arm-moving structure 29 may adopt a guide rail or other suitable structure form.

(6) A related exercise machine including the corresponding central crankshaft structure system or the central eccentric bearing structure system, and the corresponding arm-moving structure system enabling the hand and foot elliptical movement may be further formed.

As shown in Figs. 31, 39, 40, 41, etc., on the basis of the manual arm-moving structure system enabling the elliptical movement with the central crankshaft structure system or the central eccentric bearing structure system, through the corresponding settings, the corresponding pedal structure system, pedal arm-moving structure system and other structure systems that may realize near-elliptical movement are further arranged, so as to form a related exercise machine which not only includes the corresponding central crankshaft structure system or the central eccentric bearing structure system to realize the corresponding near-elliptical movement of the saddle structure and the like, but also includes a corresponding structure system capable of realizing the near-elliptical movement of hands and feet.

A first form of the corresponding pedal arm-moving related structure system enabling the elliptical movement is as follows: as shown in Fig. 31, left and right pedal crank structures 20 opposite to the left and right manual arm-moving crank structures 4 are arranged on the left and right manual arm-moving crank outer pivot shaft structures 5, left and right pedal crank pivot shaft structures 21 are arranged at the other ends of the left and right pedal crank structures 20, and left and right pedaling structures enabling a circular movement are arranged on the left and right pedal crank pivot shaft structures 21; the left and right pedal crank pivot shaft structures 21 may be directly or indirectly connected and linked to the pedal arm-moving structure enabling the elliptical movement 45 which generally performs near-elliptical movement.

The corresponding saddle structure 24 may be arranged to cooperate with the left and right pedal arm-moving structures enabling the elliptical movement 45 and the like, and the left and right pedal arm-moving swing rod structures enabling the elliptical movement 49 may be arranged to be pivotably connected and matched with the left and right pedal arm-moving structures enabling the elliptical movement 45 (as shown in Fig. 31).

By setting the corresponding angle changing mechanism, the left and right pedal crank structures 20 may adopt a completely parallel angular positional relation to support the corresponding movement forms such as horse riding machines, and the left and right pedal crank structures 20 may also adopt a 180-degree angular positional relation to support the corresponding exercise bike movement, elliptical machine movement, etc. (as shown in Fig. 31).

A second form of the corresponding pedal arm-moving structure system enabling the elliptical movement is as follows: the lower end part of the manual arm-moving structure enabling the elliptical movement is directly used to drive the related pedal arm-moving structure system enabling the elliptical movement to achieve a near-elliptical movement trajectory, and its more specific structure may be basically the same as the above situation (as shown in Figs. 39, 40 and 41).

By setting the corresponding angle changing mechanism, the left and right manual arm-moving crank structures 4, the left and right manual arm-moving structures enabling the elliptical movement 6, the left and right pedal arm-moving structures enabling the elliptical movement 45 are respectively in an angular positional relationship that is completely parallel or 180 degrees apart from each other.

When the angular position relationship that is completely parallel is adopted, the corresponding movement forms such as horse riding machines may be supported. At this time, through the adjustment of the corresponding angle changing mechanism, the saddle structure 24 above the saddle arm-moving structure 29 may be made to be completely stationary together with the saddle arm-moving structure 29, or to move in a near-elliptical trajectory together with the saddle arm-moving structure 29, so as to be more close to the real horse riding movement or wave rowing movement.

When the angular position relationship that is 180 degrees apart from each other is adopted, the corresponding movement forms such as exercise bikes and elliptical machines can be supported. At this time, through the adjustment of the corresponding angle changing mechanism, the saddle structure 24 above the saddle arm-moving structure 29 may be made to be completely stationary together with the saddle swing arm structure 29, so as to better complete the corresponding exercise bike movement, elliptical machine movement and so on.

The corresponding foldable structure form that may be further realized may be as shown in Figs. 41, 42 and 43.

(7) A related exercise machine capable of relying on the corresponding eccentric bearing system to realize the pedal arm-moving near-elliptical movement

As shown in Figs. 32, and 33, the corresponding eccentric bearing structure system, namely the pedal arm-moving eccentric bearing structure system capable of driving the pedal arm-moving structure and the like to do a near-elliptical movement may be arranged on an exercise machine with the manual arm-moving structure system enabling the elliptical movement or other related exercise machines.

The pedal arm-moving eccentric bearing structure system may also be composed of the corresponding eccentric bearing outer ring structure 12, eccentric bearing inner ring structure 13, etc., the eccentric bearing outer ring structure 12 is connected to the front part of the corresponding pedal arm-moving structure 45, and the rear or middle part of the pedal arm-moving structure 45 is pivotably connected to the corresponding pedal arm-moving swing rod structure 49; the eccentric bearing inner ring structure 13 is directly or indirectly connected with the manual arm-moving middle shaft structure 1, namely the eccentric bearing inner ring structure 13 and the manual arm-moving middle shaft structure 1 are either directly connected or interconnected, linked or respectively driven through corresponding clutches and other structures.

Through the setting of the corresponding connection angle relationship or the adjustment of the related angle adjusting structure system, the corresponding manual arm-moving structure enabling the elliptical movement and the pedal arm-moving structure enabling the elliptical movement may be in a same direction movement relationship state of synchronization with each other, or in a reverse movement relationship state of synchronization with each other, or in other suitable required movement relationship states.

According to the needs, only one set of pedal arm-moving eccentric bearing structure system and its corresponding pedal arm-moving structure system enabling the elliptical movement may be arranged on the related exercise machine, this set of pedal arm-moving eccentric bearing structure system may be generally arranged between the left and right manual arm-moving structure systems enabling the elliptical movement, so as to form a central pedal arm-moving eccentric bearing structure system.

According to the needs, left and right pedal arm-moving eccentric bearing structure systems and the corresponding left and right pedal arm-moving structure systems enabling the elliptical movement may be arranged on the related exercise machine, and the left and right pedal arm-moving eccentric bearing structure systems may be respectively connected and matched with the left and right manual arm-moving structure systems enabling the elliptical movement, so that a left and right split type pedal arm-moving eccentric bearing structure system may be formed (as shown in Figs. 32, and 33).

When the left and right pedal arm-moving eccentric bearing structure systems and the corresponding left and right pedal arm-moving structure systems enabling the elliptical movement are simultaneously arranged, according to the need, the central saddle crankshaft structure system or the central saddle eccentric bearing structure system and the corresponding saddle arm-moving structure, and saddle structure may be arranged at the same time (as shown in Figs. 32, and 33, respectively).

(8) A corresponding adjustable center-type eccentric bearing structure system may be arranged on the related exercise machine.

The adjustable center-type eccentric bearing structure system-a position adjustable adjusting shaft structure is arranged on the corresponding eccentric bearing inner ring structure 13, by adjusting and changing the setting position of the adjusting shaft structure, the eccentricity of the whole eccentric bearing and the movement trajectory and swing amplitude of the eccentric bearing inner ring structure 13, the eccentric bearing outer ring structure 12 and the corresponding manual arm-moving structure or pedal arm-moving structure or saddle arm-moving structure connected and linked with each other or other related structure systems may be changed, so as to better meet the needs of people in different sports and exercise processes.

(9) Other related structure systems, etc.
1. According to the need, a manual arm-moving structure enabling a reciprocating movement 77 may be arranged on the corresponding manual arm-moving trajectory control swing rod structure 7, so that a related exercise machine with both the manual arm-moving structure enabling the elliptical movement and the manual arm-moving structure enabling the reciprocating movement may be formed (as shown in Fig. 57).
2. According to the need, a corresponding angle adjusting plate angle adjusting disc structure 78 or other suitable angle adjusting structure system may be further arranged on the corresponding manual arm-moving trajectory control swing rod structure 7, in this way, the working angle of the manual arm-moving structure enabling the reciprocating movement 77 which is further arranged may be adjusted to enhance its adaptability to the whole exercise machine (as shown in Fig. 58).
3. By setting the corresponding angle adjusting plate structure or angle adjusting disc structure 79 or other suitable angle adjusting structure system on the manual arm-moving structure enabling the elliptical movement of the related exercise machine, the related armrest structure part on the manual arm-moving structure enabling the elliptical movement 6 may be made into a high-efficiency structure system with high adaptability, which may perform a plurality of working angle adjustments, and even may perform setting and adjustment in a nearly arbitrary angle within an angle range of 360 degrees, and may operate in all directions (as shown in Fig. 59).
4. According to the need, the armrest (etc.) structure system at the upper part of the manual arm-moving structure enabling the elliptical movement 6 may be arranged as a composite structure and a composite structure system, which includes two or more sets of armrest (etc.) structures with different widths and heights at the same time.
5. The relatively fixed pedal structure 34 may be arranged on the pedal arm-moving structure enabling the elliptical movement 67, and its specific form may be as follows: the middle part of the relatively fixed pedal structure 34 is directly pivotably connected to a suitable position of the pedal arm-moving structure enabling the elliptical movement 67, the two ends of the relatively fixed pedal structure 34 and the pedal arm-moving structure enabling the elliptical movement 67 may be connected by a spring or other suitable structures, so that the whole movement trajectory and movement process of the relatively fixed left and right pedal structures 34 and feet and the like are more in line with the needs of the human exercise process and the like (as shown in Fig. 56).

## Claims

1. An exercise machine for a near-elliptical arm movement, comprising at least one set of manual arm-moving structure enabling an elliptical movement, at least one set of reciprocating pivot shaft structure enabling a linear or curved reciprocating movement or at least one set of restriction and control guide rail structure system enabling a reciprocating movement or at least one set of restriction and control guide wheel structure system enabling a reciprocating movement, at least one set of cycling pivot shaft structure enabling a circular movement, an elliptical movement, a near-elliptical movement, or other suitable form of full-cycle movement, a corresponding linkage structure, a framework structure, and other related structures and systems, wherein the manual arm-moving structure enabling the elliptical movement is pivotably connected to the cycling pivot shaft structure at one position thereof, and performs a corresponding circular movement, elliptical movement, near-elliptical movement, or other suitable form of full-cycle movement, and the manual arm-moving structure enabling the elliptical movement is pivotably connected to the reciprocating pivot shaft structure at another position or another portion thereof, or performs a linear or curved, or other suitable form of bidirectional reciprocating movement under restriction and control of a related guide wheel structure system or guide rail structure system; other portions of the manual arm-moving structure enabling the elliptical movement perform a near-elliptical movement or other movements in a corresponding trajectory under the collective action of structure systems related to the full-cycle movement or the bidirectional reciprocating movement, an arm of a user is also moved in a near-elliptical trajectory or other corresponding trajectory by means of a corresponding handle structure directly or indirectly provided on the manual arm-moving structure enabling the elliptical movement, so that a movement mode in a near-elliptical trajectory or other corresponding trajectory of a single arm and related products thereof can be achieved, and a hand-foot linkage movement mode with new characteristics and advantages and corresponding new exercise bikes, elliptical machines, horse riding machines, skiing machines or other new exercise and sports apparatus products in suitable forms can also be further formed;
the cycling pivot shaft structure is a pivot shaft structure arranged outside a corresponding crank structure enabling a full-cycle movement, or a corresponding crankshaft structure, or a pivot shaft structure arranged on a corresponding eccentric bearing outer ring structure, or a corresponding pivot shaft structure arranged on a pedal arm-moving structure enabling a (near) elliptical movement, or a corresponding pivot shaft structure arranged on a related structure system that performs a (near) elliptical movement or other suitable form of full-cycle movement;
the reciprocating pivot shaft structure can be a pivot shaft structure arranged outside a corresponding trajectory control swing rod structure, or a pivot shaft structure enabling a bidirectional reciprocating movement arranged on other suitable structure systems; and
the reciprocating pivot shaft structure pivotably connected to the manual arm-moving structure enabling the elliptical movement is located below or above a corresponding cycling pivot shaft structure or located on other suitable relative positions.

2. The exercise machine according to claim 1, **characterized by** comprising at least one set of manual arm-moving structure enabling an elliptical movement, at least one set of a reciprocating pivot shaft structure enabling a linear or curved reciprocating movement or at least one system for a restriction and control guide rail structure enabling a reciprocating movement or at least one system for a restriction and control guide wheel structure enabling a reciprocating movement, at least one set of cycling pivot shaft structure enabling a circular movement, an elliptical movement, a near-elliptical movement, or other suitable form of full-cycle movement, a corresponding linkage structure, a framework structure, and other related structures and systems, wherein the exercise machine is **characterized in that** the manual arm-moving structure enabling the elliptical movement is pivotably connected to the cycling pivot shaft structure at one position thereof, and performs a corresponding circular movement, elliptical movement, near-elliptical movement, or other suitable form of full-cycle movement, and the manual arm-moving structure enabling the elliptical movement is pivotably connected to the reciprocating pivot shaft structure at another position or another portion thereof, or performs a linear, curved, or other suitable form of bidirectional reciprocating movement under restriction and control of a related guide wheel structure system or guide rail structure system; other portions of the manual arm-moving structure enabling the elliptical movement perform a near-elliptical movement or other movements in a corresponding trajectory under the collective action of structure systems related to the full-cycle movement or the bidirectional reciprocating movement, an arm of a user is also moved in a near-elliptical trajectory or other corresponding trajectory by means of a corresponding handle structure directly or indirectly provided on the manual arm-moving structure enabling the elliptical movement, so that a movement mode in a near-elliptical trajectory or other corresponding trajectory of a single arm and related products thereof can be achieved, and a hand-foot linkage movement mode with new characteristics and advantages and corresponding new exercise bikes, elliptical machines, horse riding machines, skiing machines or other new exercise and sports apparatus products in suitable forms can also be further formed;
the cycling pivot shaft structure is a pivot shaft structure arranged outside a corresponding crank structure enabling a full-cycle movement, or a corresponding crankshaft structure, or a pivot shaft structure arranged on a corresponding eccentric bearing outer ring structure, or a corresponding pivot shaft structure arranged on a pedal arm-moving structure enabling a (near) elliptical movement, or a corresponding pivot shaft structure arranged on a related structure system that performs a (near) elliptical movement or other suitable form of full-cycle movement;
the reciprocating pivot shaft structure can be a pivot shaft structure arranged outside a corresponding trajectory control swing rod structure, or a pivot shaft structure enabling a bidirectional reciprocating movement and arranged on other suitable structure systems;
the reciprocating pivot shaft structure pivotably connected to the manual arm-moving structure enabling the elliptical movement is located below or above a corresponding cycling pivot shaft structure or above other suitable relative positions; and
the left and right manual arm-moving structures enabling the elliptical movement are in a working relationship state of completely parallel or having 180-degree difference or other suitable angle difference by setting a corresponding angle changing mechanism.

3. The exercise machine according to claim 1 or 2, **characterized in that** a swing rod type manual arm-moving structure system enabling an elliptical movement and related exercise machines thereof can be formed, wherein the swing rod type manual arm-moving structure system enabling the elliptical movement adopts a structure form of combining the corresponding swing rod structure system with the cycling pivot shaft structure enabling the circular movement, or a suitable specific structure form of combining the corresponding swing rod structure system with the cycling pivot shaft structure enabling the elliptical movement, the near-elliptical movement, or other suitable form of full-cycle movement; and
the swing rod structure system is composed of a corresponding swing rod bracket structure, a swing rod structure, a swing rod pivot shaft structure and other related structures, and the corresponding manual arm-moving structure enabling the elliptical movement is pivotably connected to the swing rod structure at one position thereof by the corresponding pivot shaft structure, and is pivotably connected to the corresponding crank structure, crankshaft structure, eccentric bearing outer ring structure, pedal arm-moving structure enabling the elliptical movement, other corresponding structure enabling an elliptical movement or related structure enabling other suitable form of full-cycle movement at another position thereof by the corresponding pivot shaft structure; and the related exercise machine is provided with at least one set of swing rod type manual arm-moving structure system enabling the elliptical movement.

4. The exercise machine according to claim 1 or 2 or 3, **characterized in that** relying on a corresponding manual arm-moving middle shaft structure (1), one set of manual arm-moving crank structure (4) and one set of manual arm-moving crank outer pivot shaft structure (5) are arranged at one side of a manual arm-moving middle shaft structure (1), a manual arm-moving middle shaft seat structure (2) and a manual arm-moving middle shaft seat bracket structure (3) or left and right manual arm-moving crank structures (4) and left and right manual arm-moving crank outer pivot shaft structures (5) are simultaneously arranged at both sides of a manual arm-moving middle shaft structure (1), a manual arm-moving middle shaft seat structure (2) and a manual arm-moving middle shaft seat bracket structure (3); at the same time, one set of manual arm-moving structure enabling an elliptical movement (6) or left and right manual arm-moving structures enabling an elliptical movement (6), one set of swing rod type manual arm-moving trajectory control structure system or left and right swing rod type manual arm-moving trajectory control structure systems, and other related structure systems are correspondingly arranged, so as to form a complete swing rod type manual arm-moving structure system enabling the elliptical movement; the corresponding swing rod type manual arm-moving trajectory control structure system is composed of a manual arm-moving trajectory control swing rod structure (7), a manual arm-moving trajectory control swing rod bracket structure (8), and other corresponding structures;
the manual arm-moving structure enabling the elliptical movement (6) is pivotably connected to the manual arm-moving crank outer pivot shaft structure (5) at one position thereof, and is pivotably connected to one end of the manual arm-moving trajectory control swing rod structure (7) at another position thereof by a manual arm-moving trajectory control swing rod outer (reciprocating) pivot shaft structure (14), and the other end of the manual arm-moving trajectory control swing rod structure (7) is pivotably connected to the manual arm-moving trajectory control swing rod bracket structure (8), so that the direct guidance and control of the movement trajectory of the manual arm-moving structure enabling the elliptical movement (6) can be jointly realized through the above settings;
on the corresponding exercise machine, the reciprocating pivot shaft structure (14) pivotably connected to the manual arm-moving structure enabling the elliptical movement is located below or above the corresponding cycling pivot shaft structure (5) or on other suitable relative positions; and
under the cooperation and support of other related structure systems, various forms of corresponding exercise machines with the swing rod type manual arm-moving structure system enabling the elliptical movement can be formed, such as special arm elliptical movement machines, and new exercise bikes, elliptical machines, horse riding machines, rowing machines, skiing machines, and other related exercise machines with a swing rod type manual arm-moving structure system enabling an elliptical movement formed through the combination and integration of the corresponding structures.

5. The exercise machine according to claim 1 or 2, **characterized in that** a guide rail type manual arm-moving structure system enabling an elliptical movement and related exercise machines thereof can be formed, wherein the guide rail type manual arm-moving structure system enabling the elliptical movement adopts a structure form of combining the corresponding guide rail structure system with the cycling pivot shaft structure enabling the circular movement, or a suitable specific structure form of combining the corresponding guide rail structure system with the cycling pivot shaft structure enabling the elliptical movement, the near-elliptical movement, or other suitable form of full-cycle movement; and
the guide rail structure system is composed of a corresponding guide rail structure, a guide wheel structure, and other related structures, and the corresponding manual arm-moving structure enabling the elliptical movement is connected and linked to the guide rail structure system at one position thereof, and is pivotably connected to the corresponding crank structure, crankshaft structure, eccentric bearing outer ring structure, pedal arm-moving structure enabling the elliptical movement, or related structures enabling an elliptical movement or other suitable form of full-cycle movement at another position thereof by the corresponding pivot shaft structure; and the related exercise machines are provided with at least one set of guide rail type manual arm-moving structure system enabling the elliptical movement.

6. The exercise machine according to claim 1 or 2 or 5, **characterized in that** relying on a corresponding manual arm-moving middle shaft structure (1), one set of manual arm-moving crank structure (4) and one set of manual arm-moving crank outer (cycling) pivot shaft structure (5) are arranged at one side of a manual arm-moving middle shaft structure (1), a manual arm-moving middle shaft seat structure (2) and a manual arm-moving middle shaft seat bracket structure (3) or left and right manual arm-moving crank structures (4) and left and right manual arm-moving crank outer (cycling) pivot shaft structures (5) are simultaneously arranged at both sides of a manual arm-moving middle shaft structure (1), a manual arm-moving middle shaft seat structure (2) and a manual arm-moving middle shaft seat bracket structure (3); at the same time, one set of manual arm-moving structure enabling an elliptical movement (6) or left and right manual arm-moving structures enabling an elliptical movement (6), one set of guide rail type manual arm-moving trajectory control structure system or left and right guide rail type manual arm-moving trajectory control structure systems, and other related framework structure systems are correspondingly arranged, so as to form a complete guide rail type manual arm-moving structure system enabling the elliptical movement;
the guide rail type manual arm-moving trajectory control structure system is composed of a manual arm-moving guide wheel structure (9), a manual arm-moving guide rail structure (10), a manual arm-moving guide wheel connecting plate structure (11), and other related structures;
the manual arm-moving structure enabling the elliptical movement (6) is pivotably connected to the arm-moving crank pivot shaft structure (5) at an intermediate portion thereof, three or four manual arm-moving guide wheel structures (9) and the corresponding manual arm-moving guide wheel connecting plate structure (11) can be arranged at suitable spatial positions at the lower end of the manual arm-moving structure enabling the elliptical movement (6), the manual arm-moving structure enabling the elliptical movement (6) is pivotably connected and linked to the manual arm-moving guide wheel connecting plate structure (11) at the lower end thereof, and at the same time, a corresponding manual arm-moving guide rail structure (10) matched with the manual arm-moving guide wheel structure (9) is arranged, so that the direct guidance and control of the movement trajectory of the manual arm-moving structure enabling the elliptical movement (6) can be jointly realized through the above settings;
the manual arm-moving guide wheel structure (9) matched with the manual arm-moving guide rail structure (10) can also be replaced by a corresponding sliding sleeve structure that can slidingly move along the manual arm-moving guide rail structure (10), thereby making the corresponding structure simpler; and
under the cooperation and support of other related structure systems, various forms of corresponding exercise machines with the guide rail type manual arm-moving structure system enabling the elliptical movement can be formed, such as special arm elliptical movement machines, and new exercise bikes, elliptical machines, horse riding machines, rowing machines, skiing machines, and other related exercise machines with a swing rod type manual arm-moving structure system enabling an elliptical movement formed through the combination and integration of the corresponding structures.

7. The exercise machine according to claim 1 or 2 or 3 or 4, **characterized in that** relying on a corresponding structure system, an adjustable swing rod type manual arm-moving structure system enabling an elliptical movement and related exercise machines thereof are formed, and a specific implementation mode is as follows: the length or height of the lower part of the manual arm-moving structure enabling the elliptical movement (6) or the manual arm-moving trajectory control swing rod structure (7) or the manual arm-moving trajectory control swing rod bracket structure (8) is adjustable, so as to change the space position and movement trajectory of the pivot shaft structure (14) at the lower end of the manual arm-moving trajectory control swing rod structure (7) and the manual arm-moving structure enabling the elliptical movement (6), and also change the spatial working position and movement trajectory distribution of the entire manual arm-moving structure enabling the elliptical movement (6), thereby enabling adjustment and change of the arm movement trajectory; and
related exercise machines with the adjustable swing rod type manual arm-moving structure system enabling the elliptical movement can be designed and manufactured.

8. The exercise machine according to claim 1 or 2 or 3 or 4, **characterized in that** relying on a corresponding structure system, an adjustable swing rod type manual arm-moving structure system enabling an elliptical movement and related exercise machines thereof are formed, and a specific implementation mode is as follows: the other end of the manual arm-moving trajectory control swing rod bracket structure (8) is pivotably connected to the manual arm-moving middle shaft structure (1) or the manual arm-moving middle shaft seat structure (2) through a corresponding shaft sleeve structure (17), meanwhile, an angle adjusting control board structure (18) of the manual arm-moving trajectory control swing rod bracket structure (8) can be arranged by relying on the manual arm-moving middle shaft seat structure (2) or the arm-moving middle shaft seat bracket structure (3), and a number of angle adjusting keyhole structures (19) can be arranged on the angle adjusting control board structure (18), and the angle adjusting keyhole structure (19) can also be arranged on the corresponding position of the manual arm-moving trajectory control swing rod bracket structure (8), in this way, through a corresponding lock rod structure, the manual arm-moving trajectory control swing rod bracket structure (8) can be selectively locked on the keyhole structures of different angles and positions of the angle adjusting control board structure (18); and
related exercise machines with the adjustable swing rod type manual arm-moving structure system enabling the elliptical movement can be designed and manufactured.

9. The exercise machine according to claim 1 or 2 or 5 or 6, **characterized in that** relying on a corresponding structure system, an adjustable guide rail type manual arm-moving structure system enabling an elliptical movement and related exercise machines thereof are formed, and a specific implementation mode is as follows: one end of the manual arm-moving guide rail structure (10) is pivotably connected to the manual arm-moving middle shaft structure (1) or the manual arm-moving middle shaft seat structure (2) through a corresponding shaft sleeve structure (17), meanwhile, an angle adjusting control board structure (18) of the manual arm-moving guide rail structure (10) can be arranged by relying on the manual arm-moving middle shaft seat structure (2) or the manual arm-moving middle shaft seat bracket structure (3), and a number of angle adjusting keyhole structures (19) can be arranged on the angle adjusting control board structure (18), and the angle adjusting keyhole structure (19) can also be arranged on the corresponding position of the manual arm-moving guide rail structure (10), in this way, through a corresponding lock rod structure, the manual arm-moving guide rail structure (10) can be selectively locked on the keyhole structures of different angles and positions of the angle adjusting control board structure (18), thus, the working position and space movement trajectory of each point of the entire manual arm-moving structure enabling the elliptical movement (6) can be adjusted, and the arm movement position and movement trajectory can be adjusted, changed and optimized; and
related exercise machines with the adjustable guide rail type manual arm-moving structure system enabling the elliptical movement can be designed and manufactured.

10. The exercise machine according to claim 1 or 2, **characterized in that** a guide wheel type manual arm-moving structure system enabling an elliptical movement and related exercise machines thereof can be formed, wherein the guide wheel type manual arm-moving structure system enabling the elliptical movement adopts a structure form of combining the corresponding trajectory control guide wheel structure system with the cycling pivot shaft structure enabling the circular movement, or a suitable specific structure form of combining the corresponding trajectory control guide wheel structure system with the cycling pivot shaft structure enabling the elliptical movement, the near-elliptical movement, or other suitable form of full-cycle movement.

11. The exercise machine according to claim 1 or 2 or 10, **characterized in that** by setting the corresponding trajectory control guide wheel structure system, the corresponding guide wheel type manual arm-moving structure system enabling the elliptical movement and related exercise machine products can be formed;
the corresponding trajectory control guide wheel structure system comprises a trajectory control guide wheel structure (80), a trajectory control guide wheel connecting framework structure (81), a trajectory control guide wheel system overall swing pivot shaft structure (82), etc. two or three or four trajectory control guide wheel structures (80) capable of clamping and restricting the corresponding structural part enabling a reciprocating movement of the manual arm-moving structure enabling the elliptical movement (6) therein are arranged on the trajectory control guide wheel connecting framework structure (81), and meanwhile, the trajectory control guide wheel connecting framework structure (81), and is pivotably connected to the manual arm-moving trajectory control swing rod bracket structure (8) through the trajectory control guide wheel system overall swing pivot shaft structure (82);
through the above arrangement, the corresponding structural part enabling the reciprocating movement of the manual arm-moving structure enabling the elliptical movement (6), clamped and restricted by the trajectory control guide wheel structure (80), can still cooperate well with the trajectory control guide wheel structure (80) and the whole trajectory control guide wheel structure system under the condition of constant change of a working angle, thereby forming a guide wheel type manual arm-moving structure system enabling an elliptical movement and corresponding instrument products thereof; and
under the cooperation and support of other related structure systems, various forms of corresponding exercise machines with the guide wheel type manual arm-moving structure system enabling the elliptical movement can be formed, such as special arm elliptical movement machines, and new exercise bikes, elliptical machines, horse riding machines, rowing machines, skiing machines, and other related exercise machines with a guide wheel type manual arm-moving structure system enabling an elliptical movement formed through the combination and integration of the corresponding structures.

12. The exercise machine according to claim 1 or 2, **characterized in that** an eccentric bearing type manual arm-moving structure system enabling an elliptical movement and related exercise machines thereof are formed by relying on a corresponding eccentric bearing structure, and a specific structure is as follows: by relying on a corresponding manual arm-moving middle shaft structure (1), one set of eccentric bearing structure system is arranged at one side of a manual arm-moving middle shaft structure (1), a manual arm-moving middle shaft seat structure (2) and a manual arm-moving middle shaft seat bracket structure (3) or left and right eccentric bearing structure systems are simultaneously arranged at both sides of a manual arm-moving middle shaft structure (1), a manual arm-moving middle shaft seat structure (2) and a manual arm-moving middle shaft seat bracket structure (3); at the same time, one set of manual arm-moving structure enabling an elliptical movement (6) or left and right manual arm-moving structures enabling an elliptical movement (6), one set of guide rail type or swing rod type or guide wheel type manual arm-moving trajectory control structure system or left and right guide rail type or swing rod type or guide wheel type manual arm-moving trajectory control structure systems, and other related structure systems are correspondingly arranged, so as to form a complete eccentric bearing type manual arm-moving structure system enabling an elliptical movement;
the middle part of the manual arm-moving structure enabling the elliptical movement (6) is connected or pivotably connected to an eccentric bearing outer ring structure (12), an eccentric bearing inner ring structure (13) is connected or pivotably connected to the manual arm-moving middle shaft structure (1), and the rotation-swing center of the eccentric bearing structure system coincides with the axle center of the manual arm-moving middle shaft structure (1); and
the related exercise machines are provided with at least one set of eccentric bearing type manual arm-moving structure system enabling the elliptical movement.

13. The exercise machine according to claim 1 or 2, **characterized in that** related exercise machines capable of directly utilizing the manual arm-moving structure enabling the elliptical movement to realize hand-foot linkage can be formed, and a specific structure is as follows: the lower end or the middle part of the manual arm-moving structure enabling the elliptical movement (6) of the corresponding swing rod type, guide rail type or guide wheel type manual arm-moving structure system enabling an elliptical movement is directly provided with a pedaling structure enabling an elliptical movement (72) or a pedal structure enabling an elliptical movement (46) of which the corresponding movement trajectory can be nearly elliptical, in this way, together with the corresponding armrest structure on the upper part of the manual arm-moving structure enabling the elliptical movement (6), hand-foot linkage related exercise machines with a concise structure is formed, and the hand and foot in the linkage state can adopt a movement form of near-elliptical trajectory; and
the pedal structure enabling the elliptical movement (46) can adopt a simple fixed structure form, a foldable structure form or an adjustable structure form.

14. The exercise machine according to claim 1 or 2 or 3 or 4, **characterized in that** relying on the corresponding structure settings, a related exercise machine system capable of directly utilizing the manual arm-moving trajectory control swing rod structure to realize hand-foot linkage is formed, and a basic situation is as follows: the manual arm-moving trajectory control swing rod bracket structure (8) is arranged at the front part or the rear part of the manual arm-moving middle shaft seat bracket structure (3), and meanwhile, the corresponding manual arm-moving trajectory control swing rod structure (7) or the corresponding extension structure thereof directly supports the corresponding foot and leg exercise movement; and
a specific implementation mode is as follows: an extension framework and pedal structure (16) for a foot movement is arranged backwards or forwards at the pivot shaft structure (14) at the lower end of the corresponding manual arm-moving trajectory control swing rod structure (7) and manual arm-moving structure enabling the elliptical movement (6), and at the pivot shaft structure (15) between the manual arm-moving trajectory control swing rod structure (7) and the manual arm-moving trajectory control swing rod bracket structure (8) in an extension mode, so that the corresponding exercise machine system in hand-foot matched linkage can be formed.

15. The exercise machine according to claim 1 or 2 or 3 or 4, **characterized in that** relying on the corresponding structure settings, a related exercise machine system capable of directly utilizing the manual arm-moving trajectory control swing rod structure to realize hand-foot linkage is formed, and a basic situation is as follows: the manual arm-moving trajectory control swing rod bracket structure (8) is arranged at the front part or the rear part of the manual arm-moving middle shaft seat bracket structure (3), and meanwhile, the corresponding manual arm-moving trajectory control swing rod structure (7) or the corresponding extension structure thereof directly supports the corresponding foot and leg exercise movement; and
a specific implementation mode is as follows: a corresponding pedal structure is directly arranged on left and right manual arm-moving trajectory control swing rod structures in an alternating movement relationship with each other of the swing rod type manual arm-moving structure system enabling the elliptical movement or the corresponding extension structure thereof, and meanwhile, the front part of the left manual arm-moving trajectory control swing rod structure and the lower end of the left manual arm-moving structure are directly pivotably connected and linked with each other, the front part of the right manual arm-moving trajectory control swing rod structure and the lower end of the right manual arm-moving structure are directly pivotably connected and linked with each other, or the front part of the left manual arm-moving trajectory control swing rod structure and the lower end of the right manual arm-moving structure are directly pivotably connected and linked with each other, and the front part of the right manual arm-moving trajectory control swing rod structure and the lower end of the left manual arm-moving structure are directly pivotably connected and linked with each other.

16. The exercise machine according to claim 1 or 2 or 3 or 4, **characterized in that** a corresponding pedaling arm-moving and pedal structure 16 is arranged on the corresponding manual arm-moving trajectory control swing rod structure (7) or the extension structure thereof, so as to form a stepper and other products with the swing rod type manual arm-moving structure system enabling the elliptical movement, wherein the pedaling arm-moving and pedal structure (16) and the manual arm-moving trajectory control swing rod structure 7 are either located at the same side of the manual arm-moving trajectory control swing rod bracket structure (8), or at both sides of the manual arm-moving trajectory control swing rod bracket structure (8), and the relative movement relationship between the corresponding pedal structure (16) and the manual arm-moving structure enabling the elliptical movement (6) is different.

17. The exercise machine according to claim 1 or 2 or 4 or 6, **characterized in that** left and right pedal crank structures (20) opposite to the left and right manual arm-moving crank structures (4) are arranged on the left and right manual arm-moving crank outer pivot shaft structures (5), left and right pedal crank pivot shaft structures (21) are arranged at the other ends of the left and right pedal crank structures (20), and left and right pedal structures enabling a circular movement (22) are arranged on the left and right pedal crank pivot shaft structures (21); the left and right pedal crank pivot shaft structures (21) can be directly or indirectly pivotably connected and linked to left and right pedal structures (23) or left and right pedaling arm-moving structures (27) which generally performs near-elliptical movement;
in cooperation with the left and right pedal structures (23), corresponding left and right pedal swing rod structures (25) or a corresponding guide rail or guide wheel structure, etc. can be arranged; and
by the arrangement of the above and other related structures, while a circular or near-elliptical movement of both feet is achieved in a parallel or alternating manner with respect to each other by the left and right pedal structures (22) or the left and right pedal structures (23), both hands perform a near-elliptical movement in a parallel or alternating manner with respect to each other by left and right manual arm-moving structures enabling the elliptical movement (6), so as to form a new way of exercise that hands and feet can do a near-elliptical movement or circular movement together, or form a fully elliptical machine type movement and exercise mode that hands and feet can do a near-elliptical movement.

18. The exercise machine according to claim 1 or 2 or 4 or 6, **characterized in that** a corresponding pedal arm-moving crank structure (20) can be arranged on the manual arm-moving crank outer pivot shaft structure (5) of the corresponding exercise machine with the swing rod type manual arm-moving structure system enabling the elliptical movement, the other end of the pedal arm-moving crank structure (20) is provided with a pedal arm-moving crank outer pivot shaft structure (21), the front end of a corresponding pedal arm-moving structure enabling an elliptical movement (45) is pivotably connected to the pedal arm-moving crank structure (20) through the pedal arm-moving crank outer pivot shaft structure (21), the rear end of the pedal arm-moving structure enabling the elliptical movement (45) is pivotably connected to a pedal arm-moving swing rod structure enabling an elliptical movement (59) through the corresponding pivot shaft structure or is in abutting joint and matched with the corresponding guide wheel structure system or the guide rail structure system; and
if necessary, the angle between the manual arm-moving crank structure (4) and the pedal arm-moving crank structure (20) can be adjusted conveniently, so that the movement angle relationship between the manual arm-moving structure enabling the elliptical movement (6) and a pedal arm-moving structure enabling an elliptical movement (67) which are in linkage with the manual arm-moving crank structure (4) and the pedal arm-moving crank structure (20) respectively, and between the corresponding armrest and pedal, and between arms, legs and feet can be adjusted and selected accordingly, at the same time, the distance between the pedal arm-moving crank outer pivot shaft structure (21) and its rotational movement axis, namely the axis of the manual arm-moving middle shaft structure (1) is adjusted and changed accordingly, so that the movement steps of the exerciser, etc. can better meet the needs of the exercise.

19. The exercise machine according to claim 1 or 2, **characterized in that** a multifunction exercise machine product comprising both the manual arm-moving structure system enabling the elliptical movement and a foot driven eccentric bearing structure system can be formed, and a specific implementation mode is as follows: a corresponding saddle structure (24) is arranged on a saddle arm-moving structure enabling a near-elliptical movement (29), and the selection and adjustment of its working position is enabled by a corresponding lock adjusting structure; the front end of the saddle arm-moving structure (29) is connected with and in linkage with the outer ring structure (12) of the foot driven eccentric bearing structure system, and the rear end of the saddle arm-moving structure (29) is directly or indirectly matched with a corresponding saddle arm-moving swing rod structure or guide rail structure (30);
at the same time, the lower ends of the left and right manual arm-moving structures enabling the elliptical movement (6) in alternate or parallel drive states are pivotably connected to forward extension structures (76) of the left and right pedal arm-moving structures enabling the elliptical movement (67), the front ends (front parts) of the left and right pedal arm-moving structures enabling the elliptical movement (67) are pivotably connected to a corresponding pedal crank structure (31), and the pedal crank structure (31), and a pedal crank middle shaft structure (32) are mutually fixed and linked to the inner ring structure (13) of the foot driven eccentric bearing structure system; the rear parts or middle parts of the left and right pedal arm-moving structures enabling the elliptical movement (67) can be directly or indirectly matched with a corresponding pedal swing rod structure or guide rail structure 33; and a corresponding pedal structure (23) is arranged at the middle parts or the rear parts of the left and right pedal arm-moving structures enabling the elliptical movement (67); and
new exercise machine products having the movement characteristics of the manual arm-moving structure system enabling the elliptical movement and simultaneously achieving compound movement functions such as exercise bikes, horse riding machines, and elliptical machines can be formed.

20. The exercise machine according to claim 1 or 2, **characterized in that** a related exercise machine in which the corresponding manual arm-moving structure system enabling the elliptical movement and the pedal arm-moving structure system enabling the elliptical movement at the same side shares a same crank structure system can be formed;
in particular: both the lower end of the manual arm-moving structure enabling the elliptical movement and the front end of the pedal arm-moving structure system enabling the elliptical movement at the same side are pivotably connected to a corresponding same pivot shaft structure arranged outside the same crank structure or separately pivotably connected to two different pivot shaft structures arranged outside the same crank structure;
when both the lower end of the manual arm-moving structure enabling the elliptical movement and the front end of the pedal arm-moving structure enabling the elliptical movement at the same side are pivotably connected to the corresponding same pivot shaft structure arranged outside the same crank structure, a corresponding pivoting structure can be distributed laterally along the same pivot axis, or other suitable specific arrangement modes can also be adopted;
cooperating with the above structural arrangement modes, the corresponding manual arm-moving trajectory control swing rod structure (7) and a pedal arm-moving swing rod structure (66) are separately arranged in the middle of the manual arm-moving structure enabling the elliptical movement (6) and the pedal arm-moving structure enabling the elliptical movement (67) or the corresponding guide rail type or guide wheel type trajectory control structure system is arranged, so that a reverse cross force movement relationship can be formed between the upper part of the manual arm-moving structure enabling the elliptical movement (6) and the rear part of the pedal arm-moving structure enabling the elliptical movement (67) and between the corresponding arms, feet and legs; and
when both the lower end of the manual arm-moving structure enabling the elliptical movement and the front end of the pedal arm-moving structure enabling the elliptical movement at the same side are separately pivotably connected to two different pivot shaft structures arranged outside the same crank structure, the setting of the distance between the two different pivot shaft structures and the corresponding crank middle shaft structure can better adapt to the requirements of the structure systems such as the manual arm-moving structure system and the pedal arm-moving structure system and movement characteristics thereof, and the two different pivot shaft structures can be connected through the corresponding transition structure.

21. The exercise machine according to claim 1 or 2, **characterized in that** a manual arm-moving trajectory control pivot shaft adjustment structure (55) capable of sliding, positioning and locking along a structure portion, below the manual arm-moving crank outer pivot shaft structure (5), of the manual arm-moving structure enabling the elliptical movement (6) is arranged, the arm-moving trajectory control pivot shaft structure (14) can be disposed on the manual arm-moving trajectory control pivot shaft adjustment structure (55), by changing the locking working position of the manual arm-moving trajectory control pivot shaft adjustment structure (55) on the manual arm-moving structure enabling the elliptical movement (6), the distance between the arm-moving trajectory control pivot shaft structure (14) and the manual arm-moving crank outer pivot shaft structure (5) can be directly changed, so that the movement trajectory of many related structures and the movement coordination relationship between the structures is changed accordingly, so as to better meet the needs of the corresponding movement and exercise process.

22. The exercise machine according to claim 1 or 2, **characterized in that** a related exercise machine system that directly uses the corresponding part of the manual arm-moving structure enabling the elliptical movement to directly drive the pedal arm-moving structure enabling the elliptical movement to achieve a movement in a near-elliptical trajectory can be formed, and a specific implementation mode is as follows: the front end or other suitable portion of the pedal arm-moving structure enabling the elliptical movement is pivotably connected to the lower end or other suitable portion of the manual arm-moving structure enabling the elliptical movement, and at the same time, the middle or rear end or other suitable part of the pedal arm-moving structure enabling the elliptical movement is pivotably connected to the corresponding swing rod structure, or the middle or rear end or other suitable part of the pedal arm-moving structure enabling the elliptical movement is matched with the corresponding guide rail structure system or guide wheel structure system, so as to form a related structure setting mode in which the manual arm-moving structure enabling the elliptical movement directly drives the pedal arm-moving structure enabling the elliptical movement to do a movement in a near-elliptical trajectory and related exercise machines.

23. The exercise machine according to claim 1 or 2 or 22, **characterized in that** an exercise machine system that directly utilizes the "lower part" of the manual arm-moving structure enabling the elliptical movement to drive the related pedal arm-moving structure enabling the elliptical movement to achieve a near-elliptical movement trajectory can be formed, and a specific description is as follows:
when the reciprocating pivot shaft structure outside the corresponding swing rod is located under the cycling pivot shaft structure outside the corresponding crank and other structures, the lower part of the manual arm-moving structure enabling the elliptical movement (6), namely the part below the arm-moving crank pivot shaft structure 5, can be directly used to drive the pedal structure (46) or pedaling structure (47) on the pedal arm-moving structure enabling the elliptical movement (45) to do a movement in a near-elliptical trajectory so as to achieve related exercise machines where hand and feet are in a coordination, and can do the corresponding near-elliptical movement;
one end of the pedal arm-moving structure enabling the elliptical movement (45) is pivotably connected to the lower part of the manual arm-moving structure enabling the elliptical movement (6) or a further downward extension portion thereof, namely a further downward extension structure (48) beyond the (trajectory control) pivot shaft structure (14) at the lower end of the arm-moving structure, the other end of the pedal arm-moving structure enabling the elliptical movement (45) can be provided with a corresponding pedal structure (46) or a pedaling structure (47) or other suitable movement structures, the middle part (or back end) of the pedal arm-moving structure enabling the elliptical movement (45) is pivotably connected to a pedal arm-moving swing rod structure enabling an elliptical movement (49), and the pedal arm-moving swing rod structure enabling the elliptical movement (49) is simultaneously pivotably connected to a corresponding framework structure of the exercise machine by means of a corresponding pivot shaft structure;
for the guide rail type manual arm-moving structure system enabling the elliptical movement, the coordination relationship between the system and the pedal arm-moving structure enabling the elliptical movement (45) and arrangement of other related structures are similar to that of the swing rod type manual arm-moving structure system enabling the elliptical movement, the corresponding "further downward extension part" is "a further downward extension structure" beyond the related pivot shaft structure between the lower end of the manual arm-moving structure enabling the elliptical movement and the manual arm-moving guide wheel connecting plate structure (11); and
the pedal arm-moving structure enabling the elliptical movement (45) and other structural systems adopt a simple fixed structure form or a foldable structure form, so as to make the entire exercise machine more spatially adaptable and more acceptable.

24. The exercise machine according to claim 1 or 2 or 22, **characterized in that** a pedal arm-moving trajectory control pivot shaft adjustment structure (56) capable of sliding, positioning and locking along the pedal arm-moving structure enabling the elliptical movement (45) is arranged, a corresponding pedal arm-moving trajectory control pivot shaft structure (57) can be arranged on the pedal arm-moving trajectory control pivot shaft adjustment structure (56), and by changing the locking working position of the pedal arm-moving trajectory control pivot shaft adjustment structure (56) on the pedal arm-moving structure enabling the elliptical movement (45), the movement trajectories of many related structures and the movement fit relationships between the structures can be changed directly or indirectly, so as to better meet the needs of the corresponding movement and exercise process.

25. The exercise machine according to claim 1 or 2 or 22, **characterized in that** an exercise machine system that directly utilizes the "lower part" of the swing rod type manual arm-moving structure enabling the elliptical movement to drive the related pedal arm-moving structure enabling the elliptical movement to achieve a near-elliptical movement trajectory can be formed, and a specific description is as follows: when the reciprocating pivot shaft structure outside the corresponding swing rod is located above the cycling pivot shaft structure outside the corresponding crank and other structures, one end of the corresponding pedal arm-moving structure enabling the elliptical movement (45) that can perform a near-elliptical movement is directly pivotably connected to the lower part of the manual arm-moving structure enabling the elliptical movement (6), namely the related structural parts below the manual arm-moving trajectory control swing rod outer pivot shaft structure (14) or the manual arm-moving crank outer pivot shaft structure (5), so that a direct mutual linkage between the manual arm-moving structure enabling the elliptical movement (6) and the pedal arm-moving structure enabling the elliptical movement (45), and between other related linkage structures can be achieved; the middle or the other end of the pedal arm-moving structure enabling the elliptical movement (45) can be pivotably connected to the pedal arm-moving swing rod structure enabling the elliptical movement (49) through the corresponding pivot shaft structure or is in abutting joint and matched with the corresponding guide wheel structure system or the guide rail structure system; and the pedal structure enabling the elliptical movement (46) can be arranged on the pedal arm-moving structure enabling the elliptical movement (45).

26. The exercise machine according to claim 1 or 2 or 22, **characterized in that** an exercise machine system that directly utilizes the "middle part" of the swing rod type manual arm-moving structure enabling the elliptical movement to drive the related pedal arm-moving structure enabling the elliptical movement to achieve a near-elliptical movement trajectory can be formed, and a specific description is as follows: similar to that of the exercise machine system that directly utilizes the lower part of the manual arm-moving structure enabling the elliptical movement to drive the related pedal arm-moving structure enabling the elliptical movement to achieve the near-elliptical movement trajectory, the front end of the corresponding pedal arm-moving structure enabling the elliptical movement (45) is pivotably connected to the "middle part" of the manual arm-moving structure enabling the elliptical movement, namely a part between the manual arm-moving crank outer pivot shaft structure (5) and the manual arm-moving trajectory control pivot shaft structure (14), and the rear end or middle of the corresponding pedal arm-moving structure enabling the elliptical movement (45) is pivotably connected to the corresponding pedal arm-moving swing rod structure enabling the elliptical movement (49).

27. The exercise machine according to claim 1 or 2 or 22, **characterized in that** an exercise machine system that directly utilizes the "upper part" of the swing rod type manual arm-moving structure enabling the elliptical movement to drive the related pedal arm-moving structure enabling the elliptical movement to achieve a near-elliptical movement trajectory can be formed, and a specific description is as follows: the reciprocating pivot structure (14) outside the related manual arm-moving trajectory control swing rod structure (7) is located below the cycling pivot shaft structure (5) outside the related manual arm-moving crank structure (4), the front end of the pedal arm-moving structure enabling the elliptical movement (45) is directly pivotably connected to the upper part of the manual arm-moving structure enabling the elliptical movement (6), namely a part on the manual arm-moving crank outer pivot shaft structure (5), with the cooperation of other related structure systems, the manual arm-moving structure enabling the elliptical movement (6) and the pedal arm-moving structure enabling the elliptical movement (45), as well as the corresponding arms, feet and legs, can be in a synchronous and same-directional movement relation.

28. The exercise machine according to claim 1 or 2 or 3, **characterized in that** a swing rod type manual arm-moving structure enabling an elliptical movement pivotably connected to the cycling pivot shaft structure enabling the elliptical movement, the near-elliptical movement and other suitable form of movement, and related exercise machines can be formed, a specific implementation mode is as follows: the manual arm-moving structure enabling the elliptical movement (6) is pivotably connected to the manual arm-moving trajectory control swing rod structure (7) at one position thereof through the manual arm-moving trajectory control swing rod outer pivot shaft structure (14), the manual arm-moving structure enabling the elliptical movement (6) is pivotably connected to a cycling pivot shaft structure enabling an elliptical movement or a near-elliptical movement (69) at another position thereof, and the cycling pivot shaft structure (69) is arranged on the corresponding pedal arm-moving structure enabling the elliptical movement or the near-elliptical movement, or is arranged on other related structure systems that can form elliptical or near-elliptical movement trajectories or other suitable forms of cycling movement trajectories.

29. The exercise machine according to claim 1 or 2 or 3 or 28, **characterized in that** by setting a corresponding pedal middle shaft structure (61), pedal middle shaft seat structure (62), pedal middle shaft seat bracket structure (63), pedal crank structure (64), pedal crank outer pivot shaft structure (65), pedal arm-moving structure enabling the elliptical movement (67) and pedal arm-moving swing rod structure enabling the elliptical movement (66), a corresponding rear-drive-type pedal elliptical machine structure system with the pedal middle shaft structure and the pedal crank structure post-positioned;
the pedal arm-moving structure enabling the elliptical movement (67) of the rear-drive-type pedal elliptical machine structure system is extended forward by an appropriate length, so as to form a pedal arm-moving forward extension structure enabling an elliptical movement (76) in front of the reciprocating pivot shaft structure (68) between the pedal arm-moving structure enabling the elliptical movement (67) and the pedal arm-moving swing rod structure enabling the elliptical movement (66); the lower part of the manual arm-moving structure enabling the elliptical movement (6) is pivotably connected to the pedal arm-moving forward extension structure enabling the elliptical movement (76) through the corresponding cycling pivot shaft structure (69), the middle of the manual arm-moving structure enabling the elliptical movement (6) is pivotably connected to the manual arm-moving trajectory control swing rod structure (7) and a corresponding movement handle structure is directly or indirectly arranged at the upper part of the manual arm-moving structure enabling the elliptical movement (6); and
in the above structure system, the manual arm-moving structure enabling the elliptical movement (6) is directly pivotably connected and linked to the pedal arm-moving structure enabling the elliptical movement (67) through the pedal arm-moving forward extension structure enabling the elliptical movement (76) and the cycling pivot shaft structure (69), and after two reverse movement processes of front and back and up and down are respectively realized by relying on the manual arm-moving trajectory control swing rod structure (7) and the pedal arm-moving swing rod structure enabling the elliptical movement (66), a reverse cross force movement relationship can be formed between the manual arm-moving structure enabling the elliptical movement (6) and the pedal arm-moving structure enabling the elliptical movement (67), and between the corresponding armrest and the pedal, and between the arm, the feet and the leg.

30. The exercise machine according to claim 1 or 2 or 3 or 28, **characterized in that** a central eccentric bearing structure system which can be located in the middle of the left and right transverse position can be further arranged on the pedal middle shaft structure and other structure systems of the corresponding exercise machine, an inner ring structure (71) of the eccentric bearing structure system can be directly connected and linked with the pedal middle shaft structure (61) or can be connected and linked with the pedal middle shaft structure (61) through a corresponding angle adjusting mechanism, an outer ring structure (73) of the eccentric bearing structure system can be connected and linked with a corresponding saddle arm-moving structure enabling an elliptical movement (74), the other end of the saddle arm-moving structure enabling the elliptical movement (74) is pivotably connected to a saddle arm-moving swing rod structure enabling an elliptical movement (75) through the corresponding pivot shaft structure, and the saddle structure enabling the elliptical movement (24) with adjustable front and rear and high and low positions can be arranged on the saddle arm-moving structure enabling the elliptical movement (74); and
according to the needs, a structure mode of making the corresponding saddle arm-moving swing rod structure and the manual arm-moving trajectory control swing rod bracket structure arranged independently or a structure mode of making the corresponding saddle arm-moving swing rod structure, the manual arm-moving trajectory control swing rod bracket structure and the pedal arm-moving trajectory control swing rod bracket structure be a same swingable framework structure is adopted.

31. The exercise machine according to claim 1 or 2 or 3 or 28, **characterized in that** the manual arm-moving structure enabling the elliptical movement and the pedal arm-moving structure enabling the elliptical movement, and related corresponding armrests and pedals, arms, feet and legs can form a synchronous movement relationship in the same direction, and a specific implementation mode is as follows:
firstly, the middle of the manual arm-moving structure enabling the elliptical movement (6) is pivotably connected to the pedal arm-moving structure (67) of the rear-drive-type pedal elliptical machine through the cycling pivot shaft structure (69), the lower part of the manual arm-moving structure enabling the elliptical movement (6) is pivotably connected to the manual arm-moving trajectory control swing rod structure (7) through the reciprocating pivot shaft structure (14), namely the manual arm-moving trajectory control swing rod outer pivot shaft structure (14), and the upper part of the manual arm-moving structure enabling the elliptical movement (6) is directly or indirectly provided with a corresponding (manual) handle structure;
secondly, the middle part of the manual arm-moving structure enabling the elliptical movement (6) is pivotably connected to the forward extension structure (76) of the pedal arm-moving structure (67) of a front-drive-type pedal elliptical machine through the cycling pivot shaft structure (69), the lower part of the manual arm-moving structure enabling the elliptical movement (6) is pivotably connected to the manual arm-moving trajectory control swing rod structure (7) through the reciprocating pivot shaft structure, namely the manual arm-moving trajectory control swing rod outer pivot shaft structure (14), and the upper part of the manual arm-moving structure enabling the elliptical movement (6) is directly or indirectly provided with a corresponding handle structure; and
thirdly, the middle of the manual arm-moving structure enabling the elliptical movement (6) is pivotably connected to the pedal arm-moving structure (67) of the front-drive-type pedal elliptical machine through the cycling pivot shaft structure (69), the lower part of the manual arm-moving structure enabling the elliptical movement (6) is pivotably connected to the manual arm-moving trajectory control swing rod structure (7) through the reciprocating pivot shaft structure, namely the manual arm-moving trajectory control swing rod outer pivot shaft structure (14), and the upper part of the manual arm-moving structure enabling the elliptical movement (6) is directly or indirectly provided with a corresponding (manual) handle structure.

32. The exercise machine according to claim 1 or 2 or 3 or 28, **characterized in that** the lower end of the manual arm-moving structure enabling the elliptical movement (6) is pivotably connected to a suitable part or the forward extension structure (76) of the pedal arm-moving structure (67) of the front-drive-type pedal elliptical machine through the cycling pivot shaft structure (69), and at the same time, in cooperation with the above structure arrangement mode, the corresponding manual arm-moving trajectory control swing rod structure (7) and pedal arm-moving swing rod structure (66) can be separately arranged in the middle of the manual arm-moving structure enabling the elliptical movement (6) and the pedal arm-moving structure enabling the elliptical movement (67), or the corresponding guide rail type or guide wheel type trajectory control structure system is arranged, so that the upper part of the manual arm-moving structure enabling the elliptical movement (6) and the rear part of the pedal arm-moving structure enabling the elliptical movement (67) and the corresponding arms, feet and legs can form a reverse cross force movement relationship.

33. The exercise machine according to claim 1 or 2, **characterized in that** the manual arm-moving structure enabling the elliptical movement can be combined with a skateboard type bicycle structure system, that is, the manual arm-moving structure enabling the elliptical movement can be arranged on a handlebar structure system of a skateboard type bicycle, so as to form a corresponding manual skateboard type bicycle which can be driven by the elliptical movement of the arm at the same time.

34. The exercise machine according to claim 1 or 2, **characterized in that** the manual arm-moving structure enabling the elliptical movement can be combined with a frog scooter or bicycle structure system, that is, the manual arm-moving structure enabling the elliptical movement can be arranged on a handlebar structure system of a frog scooter or bicycle, so as to form a corresponding manual frog scooter or bicycle which can be driven by the elliptical movement of the arm at the same time.

35. The exercise machine according to claim 1 or 2, **characterized in that** the manual arm-moving structure enabling the elliptical movement can be combined with a ski scooter or bicycle structure system, namely a scooter or bicycle structure system driven by left and right side swinging and side climbing of both legs similar to alpine skiing, that is, the manual arm-moving structure enabling the elliptical movement can be arranged on a handlebar structure system of a ski scooter or bicycle, so as to form a corresponding manual ski scooter or bicycle which can be driven by the elliptical movement of the arm at the same time.

36. The exercise machine according to claim 1 or 2, **characterized in that** the swing rod type manual arm-moving structure enabling the elliptical movement used as a hand drive system can be further directly arranged on a front fork of a bicycle or even a front wheel hub, namely a bearing seat and other structures, so as to form a corresponding exercise bicycle or scooter with a swing rod type manual arm-moving drive system enabling an elliptical movement; and
the manual arm-moving middle shaft structure (1) of the manual arm-moving structure system enabling the elliptical movement and a front wheel drive shaft structure of a bicycle (scooter) can be combined into one, that is, the manual arm-moving crank structure (4), the manual arm-moving crank outer pivot shaft structure (5) and other structures are directly arranged on the front wheel drive shaft structure of the bicycle, so that the front wheel drive shaft structure of the bicycle can directly become the manual arm-moving middle shaft structure (1) at the same time, and the corresponding swing rod type or other forms of manual arm-moving structure system enabling the elliptical movement directly drives the front wheel drive shaft structure and the front wheel of the bicycle to move together.

37. The exercise machine according to claim 1 or 2, **characterized in that** the left and right manual arm-moving drive systems enabling the elliptical movement are separately arranged, that is, independent left middle shaft seat structure and right middle shaft seat structure and related linked structures and systems can be used at the same time, so that the setting position, direction and adjustment of left and right middle shaft structures have greater selectivity and convenience, the setting position of the left and right manual arm-moving drive systems enabling the elliptical movement, the selectivity of the space movement trajectory of the left and right manual arm-moving drive systems enabling the elliptical movement, the combination ability of the relevant structures and the exercise effect of the user are greatly improved; and
the left and right manual arm-moving drive systems enabling the elliptical movement can be directly arranged on both sides of the body, so as to better realize the needs of simulating skiing and rowing.

38. The exercise machine according to claim 1 or 2, **characterized in that** the left and right manual arm-moving drive systems enabling the elliptical movement are separately arranged, that is, independent left middle shaft seat structure and right middle shaft seat structure and related linked structures and systems can be used at the same time, so that the setting position, direction and adjustment of left and right middle shaft structures have greater selectivity and convenience, the setting position of the left and right manual arm-moving drive systems enabling the elliptical movement, the selectivity of the space movement trajectory of the left and right manual arm-moving drive systems enabling the elliptical movement, the combination ability of the relevant structures and the exercise effect of the user are greatly improved; and
the left and right manual arm-moving drive systems enabling the elliptical movement can be arranged in a position area of left and right sides of the front part of a main body of a treadmill, so as to be better integrated with the treadmill and running movement.

39. The exercise machine according to claim 1 or 2 or 4 or 6, **characterized in that** in the corresponding manual arm-moving structure system enabling the elliptical movement, the manual arm-moving crank structure (4) directly pivotably connected to the manual arm-moving structure enabling the elliptical movement (6) adopts a structure form with an adjustable length, specifically, a crank base structure (35) can be arranged on the corresponding manual arm-moving middle shaft structure (1), meanwhile, a position variable arm-moving crank structure (4) capable of realizing position changing, position adjusting and position locking on the crank base structure (35) is arranged, and one end of the position variable arm-moving crank structure (4) is pivotably connected to the manual arm-moving structure enabling the elliptical movement (6) through the corresponding arm-moving crank pivot shaft structure 5; and
the crank base structure (35) can also be arranged on the pedal crank pivot shaft structure (36), the locking and fixing relationship between the corresponding crank base structure (35) and the position variable arm-moving crank structure (4) can meet the requirement that the axis of the manual arm-moving crank outer pivot shaft structure (5) coincides exactly with the axis of the manual arm-moving middle shaft structure (1) and the requirements that the position variable arm-moving crank structure (4) and a pedal crank structure (44) directly connected with the manual arm-moving middle shaft structure can be in an alternate driving relationship state with a difference of 180 degrees, and can be in a completely synchronous driving relationship state through further displacement adjustment, so that the corresponding overall exercise machine system has a richer form of movement and a richer selectable function.

40. The exercise machine according to claim 1 or 2, **characterized in that** a related exercise machine product comprising both the manual arm-moving structure system enabling the elliptical movement and its corresponding hand and foot linked swing rod structure system can be formed;
a hand and foot linked swing rod structure (37) which moves coaxially and synchronously with the manual arm-moving trajectory control swing rod structure (7) can be arranged, the hand and foot linked swing rod structure (37) and the manual arm-moving trajectory control swing rod structure (7) can synchronously perform swing movement around a trajectory control pivot shaft structure (39) between the manual arm-moving trajectory control swing rod structure (7) and the manual arm-moving trajectory control swing rod bracket structure (8), and the angle between the hand and foot linked swing rod structure (37) and the manual arm-moving trajectory control swing rod structure (7) is relatively fixed or adjustable; the other end of the hand and foot linked swing rod structure (37) is pivotably connected to the pedal structure enabling the elliptical movement (23) or a pedal-pedal lever (pedal framework) structure enabling an elliptical movement (27) or other relevant suitable structures through the corresponding pivot shaft structure, so as to realize the mutual linkage and organic cooperation between the manual arm-moving elliptical movement and pedaling pedal elliptical movement, so as to make the movement mode of the whole human body richer and more suitable;
the hand and foot linked swing rod structure (37) which can move separately or coaxially and synchronously with the manual arm-moving trajectory control swing rod structure (7) can be arranged, the hand and foot linked swing rod structure (37) can be provided with a hand and foot linked connecting plate structure (38) which can be connected with the manual arm-moving trajectory control swing rod structure (7) or other related movement structures, a plurality of linkage connecting lock hole structures (40) can be arranged on the corresponding equal radius arc with the axis of the trajectory control pivot shaft structure (39) as a circle center on the hand and foot linked connecting plate structure (38), the corresponding linkage connecting lock hole structure can also be arranged on the manual arm-moving trajectory control swing rod structure (7), and through the corresponding locking adjustment structure, the manual arm-moving trajectory control swing rod structure (7) and the selected appropriate linkage connecting lock hole structure (40) can be mutually locked, so that the coaxially arranged manual arm-moving trajectory control swing rod structure (7) and hand and foot linked swing rod structure (37) can be in the angle locking state of the required position, and the mutual linkage process between them can be realized; and
a locking connecting plate structure (41) is arranged on the manual arm-moving trajectory control swing rod bracket structure (8), a plurality of locking connecting lock hole structures (42) can be arranged on the corresponding equal radius arc with the axis of the trajectory control pivot shaft structure (39) as a circle center on the locking connecting plate structure (41), the corresponding locking connecting lock hole structure can also be arranged on the manual arm-moving trajectory control swing rod structure (7), and through the corresponding locking adjustment structure, the manual arm-moving trajectory control swing rod structure (7) and the selected appropriate locking connecting lock hole structure (42) can be mutually locked, so that the coaxially arranged manual arm-moving trajectory control swing rod structure (7) and manual arm-moving trajectory control swing rod bracket structure (8) can be in the angle locking state of the required position, the manual arm-moving structure enabling the elliptical movement (6) pivotably connected to the manual arm-moving trajectory control swing rod structure (7) is also locked on the corresponding position, and is correspondingly in a functional state of a fixed armrest and a fixed handle with an adjustable position.

41. The exercise machine according to claim 1 or 2 or 40, **characterized in that** a related exercise machine product comprising both the manual arm-moving structure system enabling the elliptical movement and the manual arm-moving structure system enabling the reciprocating movement can be further formed, specifically, a manual arm-moving structure enabling a reciprocating movement (43) can be further arranged on the manual arm-moving structure enabling the elliptical movement and other structure systems, the lower end of the manual arm-moving structure enabling the reciprocating movement (43) is pivotably connected to the trajectory control pivot shaft structure (39), and the corresponding linkage connecting lock hole structure (40) and the locking connecting lock hole structure (42) can also be arranged on the manual arm-moving structure enabling the reciprocating movement (43); in this way, on one hand, the manual arm-moving structure enabling the reciprocating movement (43) and the selected appropriate linkage connecting lock hole structure (40) can be mutually locked through the corresponding locking adjustment structure, so that the coaxially arranged manual arm-moving structure enabling the reciprocating movement (43) and hand and foot linked swing rod structure (37) can be in the angle locking state of the required position, and the mutual linkage process between them can be realized; on the other hand, through the corresponding locking adjustment structure, the manual arm-moving structure enabling the reciprocating movement (43) and the selected appropriate locking connecting lock hole structure (42) can be mutually locked, so that the coaxially arranged manual arm-moving structure enabling the reciprocating movement (43) and manual arm-moving trajectory control swing rod bracket structure (8) can be in the angle locking state of the required position, the manual arm-moving structure enabling the reciprocating movement (43) is also locked on the corresponding position, and is correspondingly in a functional state of a fixed armrest and a fixed handle with an adjustable position.

42. The exercise machine according to claim 1 or 2, **characterized in that** a related exercise machine comprising both the manual arm-moving structure enabling the elliptical movement and a central crankshaft structure system can be formed, and a specific structure is as follows:
when left and right manual arm-moving structures enabling the elliptical movement (6) are simultaneously arranged, and left and right swing rod type manual arm-moving trajectory control structure systems and other related framework structure systems are correspondingly arranged, the corresponding crankshaft structure system can be arranged between the left and right manual arm-moving middle shaft structures (1), and the manual arm-moving middle shaft seat structure (2);
the corresponding crankshaft structure system can be composed of a crankshaft crank structure (52), a crankshaft crank outer pivot shaft structure (53), etc., and the crankshaft crank structure (52) and the left and right manual arm-moving middle shaft structures (1) adopt a completely fixed connection or a separable connection, namely a connection method that can be fixed and separable to each other;
the rear end of the saddle arm-moving structure (29) can be directly or indirectly matched with the corresponding saddle arm-moving swing rod structure (54) or the corresponding guide rail structure;
at the same time, a corresponding saddle arm-moving structure (29) is arranged, and the front end or front part of the saddle arm-moving structure (29) is pivotably connected to the saddle crankshaft crank outer pivot shaft structure (53), and the rear end or the rear part or the middle part of the saddle arm-moving structure (29) is pivotably connected to the saddle arm-moving swing rod structure (54); or a corresponding saddle arm-moving trajectory control structure system is arranged, and the saddle arm-moving structure (29) is matched with the saddle arm-moving trajectory control structure, namely a guide rail structure through a correspondingly arranged roller structure and the like; and
a corresponding fixed or position adjustable variable saddle structure (24) is arranged on the saddle arm-moving structure (29), or a saddle structure which can slide back and forth on the saddle arm-moving structure (29) to do a movement like rowing and the like, and the corresponding saddle arm-moving structure (29) can adopt a guide rail or other suitable structure form.

43. The exercise machine according to claim 1 or 2, **characterized in that** a related exercise machine comprising both the manual arm-moving structure enabling the elliptical movement and a central eccentric bearing structure system is formed, and a specific structure is as follows:
when left and right manual arm-moving structures enabling the elliptical movement (6) are simultaneously arranged, and left and right swing rod type manual arm-moving trajectory control structure systems and other related framework structure systems are correspondingly arranged, the corresponding eccentric bearing structure system can be arranged between the left and right manual arm-moving middle shaft structures (1), and the manual arm-moving middle shaft seat structure (2);
the eccentric bearing structure system can be composed of the corresponding eccentric bearing outer ring structure (12), eccentric bearing inner ring structure (13), etc., and the eccentric bearing inner ring structure (13) and the left and right manual arm-moving middle shaft structures (1) adopt a completely fixed connection or a separable connection, namely a connection method that can be fixed and separable to each other;
the eccentric bearing outer ring structure (12) is connected and linked with the front end or front part of the corresponding saddle arm-moving structure (29), the rear end or the rear part or the middle part of the saddle arm-moving structure (29) is pivotably connected to the saddle arm-moving swing rod structure (54); or a corresponding saddle arm-moving trajectory control structure system is arranged, and the saddle arm-moving structure (29) is matched with the corresponding saddle arm-moving trajectory control structure, namely a guide rail structure through a correspondingly arranged roller structure and the like; and
a corresponding fixed or position adjustable variable saddle structure (24) is arranged on the saddle arm-moving structure (29), or a saddle structure which can slide back and forth on the saddle arm-moving structure (29) to do a movement like rowing and the like, and the corresponding saddle arm-moving structure (29) can adopt a guide rail or other suitable structure form.

44. The exercise machine according to claim 1 or 2, **characterized in that** a related exercise machine comprising the corresponding central crankshaft structure system or the central eccentric bearing structure system, and the corresponding arm-moving structure system enabling the hand and foot elliptical movement can be formed;
on the basis of the manual arm-moving structure system enabling the elliptical movement with the central crankshaft structure system or the central eccentric bearing structure system, through the corresponding settings, the corresponding pedal structure system, pedal arm-moving structure system and other structure systems that can realize near-elliptical movement are further arranged, so as to form a related exercise machine which not only comprises the corresponding central crankshaft structure system or the central eccentric bearing structure system to realize the corresponding near-elliptical movement of the saddle structure and the like, but also comprises a corresponding structure system capable of realizing the near-elliptical movement of hands and feet;
a first form of the corresponding pedal arm-moving related structure system enabling the elliptical movement is as follows: as shown in Fig. 31, left and right pedal crank structures (20) opposite to the left and right manual arm-moving crank structures (4) are arranged on the left and right manual arm-moving crank outer pivot shaft structures (5), left and right pedal crank pivot shaft structures (21) are arranged at the other ends of the left and right pedal crank structures (20), and left and right pedaling structures enabling a circular movement are arranged on the left and right pedal crank pivot shaft structures (21); the left and right pedal crank pivot shaft structures (21) can be directly or indirectly connected and linked to the pedal arm-moving structure enabling the elliptical movement (45) which generally performs near-elliptical movement;
the corresponding saddle structure (24) can be arranged to cooperate with the left and right pedal arm-moving structures enabling the elliptical movement (45) and the like, and the left and right pedal arm-moving swing rod structures enabling the elliptical movement (49) can be arranged to be pivotably connected and matched with the left and right pedal arm-moving structures enabling the elliptical movement (45);
a second form of the corresponding pedal arm-moving structure system enabling the elliptical movement is as follows: the lower end part of the manual arm-moving structure enabling the elliptical movement is directly used to drive the related pedal arm-moving structure system enabling the elliptical movement to achieve a near-elliptical movement trajectory, and its more specific structure can be basically the same as the above situation; and
by setting the corresponding angle changing mechanism, the left and right manual arm-moving crank structures (4), the left and right manual arm-moving structures enabling the elliptical movement (6), the left and right pedal arm-moving structures enabling the elliptical movement (45) are respectively in an angular positional relationship that is completely parallel or 180 degrees apart from each other.

45. The exercise machine according to claim 1 or 2, **characterized in that** a related exercise machine that can realize the pedal arm-moving near-elliptical movement by relying on the corresponding eccentric bearing system can be formed, and the corresponding eccentric bearing structure system, namely the pedal arm-moving eccentric bearing structure system capable of driving the pedal arm-moving structure and the like to do a near-elliptical movement can be arranged on an exercise machine with the manual arm-moving structure system enabling the elliptical movement or other related exercise machines;
the pedal arm-moving eccentric bearing structure system can also be composed of the corresponding eccentric bearing outer ring structure (12), eccentric bearing inner ring structure (13), etc., the eccentric bearing outer ring structure (12) is connected to the front part of the corresponding pedal arm-moving structure (45), and the rear or middle part of the pedal arm-moving structure (45) is pivotably connected to the corresponding pedal arm-moving swing rod structure (49); the eccentric bearing inner ring structure (13) is directly or indirectly connected with the manual arm-moving middle shaft structure (1), namely the eccentric bearing inner ring structure (13) and the manual arm-moving middle shaft structure (1) are either directly connected or interconnected, linked or respectively driven through corresponding clutches and other structures;
through the setting of the corresponding connection angle relationship or the adjustment of the related angle adjusting structure system, the corresponding manual arm-moving structure enabling the elliptical movement and the pedal arm-moving structure enabling the elliptical movement can be in a same direction movement relationship state of synchronization with each other, or in a reverse movement relationship state of synchronization with each other, or in other suitable required movement relationship states;
according to the needs, only one set of pedal arm-moving eccentric bearing structure system and its corresponding pedal arm-moving structure system enabling the elliptical movement can be arranged on the related exercise machine, this set of pedal arm-moving eccentric bearing structure system can be generally arranged between the left and right manual arm-moving structure systems enabling the elliptical movement, so as to form a central pedal arm-moving eccentric bearing structure system;
or, according to the needs, left and right pedal arm-moving eccentric bearing structure systems and the corresponding left and right pedal arm-moving structure systems enabling the elliptical movement can be arranged on the related exercise machine, and the left and right pedal arm-moving eccentric bearing structure systems can be respectively connected and matched with the left and right manual arm-moving structure systems enabling the elliptical movement, so that a left and right split type pedal arm-moving eccentric bearing structure system can be formed; and
when the left and right pedal arm-moving eccentric bearing structure systems and the corresponding left and right pedal arm-moving structure systems enabling the elliptical movement are simultaneously arranged, according to the need, the central saddle crankshaft structure system or the central saddle eccentric bearing structure system and the corresponding saddle arm-moving structure, and saddle structure can be arranged at the same time.

46. The exercise machine according to claim 1 or 2 or 3, **characterized in that** a manual arm-moving structure enabling a reciprocating movement (77) is directly arranged on the corresponding manual arm-moving trajectory control swing rod structure (7) or a manual arm-moving structure having an adjustable setting angle, comprising a corresponding angle adjusting structure system and enabling a reciprocating movement (77) is further arranged.

47. The exercise machine according to claim 1 or 2, **characterized in that** by setting the corresponding angle adjusting plate structure or angle adjusting disc structure (79) or other suitable angle adjusting structure system on the manual arm-moving structure enabling the elliptical movement of the related exercise machine, the related armrest structure part on the manual arm-moving structure enabling the elliptical movement (6) can be used to adjust many working angles.

48. The exercise machine according to claim 1 or 2, **characterized in that** the relatively fixed pedal structure (34) can be arranged on the pedal arm-moving structure enabling the elliptical movement (67), and its specific form can be as follows: the middle part of the relatively fixed pedal structure 34 is directly pivotably connected to a suitable position of the pedal arm-moving structure enabling the elliptical movement (67), the two ends of the relatively fixed pedal structure (34) and the pedal arm-moving structure enabling the elliptical movement (67) can be connected by a spring or other suitable structures, so that the whole movement trajectory and movement process of the relatively fixed left and right pedal structures (34) and feet and the like are more in line with the needs of the human exercise process and the like.
